(19) **Europäisches Patentamt / European Patent Office / Office européen des brevets**

(11) **EP 2 706 466 A1**

(12) **EUROPEAN PATENT APPLICATION**
published in accordance with Art. 153(4) EPC

(43) Date of publication:
**12.03.2014 Bulletin 2014/11**

(51) Int Cl.:
**G06F 17/30** (2006.01)  **G06F 12/00** (2006.01)

(21) Application number: **11864780.9**

(22) Date of filing: **02.05.2011**

(86) International application number:
**PCT/JP2011/060559**

(87) International publication number:
**WO 2012/150637 (08.11.2012 Gazette 2012/45)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(71) Applicant: **Fujitsu Limited**
**Kawasaki-shi, Kanagawa 211-8588 (JP)**

(72) Inventors:
• **KATAOKA, Masahiro**
**Kawasaki-shi**
**Kanagawa 211-8588 (JP)**

• **MATSUMURA, Ryo**
**Kawasaki-shi**
**Kanagawa 211-8588 (JP)**

(74) Representative: **HOFFMANN EITLE**
**Patent- und Rechtsanwälte**
**Arabellastrasse 4**
**81925 München (DE)**

(54) **EXTRACTION METHOD, INFORMATION PROCESSING METHOD, EXTRACTION PROGRAM, INFORMATION PROCESSING PROGRAM, EXTRACTION DEVICE, AND INFORMATION PROCESSING DEVICE**

(57) For example, it is assumed that a character string "人形芝居を見た。" is described in an object file (F3) and that ""人形"" is rewritten to "紙" in this string. In this case, the object file (F3) is assigned with a new file number #=n+1 and is saved as an object file (F(n+1)) as a result of the update. In a compression code map (M), bits of the file number n+1 are set in appearance maps. The bit of the file number n+1 in the deletion map (D) is set to ON. In the case of the object file (F(n+1)), because of the deletion of "人形", the bits of the character data "人", "形", and "人形" are set to OFF and the bit of character data "紙" is set to ON. On the other hand, the bit of the file number 3 in the deletion map D is changed from ON to OFF.

FIG.1

**Description**

TECHNICAL FIELD

The present invention relates to an extracting method, an information processing method, an extracting program, an information processing program, an extracting apparatus, and an information processing apparatus.

BACKGROUND ART

A technique exists in which, by compressing index information indicating which one of multiple files includes predetermined character data in advance and by decompressing the compressed index information when the predetermined character data is searched, a file including the predetermined character data is identified by reference to the decompressed index information.

Patent Document 1: International Publication Pamphlet No. WO 2006/123448

DISCLOSURE OF INVENTION

PROBLEM TO BE SOLVED BY THE INVENTION

However, in the conventional technique, if any of multiple files to be searched by using the index information is updated, the contents of the index information must be updated. For example, when "人形芝居" is described in an update source file, if "人形芝居" is updated to "紙芝居", an update process of the index information is needed such as setting bits of characters "人" and "形" to OFF and setting a bit of "紙" to ON. Therefore, it problematically takes time after the start of the update process of the file until the search using the index information corresponding to multiple files after update is made executable.

An object of the present invention is to reduce a process time after the start of the update process until the search using the index information corresponding to multiple files after update is made executable when any of multiple files to be searched by using the index information is updated.

MEANS FOR SOLVING PROBLEM

According to an aspect of the present invention, an information processing method, an information processing program, and an information processing apparatus that compresses and stores first information indicating whether each of a plurality of files includes predetermined character data into storage; and stores, if a certain file included in the plurality of files is updated, second information indicating whether the updated certain file includes the predetermined character data into the storage and stores third information indicating that the certain file is excluded from search objects, into the storage.

According to an aspect of the present invention, an extracting method, an extracting program, and an extracting apparatus that stores compression information acquired by compressing first information indicating whether each of a plurality of files includes predetermined character data into storage; stores, if a certain file included in the plurality of files is updated, second information indicating whether the updated certain file includes the predetermined character data into the storage; stores third information identifying the certain file into the storage; and extracts, if a search request for the predetermined character data is received, a file out of the plurality of files and the updated file except a file indicated as a file not including the predetermined character data by the first information acquired by decompressing the compression information or the second information and the certain file identified by the third information.

EFFECT OF THE INVENTION

An aspect of the present invention produces an effect that enables reduction in processing time after the start of the update process until the search using the index information corresponding to multiple files after update is made executable when any of multiple files to be searched by using the index information is updated.

BRIEF DESCRIPTION OF DRAWINGS

FIG. 1 is a diagram of an object file update example;
FIG. 2 is a block diagram of a hardware configuration of an information processing apparatus according to an embodiment;
FIG. 3 is a diagram of a system configuration example according to the embodiment;
FIG. 4 is a block diagram of a first functional configuration example of the information processing apparatus according to the embodiment;
FIG. 5 is a diagram of a flow of processes performed by the tabulating unit to the second compressing unit of the information processing apparatus depicted in FIG. 4;
FIG. 6 is a diagram of an example of tabulation by the tabulating unit 401 and creation of the compression code map M by the creating unit 404;
FIG. 7 is a diagram of details of (1) Tabulation of the Number of Appearances;
FIG. 8 is a diagram of details of (2) Calculation of Compression Code Length (N=11) of FIG. 6;
FIG. 9 is a diagram of details of (3) Specification of Number of Leaves to (5) Generation of Leaf Structure (N=11) of FIG. 6;
FIG. 10 is a diagram of a correction result of each character data;
FIG. 11 is a diagram of details of (6) Generation of Pointer to Leaf (N=11) of FIG. 6;

FIG. 12 is a diagram of details of (7) Construction of $2^N$-Branch Nodeless Huffman Tree H (N=11) of FIG. 6;

FIG. 13 is a diagram of a leaf structure;

FIG. 14 is a diagram of a specific single character structure;

FIG. 15 is a diagram of a divided character code structure;

FIG. 16 is a diagram of a basic word structure;

FIG. 17 is a diagram of a generation example of compression code maps M;

FIG. 18 is a flowchart of the compression code map creation process of the creating unit 404;

FIG. 19 is a flowchart of the tabulation process (step S1801) depicted in FIG. 18;

FIG. 20 is a flowchart of the tabulation process of the object file Fi (step S1903) depicted in FIG. 19;

FIG. 21 is a diagram of a character appearance frequency tabulation table;

FIG. 22 is a flowchart of the basic word tabulation process (step S2002) depicted in FIG. 20;

FIG. 23 is a diagram of a basic word appearance frequency tabulation table;

FIG. 24 is a flowchart of the longest match search process (step S2201) depicted in FIG. 22;

FIG. 25 is a flowchart of the map assignment number determination process (step S1802) depicted in FIG. 18;

FIG. 26 is a flowchart of the re-tabulation process (step S1803) depicted in FIG. 18;

FIG. 27 is a flowchart of the re-tabulation process of the object file Fi (step S2603);

FIG. 28 is a diagram of an upper divided character code appearance frequency tabulation table;

FIG. 29 is a diagram of a lower divided character code appearance frequency tabulation table;

FIG. 30 is a flowchart of the bi-gram character string identification process (step S2706) depicted in FIG. 27;

FIG. 31 is a diagram of a bi-gram character string appearance frequency tabulation table;

FIG. 32 is a flowchart of the Huffman tree generation process (step S1804) depicted in FIG. 18;

FIG. 33 is a flowchart of the branch number specification process (step S3204) depicted in FIG. 32;

FIG. 34 is a flowchart of the construction process (step S3205) depicted in FIG. 32;

FIG. 35 is a flowchart of the pointer-to-leaf generation process (step S3403) depicted in FIG. 34;

FIG. 36 is a flowchart of the map creation process (step S1805) depicted in FIG. 30;

FIG. 37 is a flowchart of the map creation process of the object file Fi (step S3603) depicted in FIG. 36;

FIG. 38 is a flowchart of the basic word appearance map creation process (step S3702) depicted in FIG. 37;

FIG. 39 is a flowchart of the specific single character appearance map creation process (step S3803) depicted in FIG. 37;

FIG. 40 is a flowchart of the divided character code appearance map creation process (step S4003) depicted in FIG. 39;

FIG. 41 is a flowchart of the bi-gram character string map creation process (step S3704) depicted in FIG. 37;

FIG. 42 is a flowchart of the bi-gram character string appearance map generation process (step S4103);

FIG. 43 is a diagram of a specific example of a compression process using a $2^N$-branch nodeless Huffman tree H;

FIG. 44 is a flowchart of the compression process of the object file group Fs using the $2^N$-branch nodeless Huffman tree H by the first compressing unit 403;

FIG. 45 is a flowchart (part 1) of the compression process (step S4403) depicted in FIG. 44;

FIG. 46 is a flowchart (part 2) of the compression process (step S4403) depicted in FIG. 44;

FIG. 47 is a flowchart (part 3) of the compression process (step S4403) depicted in FIG. 44;

FIG. 48 is a diagram of relationship between an appearance rate and an appearance rate area;

FIG. 49 is a diagram of a compression pattern table having compression patterns by appearance rate areas;

FIG. 50 is a diagram of a compression pattern in the case of areas B and B';

FIG. 51 is a diagram of a compression pattern in the case of areas C and C';

FIG. 52 is a diagram of a compression pattern in the case of areas D and D';

FIG. 53 is a diagram of a compression pattern in the case of areas E and E';

FIG. 54 is a flowchart of a compression code map M compression process;

FIG. 55 is a block diagram of a second functional configuration example of the information processing apparatus 400 according to the embodiment;

FIG. 56 is a diagram of a file decompression example (G1);

FIG. 57 is a diagram of a file decompression example (G2);

FIG. 58 is a diagram (part 1) of specific examples of the decompression process of FIGs. 56 and 57;

FIG. 59 is a diagram (part 2) of specific examples of the decompression process of FIGs. 56 and 57;

FIG. 60 is a flowchart of a search process according to the embodiment;

FIG. 61 is a flowchart (part 1) of the file narrowing-down process (step S6002) depicted in FIG. 60;

FIG. 62 is a flowchart (part 2) of the file narrowing-down process (step S6002) depicted in FIG. 60;

FIG. 63 is a flowchart (part 1) of a decompression process (step S6003) using the $2^N$-branch nodeless Huffman tree H depicted in FIG. 60;

FIG. 64 is a flowchart (part 2) of the decompression process (step S6003) using the $2^N$-branch nodeless Huffman tree H depicted in FIG. 60;

FIG. 65 is a diagram of a specific example of the update process;

FIG. 66 is a flowchart of the update process depicted in FIG. 65;

FIG. 67 is a flowchart (first half) of the map update process of an additional file (step S6609) depicted in FIG. 66; and

FIG. 68 is a flowchart (second half) of the map update process of the additional file (step S6609) depicted in FIG. 66.

BEST MODE(S) FOR CARRYING OUT THE INVENTION

Embodiments of the present invention will now be described with reference to the accompanying drawings. In this description, "character data" are data of single characters, basic words, divided character codes, etc., making up text data. The object file group is electronic data such as document files, web pages, emails, for example, and is electric data in text format, HyperText Markup Language (HTML) format, and Extensible Markup Language (XML) format, for example.

A single character is a character represented by one character code. A character code length of a single character differs depending on a character code type.

For example, the character code is 16-bit code in the case of Unicode Transformation Format (UTF) 16, 8-bit code in the case of American Standard Code for Information Interchange (ASCII) code, and 8-bit code in the case of Shift Japanese Industrial Standard (JIS) code. If a Japanese character is represented by the shift JIS code, two 8-bit codes are combined.

"Basic words" are basic words taught in elementary school/junior high school and reserved words represented by certain character strings. Taking an English sentence "This is a ..." as an example, the basic words are words such as "This", "is", and "a" and are classified into a 1000-word level, a 2000-word level, and a several-thousand-word level, and marks "***", "**", and "*" are added in English-Japanese dictionaries. The reserved words are predetermined character strings and include, for example, HTML tags (e.g., <br>).

A "divided character code" refers to each of codes acquired by dividing a signal character into an upper code and a lower code. In this embodiment, as described later, a single character may be divided into an upper code and a lower code. For example, a character code of a single character "芝" is represented as "9D82" in the case of UTF16 and is divided into an upper divided character code "0x9D" and a lower divided character code "0x82".

A "gram" is a character unit. For example, in the case of a single character, one character is uni-gram. In the case of the divided character codes, a divided character code itself is uni-gram. Therefore, a single character "芝" is bi-gram. This embodiment will be described by taking UTF16 as an example of a character code.

In this description, if a "bit is set to ON", a value of the bit is set to "1" and if a "bit is set to OFF", a value of the bit is set to "0". Alternatively, if a "bit is set to ON", a value of the bit may be set to "0" and if a "bit is set to OFF", a value of the bit may be set to "1".

An "appearance map" is a bit string acquired by combining a pointer specifying character data and a bit string indicating the presence of the character data in each object file. At the time of a search process, this bit string can be used as an index indicating whether character data to be searched is included, depending on ON/OFF of bits. For example, a compression code of character data is employed as the pointer specifying the character data. The pointer specifying the character data may be implemented by using the character data itself, for example. A "compression code map" is a bit map acquired by integrating appearance maps of respective character data indicated by pointers of compression codes. A compression code map of a bi-gram character string is a compression code string acquired by combining a compression code of a first gram and a compression code of a second gram.

A "bi-gram character string" is a character string having concatenated uni-gram character codes. For example, a character string "人形芝居" includes double concatenated characters "人形", "形芝", and "芝居". Each of "人" and "形" of the double concatenated character "人形" is a single character not divided and, therefore, the double concatenated character "人形" is a bi-gram character string by itself.

Since "芝" is divided as described above, a combination of a single character "形" and the upper divided character code "0x9D" of the "芝" forms a bi-gram character string. A combination of the upper divided character code "0x9D" and the lower divided character code "0x82" forms a bi-gram character string. A combination of the lower divided character code "0x82" and an undivided single character "居" forms a bi-gram character string.

If an object file group is compressed, the basic words enable single pass access at the time of generation and search of a compression code map. If the object file group is not compressed, a character code of character data may directly be employed as the pointer specifying the character data.

<Object File Update Example>

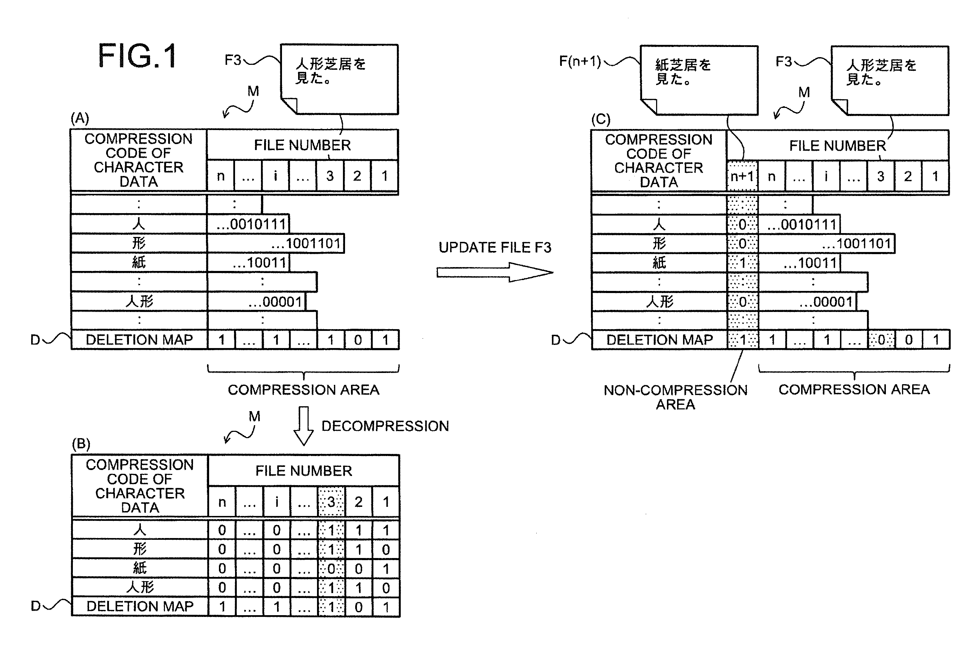

FIG. 1 is a diagram of an object file update example. An object file with a file number #=i is defined as an object file Fi. In the example of FIG. 1, an object file F3 with a file number #=3 is updated out of n object files.

In a compression code map M of FIG. 1, character data is described as a compression code of the character data acting as a pointer specifying the character data for convenience.

In (A), a deletion map D is set in the compression code map M. The deletion map D is an index indicating the presence or deletion of the object file Fi with a bit string. In the deletion map D, a bit corresponding to ON (=1) means that a file Fi with a file number corresponding to the bit is present. On the other hand, if the bit is set to OFF (=0), this means that the file Fi is deleted. Therefore, if a search is performed by using the compression code map M, the deletion map corresponding to the object file Fi can be set to OFF to exclude the object file Fi from search objects without deleting the object file Fi itself. The appearance maps in the compression code map M are compressed and retained. The compression of the compression code map M is compression through a Huffman tree, for example, and may be performed on the basis of a bit string corresponding to each character data. The compression of the compression code map M may be performed for the compression code map M except the deletion map D. The number of digits of a bit string of the compressed compression code map M is equal to or less than the number of object files. In FIGs. 1(A) and 1(C), a display area of each bit string is conveniently displayed smaller to represent that a compressed bit string is made shorter than the bit string before the compression.

(B) When the object file group is narrowed down, the compression code map M is decompressed with the Huffman tree used for compression. For example, if the search character string is "人形", the object file F3 has the bits of the character data "人", "形", and "人形" set to ON and the bit of the deletion map D set to ON. Therefore, the AND result of these three bits is "1". Therefore, the object file F3 is to be searched.

On the other hand, in the case of the object file F2, the bits of the character data "人", "形", and "人形" are set to ON while the bit of the deletion map D is set to OFF and, therefore, the AND result of these four bits is "0". Therefore, the object file F2 is not to be searched. If the object file F3 is deleted, the bit of the object file F3 in the deletion map D is changed from ON to OFF. As a result, the object file F3 is excluded from search objects as is the case with the object file F2.

(C) The object file F3 is then updated. For example, it is assumed that the object file F3 includes description of a character string "人形芝居を観た。" and that "人", "形", and "紙" are not present in the character strings other than this character string. In this string, it is assumed that "人形" is rewritten to "紙". In this case, the object file F3 is assigned with a new file number #=n+1 and is saved as an object file F(n+1) as a result of the update.

In the compression code map M, the bits of the file number n+1 are set in the appearance maps. The bit of the file number n+1 in the deletion map D is set to ON. In the case of the object file F(n+1), because of the deletion of "人形", the bits of the character data "人", "形", and "人形" are set to OFF and the bit of character data "紙" is set to ON. As a result, the object file F(n+1) is defined as a search object.

On the other hand, the bit of the file number 3 in the deletion map D is changed from ON to OFF. As a result, the object file F3 is excluded from search objects. The update source object file F3 may be deleted. In this case, memory saving can be achieved. On the other hand, the object file F3 may be left as it is. In this case, if it is desired to restore the state before the update, the restoration can be achieved. Alternately, a pointer indicating the storage location of the object file F3 may be used for a pointer indicating the storage location of the updated file F(n+i). In other words, the object file F3 itself may be rewritten and the rewritten file may be utilized as the object file F(n+i).

It is not necessary to deleted bits of an existing file number for assigning a new file number to an updated file. Therefore, the compressed appearance maps of the file numbers 1 to n can be retained in the compressed state without updating the contents.

As depicted in FIG. 1(C), the bit strings in the compression area of the compression code map M are arranged in descending order of the file number p of the object file group Fs from the leading position to the ending position. As a result, even if the bit strings of the file number 1 to n are compressed, the file number of the additional file is not deviated from the bits thereof and the object files Fi can accurately be narrowed down.

The search process using the compression code map M and the update process of the compression code map M described with reference to FIG. 1 are effective not only for Japanese but also for other languages. For example, if English object files are used, an object file Fi including a sentence "I watched marionette performance." causes respective bits corresponding to "watch", "marionette", and "performance" to be set to ON in the compression code map M. For example, if a search character string "marionette performance" is accepted, a search range is narrowed down to object files having "1" as the AND result of the respective bits corresponding to "marionette" and "performance" and the deletion map D.

If the object file Fi is updated to "I watched acrobatic performance.", a bit of the compression code map corresponding to F(n+i) is set to ON for each of "watch", "marionette", and "performance". If the object file Fi does not include the word "marionette" after the update, the bit of F(n+i) corresponding to "marionette" is set to OFF. The deletion map D corresponding to the object file F(n+i) is set to ON and the deletion map D corresponding to Fi is set to OFF. As a result, the update process of the compression code map M is executed according to the update of the object file Fi in English.

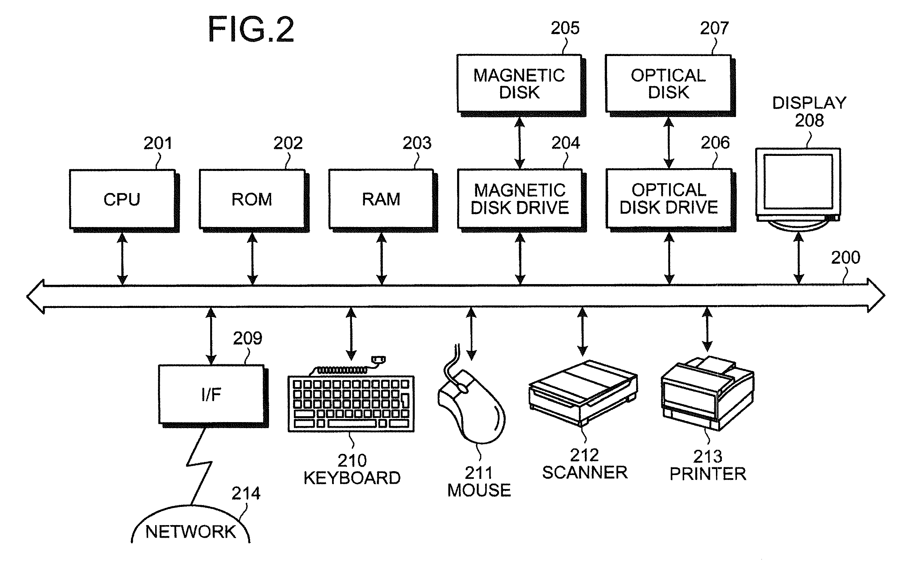

FIG. 2 is a block diagram of a hardware configuration of the information processing apparatus (including the extracting apparatus) according to the embodiment. As depicted in FIG. 2, the information processing apparatus includes a central processing unit (CPU) 201, a read-only memory (ROM) 202, a random access memory (RAM) 203, a magnetic disk drive 204, a magnetic disk 205, an optical disk drive 206, an optical disk 207, a display 208, an interface (I/F) 209, a keyboard 210, a mouse 211, a scanner 212, and a printer 213, respectively connected by a bus 200.

The CPU 201 governs overall control of the information processing apparatus 400. The ROM 202 stores therein programs such as a boot program. The ROM 202 also stores a program for generating/managing the compression code map M and a search program using the compression code map M or the code map. The RAM 203 is used as a work area of the CPU 201, and the CPU 201 reads the program stored in the ROM 202 into the RAM 203 for execution. The magnetic disk drive 204, under the control of the CPU 201, controls the reading and writing of data with respect to the magnetic disk 205. The magnetic disk 205 stores therein data written under control of the magnetic disk drive 204.

The optical disk drive 206, under the control of the CPU 201, controls the reading and writing of data with respect to the optical disk 207. The optical disk 207 stores therein data written under control of the optical disk drive 206, the data being read by the information processing apparatus.

The display 208 displays, for example, data such as text, images, functional information, etc., in addition to a cursor, icons, and/or tool boxes. A cathode ray tube (CRT), a thin-film-transistor (TFT) liquid crystal display, a plasma display, etc., may be employed as the display 208.

The I/F 209 is connected to a network 214 such as a local area network (LAN), a wide area network (WAN), and the Internet through a communication line and is connected to other apparatuses through the network 214. The I/F 209 administers an internal interface with the network 214 and controls the input/output of data from/to external apparatuses. For example, a modem or a LAN adaptor may be employed as the I/F 209.

The keyboard 210 includes, for example, keys for inputting letters, numerals, and various instructions and performs the input of data. Alternatively, a touch-panel-type input pad or numeric keypad, etc. may be adopted. The mouse 211 is used to move the cursor, select a region, or move and change the size of windows. A track ball or a joy stick may be adopted provided each respectively has a function similar to a pointing device.

The scanner 212 optically reads an image and takes in the image data into the information processing apparatus. The scanner 212 may have an optical character reader (OCR) function as well. The printer 213 prints image data and text data. The printer 213 may be, for example, a laser printer or an ink jet printer.

The information processing apparatus may be a server or a stand-alone personal information processing apparatus 400 as well as a portable terminal such as a portable telephone, a smartphone, an electronic book terminal, and a notebook personal information processing apparatus 400. This embodiment may be implemented on the basis of multiple information processing apparatus 400s.

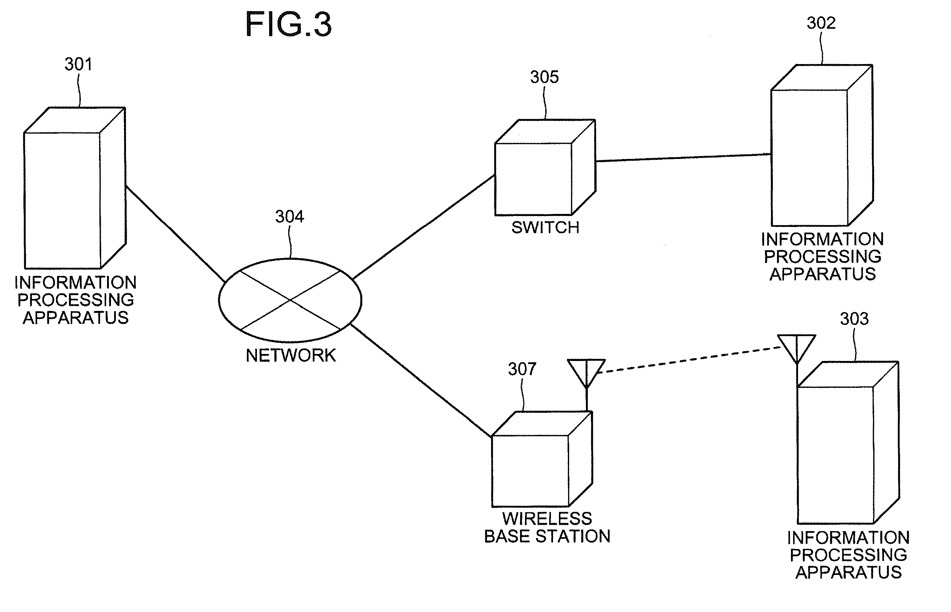

FIG. 3 is a diagram of a system configuration example according to this embodiment. In FIG. 3, a system includes information processing apparatuses 301 to 303 that may include each piece of the hardware depicted in FIG. 2, a network 304, a switch 305, and a wireless base station 307. An I/F included in the information processing apparatus 303 has a wireless communication function.

For example, the information processing apparatus 301 may execute a process of generating the compression code map M for contents including multiple files for delivery to the information processing apparatus 302 and the information processing apparatus 303, and each of the information processing apparatus 302 and the information processing apparatus 303 may execute a search process for the delivered contents.

Alternatively, the information processing apparatus 301 may execute a process of generating the compression code map M for contents including multiple files and the information processing apparatus 301 may accept a search request for contents from the information processing apparatus 302 or the information processing apparatus 303, execute a search process, and return a result of the executed search process to each of the information processing apparatus 302 and the information processing apparatus 303 in another configuration. Similar to FIG. 2, each of the information processing apparatuses 301 to 303 may be a server or a stand-alone personal information processing apparatus 400 as well as a portable terminal such as a portable telephone, a smartphone, an electronic book terminal, and a notebook personal information processing apparatus 400.

<First Functional Configuration Example>

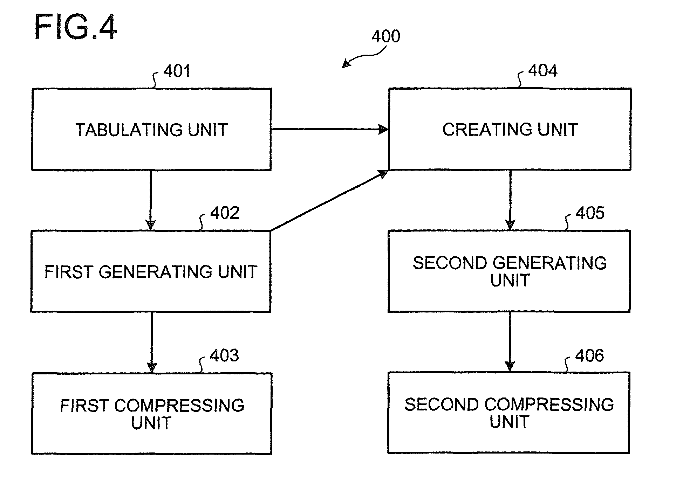

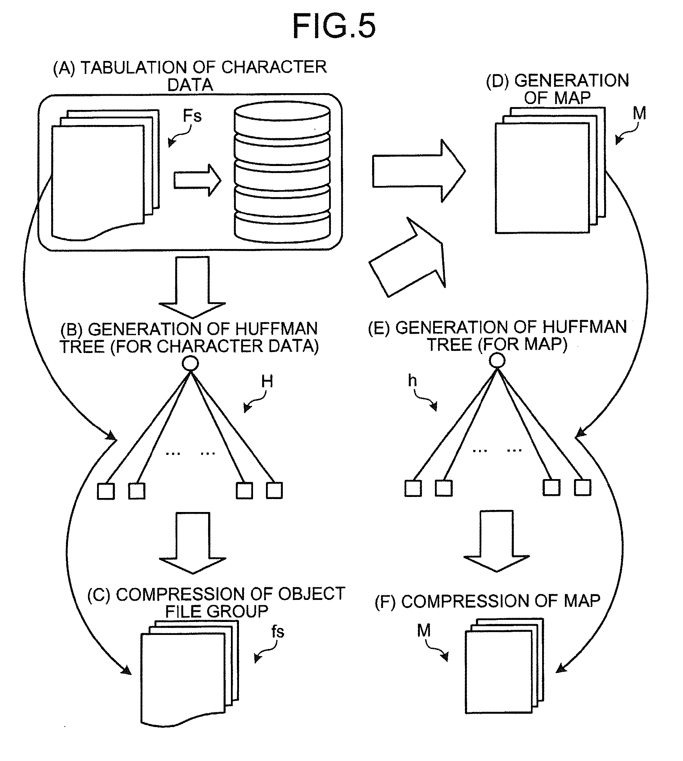

FIG. 4 is a block diagram of a first functional configuration example of the information processing apparatus according to this embodiment and FIG. 5 is a diagram of a flow of processing from a tabulating unit to a second compressing unit of the information processing apparatus depicted in FIG. 4. In FIG. 4, an information processing apparatus 400 includes a tabulating unit 401, a first generating unit 402, a first compressing unit 403, a creating unit 404, a second generating unit 405, and a second compressing unit 406.

For example, the functions of the tabulating unit 401 to the second compressing unit 406 are implemented by causing the CPU 201 to execute programs stored in a storage device such as the ROM 202, the RAM 203, and the magnetic disc 205 depicted in FIG. 2. Each of the tabulating unit 401 to the second compressing unit 406 writes an execution result into the storage device and reads an execution result of another unit to perform calculations. The tabulating unit 401 to the second compressing unit 406 will hereinafter briefly be described.

The tabulating unit 401 tabulates the numbers of appearances of character data in an object file group. For example, the tabulating unit 401 tabulates the numbers of appearances of character data in the object file group Fs as depicted in (A) of FIG. 5. The tabulating unit 401 counts the respective numbers of appearances of specific single characters, upper divided character codes, lower divided character codes, bi-gram characters, and basic words. Detailed process contents of the tabulating unit 401 will be described later.

The first generating unit 402 generates a $2^N$-branch nodeless Huffman tree H based on the tabulation result of the tabulating unit 401 (FIG. 5(B)). The $2^N$-branch nodeless Huffman tree H is a Huffman tree having $2^N$ branches branched from a root to directly point leaves with one or multiple branches. No node (inner node) exists. Since no node exists and leaves are directly hit, a decompression rate can be accelerated as compared to a normal Huffman tree having nodes. A leaf is a structure including corresponding character data and a compression code thereof. A leaf is also referred to as a leaf structure. The number of branches assigned to a leaf depends on a compression code length of a compression code present in the leaf to which the branches are assigned. Detailed process contents of the first generating unit 402 will be described later.

The first compressing unit 403 compresses the object files of the object file group Fs into a compression file group fs by using the $2^N$-branch nodeless Huffman tree H (FIG. 5(C)). Detailed process contents of the first compressing unit 403 will be described later.

The creating unit 404 creates the compression code map M based on the tabulation result of the tabulating unit 401 and a compression code assigned to each character data in the $2^N$-branch nodeless Huffman tree H. The creating unit 404 creates the respective compression code maps M for specific single characters, upper divided character codes, lower divided character codes, bi-gram characters, and basic words. If the corresponding character data appears at least once in an object file, the creating unit 404 sets the bit of the file number to ON in the compression code map M (FIG. 5(D)). In an initial state, all the object files are set to ON in the deletion map D. Detailed process contents of the creating unit 404 will be described later.

The second generating unit 405 generates a Huffman tree h for compressing an appearance map based on appearance probability of character data (FIG. 5(E)). Detailed process contents of the second generating unit 405 will be described later. The second compression unit 406 compresses the appearance maps by using the Huffman tree generated by the second generating unit 405 (FIG. 5(F)). Detailed process contents of the second compression unit 406 will be described later.

<Details of Tabulation and Creation of Compression Code Map M>

Details of the tabulation by the tabulating unit 401 and the creation of the compression code map M by the creating unit 404 will be descried. When the compression code map M is created, the tabulating unit 401 must tabulate the numbers of appearances of character data from the object file group Fs and the first generating unit 402 must generate the $2^N$-branch nodeless Huffman tree H before the creation.

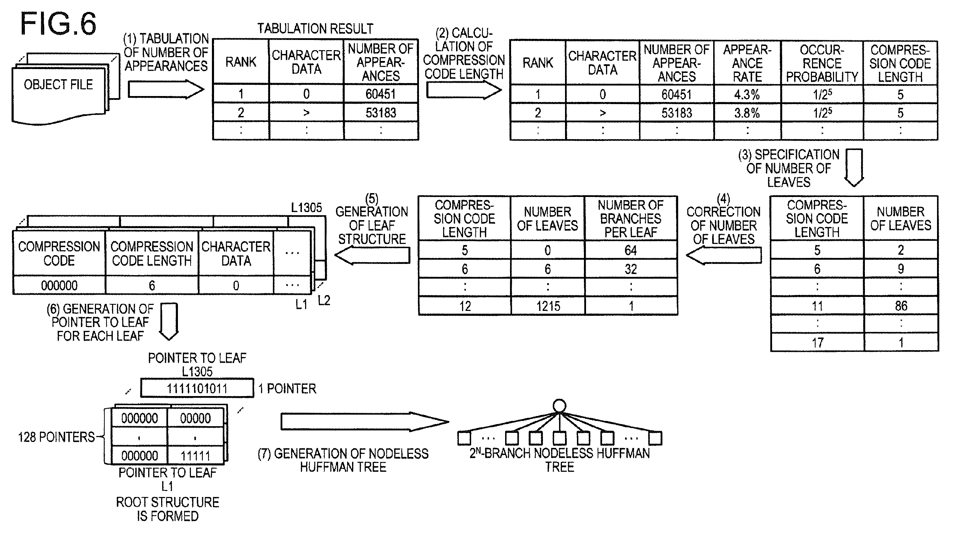

FIG. 6 is a diagram of an example of the tabulation by the tabulating unit 401 and the creation of the compression code map M by the creating unit 404.

(1) Tabulation of Number of Appearances

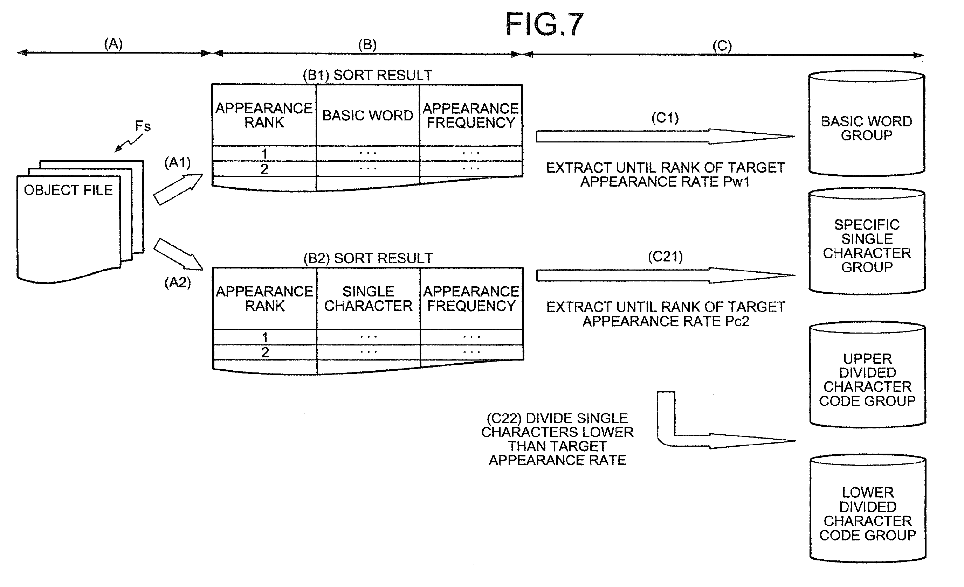

The information processing apparatus 400 tabulates the number of appearances of character data present in an object file group Fs. A tabulation result is sorted in descending order of the number of appearances and ranks in ascending order are given from the highest number of appearances. In this description, it is assumed that the total number of character data types is 1305 ($<2048 (=2^{11})$) by way of example. Details of the tabulation of the number of appearances will be described with reference to FIG. 7.

(2) Calculation of Compression Code Length

The information processing apparatus 400 calculates a compression code length for each character data based on the tabulation result acquired in (1). For example, the information processing apparatus 400 calculates an appearance rate for each character data. The appearance rate can be acquired by dividing the number of appearances of each character data by the total number of appearances of all of the character data. The information processing apparatus 400 obtains an occurrence probability corresponding to the appearance rate and derives a compression code length from the occurrence probability.

The occurrence probability is expressed by $1/2^x$. X is an exponent. A compression code length is the exponent X of the occurrence probability. For example, the compression code length is determined depending on which of the following ranges of the occurrence probability the appearance rate falls within. AR denotes the appearance rate.
$1/2^0 > AR \geq 1/2^1$ ... A compression code length is 1 bit.
$1/2^1 > AR \geq 1/2^2$ ... A compression code length is 2 bit.
$1/2^2 > AR \geq 1/2^3$ ... A compression code length is 3 bit.
$1/2^3 > AR \geq 1/2^4$ ... A compression code length is 4 bit.

... $1/2^{N-1} > AR \geq 1/2^N$ ... A compression code length is N bit.

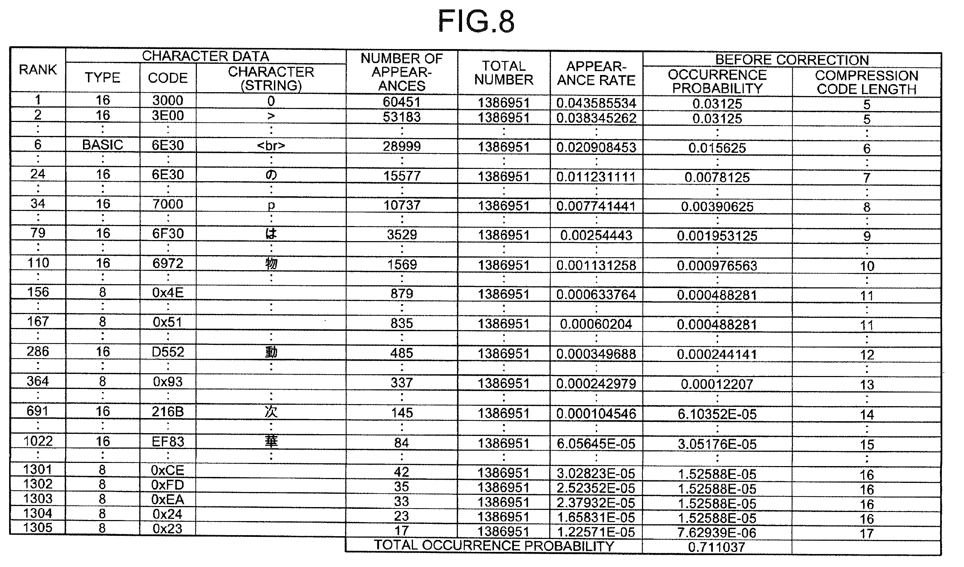

Details of the calculation of the compression code length will be described with reference to FIG. 8.

(3) Specification of Number of Leaves

The information processing apparatus 400 tabulates the number of leaves for each compression code length to specify the number of leaves for each compression code length. Here, it is assumed that the maximum compression code length is 17 bits. The number of leaves is the number of character data types. Therefore, if the number of leaves at the compression code length of 5 bits is 2, this indicates that 2 character data assigned with a 5-bit compression code are present.

(4) Correction of Number of Leaves

The information processing apparatus 400 corrects the number of leaves. For example, the information processing apparatus 400 makes corrections such that the exponent N of the upper limit $2^N$ of the number of branches is set to the maximum compression code length. For example, in the case of the exponent N=11, the sum of the number of leaves at the compression code lengths from 11 to 17 bits is defined as the corrected number of leaves at the compression code length of 11 bits. The information processing apparatus 400 assigns the number of branches per leaf for each compression code length. For example, the number of branches per leaf is determined as $2^0$, $2^1$, $2^2$, $2^3$, $2^4$, $2^5$, $2^6$, and 16 for the compression code lengths after the correction in descending order.

For example, in FIG. 6, while the total number of the character data (number of leaves) assigned with a compression code having the compression code length of 11 bits is 1215, the number of branches per leaf is 1. To each character data assigned with a compression code having the compression code length of 11 bits, only one branch is assigned. On the other hand, while the total number of the character data (number of leaves) assigned with a compression code having the compression code length of 6 bits is 6, the number of branches per leaf is 32. To each character data assigned with a compression code having the compression code length of 6 bits, 32 branches are assigned. (4) The correction of the number of leaves is executed when necessary, and may not be executed.

(5) Generation of Leaf Structure

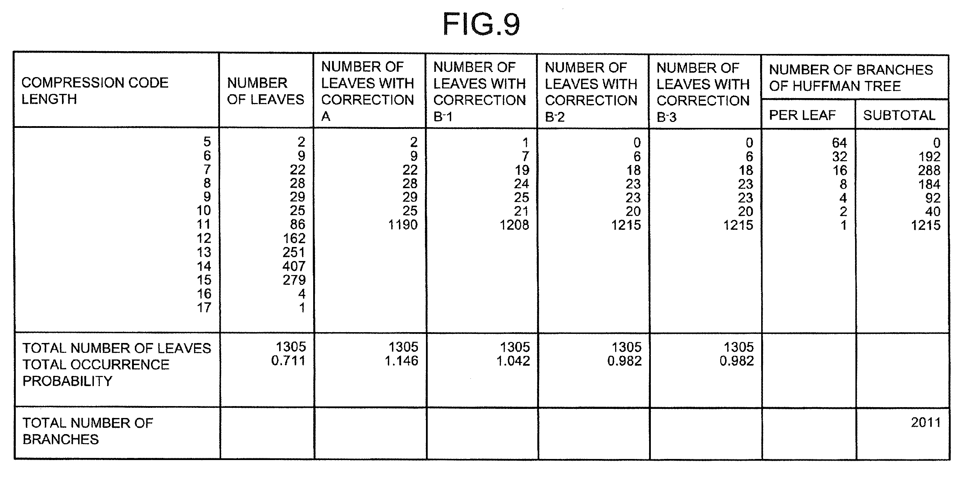

The information processing apparatus 400 then generates a leaf structure. The leaf structure is a data structure formed by correlating character data, a compression code length thereof, and a compression code having the compression code length. For example, a character "0" ranked first in the appearance ranking has a compression code length of 6 bits and a compression code of "000000". In the example of FIG. 6, the number of character data types (number of leaves) is 1305 and, therefore, structures of a leaf L1 to a leaf L1305 are generated. Details of (3) the specification of the number of leaves to (5) the generation of the leaf structure (N=11) will be described with reference to FIG. 9.

(6) Generation of Pointer to Leaf

The information processing apparatus 400 then generates a pointer to leaf for each leaf structure. The pointer to leaf is a bit string acquired by connecting a compression code in a leaf structure to be pointed and a bit string corresponding to one of numbers corresponding to branches per leaf. For example, since the compression code length of the compression code "000000" assigned to the character "0" of the leaf L1 is 6 bits, the number of branches of the leaf L1 is 32.

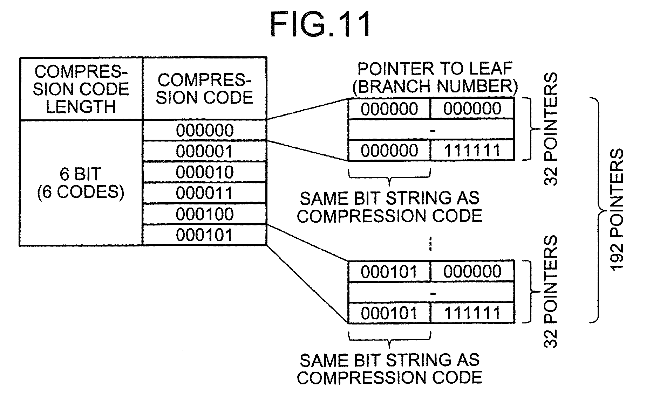

Therefore, the leading 6 bits of the pointers to the leaf L1 indicate the compression code "000000". The subsequent bit strings are 32 ($=2^5$) types of bit strings represented by the number of branches for the leaf L1. As a result, 32 types of 5-bit bit strings are subsequent bit strings of the compression code "000000". Therefore, the pointers to the leaf L1 are 32 types of 11-bit bit strings with the leading 6 bits fixed to "000000". If the number of branches per leaf is one, one pointer to leaf exists, and the compression code and the pointer to leaf are the same bit strings. Details of (6) the generation of the pointer to leaf will be described with reference to FIG. 11.

(7) Construction of $2^N$-Branch Nodeless Huffman Tree

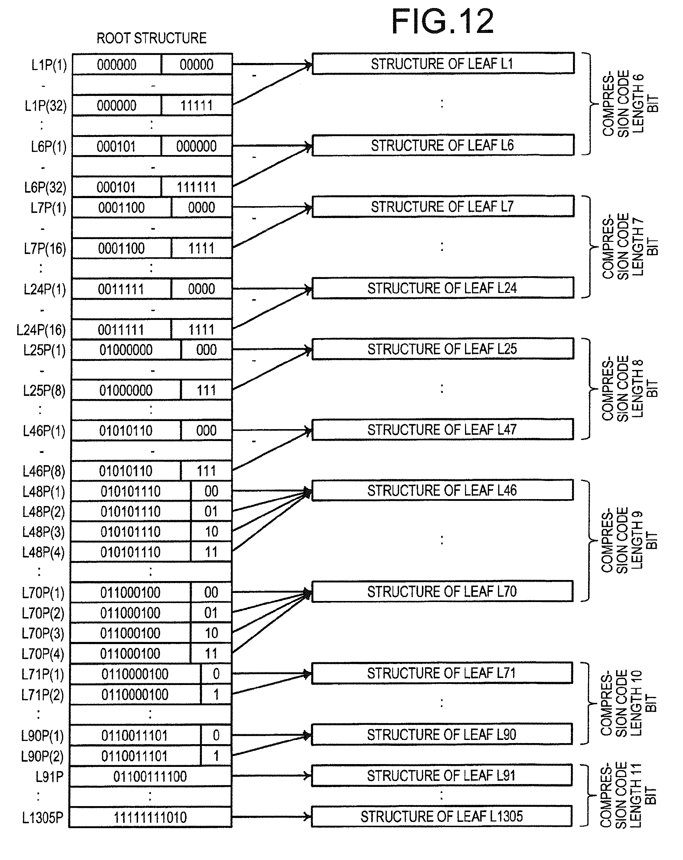

Lastly, the information processing apparatus 400 constructs a $2^N$-branch nodeless Huffman tree. For example, pointers to leaf are used as a root to construct the $2^N$-branch nodeless Huffman tree H that directly specifies leaf structures. If the compression code string is an 11-bit bit string having "000000" as the leading 6 bits, the structure of the leaf L1 of the character "0" can be pointed through the $2^N$-branch nodeless Huffman tree H regardless of which one of 32 types of bit strings corresponds to the subsequent 5 bits. Details of (7) the construction of the $2^N$-branch nodeless Huffman tree will be described with reference to FIG. 12.

FIG. 7 is a diagram of details of (1) Tabulation of the Number of Appearances. In FIG. 7, the information processing apparatus 400 executes three phases, i.e., (A) tabulation from the object file group Fs, (B) sort in descending order of appearance frequency, and (C) extraction until the rank of the target appearance rate. The three phases will hereinafter be described separately for basic words and signal characters.

(A1) First, the information processing apparatus 400 reads the object file group Fs to count the appearance frequency (number of appearances) of basic words. The information processing apparatus 400 refers to a basic word structure and, if a character string identical to a basic word in the basic word structure is present in the object files, the information processing apparatus 400 adds one to the appearance frequency of the basic word (default value is zero). The basic word structure is a data structure having descriptions of basic words.

(B1) Once the tabulation of basic words in the object file group Fs is completed, the information processing apparatus 400 sorts a basic word appearance frequency tabulation table in descending order of the appearance frequency. In other words, the table is sorted in the order from the highest appearance frequency and the basic words are ranked in the order from the highest appearance frequency.

(A2) The information processing apparatus 400 reads the object file group Fs to count the appearance frequency of single characters. For example, the information processing apparatus 400 adds one to the appearance frequency of the single characters (default value is zero).

(B2) Once the tabulation of single characters in the object file group Fs is completed, the information processing apparatus 400 sorts a single character appearance frequency tabulation table in descending order of the appearance frequency. In other words, the table is sorted in the order from the highest appearance frequency and the single characters are ranked in the order from the highest appearance frequency.

(C1) The information processing apparatus 400 then refers to the basic word appearance frequency tabulation table after the sorting of (B1) to extract the basic words ranked within a target appearance rate Pw. For example, the information processing apparatus 400 calculates the appearance rate Pw to each rank by using the sum of appearance frequencies (the total appearance frequency) of all the basic words as a denominator and accumulating the appearance frequencies in descending order from the basic word ranked in the first place to obtain a numerator.

For example, assuming that the total appearance frequency is 40000 and that the cumulative appearance frequency of basic words from the first place to the yth place is 30000, the appearance frequency within the yth place is (40000/30000)×100=75 [%]. If the target appearance rate Pw is 75 [%], the basic words ranked in the top y are extracted.

(C21) The information processing apparatus 400 then refers to the single character appearance frequency tabulation table after the sorting of (B2) to extract the single characters ranked within a target appearance rate Pc. For example, the information processing apparatus 400 calculates an appearance rate to each rank by using the sum of appearance frequencies (the total appearance frequency) of all the single characters as a denominator and accumulating the appearance frequencies in descending order from the single character ranked in the first place to obtain a numerator.

For example, assuming that the total appearance frequency is 50000 and that the cumulative appearance frequency of single characters from the first place to the yth place is 40000, the appearance frequency within the yth place is (50000/40000)×100=80 [%]. If the target appearance rate Pc is 80 [%], the single characters ranked in the top y are extracted. A single character extracted at (C21) is referred to as "specific single character (s)" so as to distinguish the character from original single characters.

(C22) Among single characters, a single character excluded from the specific single characters (hereinafter, "nonspecific single character(s)") has appearance frequency lower than each of the specific single characters and, therefore, the character code thereof is divided. For example, a character code of a nonspecific single character is divided into a character code of upper bits and a character code of lower bits.

For example, if the single character is represented by a UTF 16-bit character code, the character code is divided into a character code of upper 8 bits and a character code of lower 8 bits. In this case, each of the divided character codes is represented by a code from 0x00 to 0xFF. The character code of the upper bits is an upper divided character code and the character code of the lower bits is a lower divided character code.

FIG. 8 is a diagram of details of (2) Calculation of Compression Code Length (N=11) of FIG. 6. A character data table of FIG. 8 is a table reflecting the tabulation result of (1) of FIG. 6 and has a rank field, decompression type field, a code field, a character field, an appearance number field, a total number field, an appearance rate field, an uncorrected occurrence probability field, and a compression code length field set for each character data. Among these fields, fields from the rank field to the total number field have information acquired as a re-sort result.

In the rank field, ranks (in ascending order) are written in descending order of the number of appearances of character data. In the decompression type field of character data fields, types of character data are written. A 16-bit code (single character) is denoted by "16". An 8-bit divided character code is denoted by "8". "BASIC" indicates a basic word.

In the code field of the character data fields, a specific single character or a divided character code is written. In the case of a basic word, this field is left blank. In the character field of the character data fields, a character or a basic word is written. In the case of a divided character code, this field is left blank. In the appearance number field, the number of appearances of character data in the object file group Fs is written. In the total number field, the total number of appearances of all of the character data is written.

In the appearance rate field, a value acquired by dividing the number of appearances by the total number is written as an appearance rate. In the occurrence probability field of uncorrected fields, occurrence probability corresponding to the appearance rate is written. In the compression code length field, a compression code length corresponding to the occurrence probability, i.e., an exponent y of the occurrence probability $1/2^y$ is written as a compression code length.

FIG. 9 is a diagram of details of (3) Specification of Number of Leaves to (5) Generation of Leaf Structure (N=11) of FIG. 6. A result of tabulation of the number of leaves (the total number of character data types) on the basis of the compression code length in the character data table of FIG. 8 is the uncorrected number of leaves in FIG. 8. Correction A is correction for aggregating the number of leaves assigned to compression code lengths greater than or equal to the upper limit length N of the compression code length (i.e., the exponent N of the maximum branch number $2^N$ of the $2^N$-branch nodeless Huffman tree H) to the upper limit length N of the compression code length. In this case, although the maximum compression code length before the correction is 17 bits, the total number of character data types is 1305 and, therefore, the upper limit length N of the compression code length is N=11. Thus, with the correction A, the number of leaves at the compression code length of 11 bits is set to the sum of the numbers of leaves at the compression code lengths from 11 to 17 bits (1190).

The information processing apparatus 400 obtains the total occurrence probability. Since the occurrence probability of each compression code length is determined ($1/2^5$ in the case of 5 bits), a multiplication result of each compression code length is acquired by multiplying the occurrence probability by the number of leaves for each compression code length. For example, the number of leaves at the compression code length of 5 bits with the correction A is 2. The occurrence probability of the compression code length of 5 bits is $1/2^5$. Therefore, the occurrence probability of the compression code length of 5 bits with the correction A is $2\times(1/2^5)=1/2^4$. The compression code length occurrence probability with the correction A is also obtained for the compression code length greater than or equal to 6 bits. By summing the occurrence probabilities of the compression code lengths after the correction A, the total occurrence probability with the correction A is acquired.

The information processing apparatus 400 determines whether the total occurrence probability is less than or equal to one. A threshold value t is $0<t\leq1$. If it is not desired to provide the threshold value t, t=1 may be used. If less than the threshold value t, a shift to correction B is made. If greater than or equal to the threshold value t and less than or equal to one, the number of leaves at each compression code length at this point is fixed without shifting to the correction B.

The correction B is correction for updating the number of leaves without changing the compression code lengths (5 bits to 12 bits) in the correction A. For example, this is the correction performed if the total occurrence probability with the correction A is not greater than or equal to the threshold value t or not less than or equal to one. In particular, the correction B includes 2 types.

In one type of the correction, if the total occurrence probability is less than the threshold value t, the total occurrence probability is increased until the maximum value of the total occurrence probability less than or equal to one is acquired, for example, until the total occurrence probability converges to a maximum asymptotic value (hereinafter, correction B⁺). In the other type of the correction, if the total occurrence probability is greater than one, the total occurrence probability is reduced until the maximum value less than or equal to one is acquired after the total occurrence probability becomes less than one, for example, until the total occurrence probability converges to a maximum asymptotic value (hereinafter, correction B⁻).

In the example depicted in FIG. 9, since the total occurrence probability with the correction A is "1.146", the correction B⁻ is performed. The same correction is performed by dividing the number of leaves by the total occurrence probability in the correction B regardless of whether the correction B⁺ or correction B⁻.

At the first time of the correction B⁻ (correction B1), the number of leaves with the correction A at each compression code length is divided by the total occurrence probability (1.146) of the previous correction (the correction A in this case) to update the number of leaves. Figures after the decimal point may be rounded down or rounded off. For the upper limit N of the compression code length in the correction A (N=11 bits), the number of leaves at the upper limit N of the compression code length is obtained by subtracting the total number of leaves with the correction B⁻1 at the compression code lengths (except the number of leaves at the upper limit length N of the compression code length) from the total number of leaves (1305) rather than dividing by the total occurrence probability (1.146) of the previous correction (the correction A in this case). In this case, the number of leaves is 1208.

The information processing apparatus 400 subsequently obtains the total occurrence probability with the correction B⁻1 from the computing process same as the case of the correction A. The information processing apparatus 400 then determines whether the total occurrence probability with the correction B⁻1 converges to the maximum asymptotic value less than or equal to one. If the total occurrence probability with the correction B⁻1 does not converge to the maximum asymptotic value less than or equal to one, a shift to the second correction B (correction B⁻2) is made. If converging to the maximum asymptotic value, the number of leaves at each compression code length at this point is fixed without shifting to the correction B⁻2. Since the total occurrence probability "1.042" updated with the correction B⁻1 is greater than one and does not converge to the maximum asymptotic value, the shift to the correction B⁻2 is made.

In the correction B⁻2, the number of leaves with the correction B⁻1 at each compression code length is divided by the total occurrence probability (1.042) of the previous correction (the correction B⁻1 in this case) to update the number of leaves. Figures after the decimal point may be rounded down or rounded off. For the upper limit N of the compression code length in the correction B-1 (N=11 bits), the number of leaves at the upper limit N of the compression code length is obtained by subtracting the total number of leaves with the correction B-2 at the compression code lengths (except the number of leaves at the upper limit length N of the compression code length) from the total number of leaves (1305) rather than dividing by the total occurrence probability (1.042) of the previous correction (the correction B-1 in this case). In this case, the number of leaves is 1215.

The information processing apparatus 400 subsequently obtains the total occurrence probability with the correction B-2 from the computing process same as the case of the correction B-1. The information processing apparatus 400 then determines whether the total occurrence probability with the correction B-2 converges to the maximum asymptotic value less than or equal to one. If the total occurrence probability with the correction B-2 does not converge to the maximum asymptotic value less than or equal to one, a shift to the third correction B(correction B-3) is made. If converging to the maximum asymptotic value, the number of leaves at each compression code length at this point is fixed without shifting to the correction B-3. Although the total occurrence probability "0.982" updated with the correction B-2 is less than or equal to one, it is unknown whether the total occurrence probability converges to the maximum asymptotic value and, therefore, the shift to the correction B-3 is made.

In the correction B-3, the number of leaves with the correction B-2 at each compression code length is divided by the total occurrence probability (0.982) of the previous correction (the correction B-2 in this case) to update the number of leaves. Figures after the decimal point may be rounded down or rounded off. For the upper limit N of the compression code length in the correction B-2 (N=11 bits), the number of leaves at the upper limit N of the compression code length is obtained by subtracting the total number of leaves with the correction B-3 at the compression code lengths (except the number of leaves at the upper limit length N of the compression code length) from the total number of leaves (1305) rather than dividing by the total occurrence probability (0.983) of the previous correction (the correction B-2 in this case). In this case, the number of leaves is 1215.

The information processing apparatus 400 subsequently obtains the total occurrence probability with the correction B-3 from the computing process same as the case of the correction B-2. The information processing apparatus 400 then determines whether the total occurrence probability with the correction B-3 converges to the maximum asymptotic value less than or equal to one. If the total occurrence probability with the correction B-3 does not converge to the maximum asymptotic value less than or equal to one, a shift to the fourth correction B (correction B-4) is made. If converging to the maximum asymptotic value, the number of leaves at each compression code length at this point is fixed without shifting to the correction B-4.

The total occurrence probability "0.982" updated with the correction B-3 is the same value as the total occurrence probability "0.982" updated with the correction B-2. In other words, the numbers of leaves at the compression code lengths with the correction B-3 are the same as the numbers of leaves at the compression code lengths with the correction B-2. In this case, the information processing apparatus 400 determines that the total occurrence probability converges to the maximum asymptotic value and the numbers of leaves are fixed.

As described above, the correction B- is continued until the numbers of leaves are fixed. In the example of FIG. 9, the number of leaves at each compression code length is fixed with the correction B-3. Subsequently, the information processing apparatus 400 calculates the number of branches per leaf for each compression code length. In the calculation of the number of branches per leaf, as described above, the number of branches per leaf is assigned in descending order from the upper limit length N of the compression code length (N=11 bits in this case) as $2^0$, $2^1$, $2^2$, $2^3$, $2^4$, $2^5$, and $2^6$. A subtotal of the number of branches is a multiplication result of multiplying the number of branches per leaf by the fixed number of leaves for each compression code length.

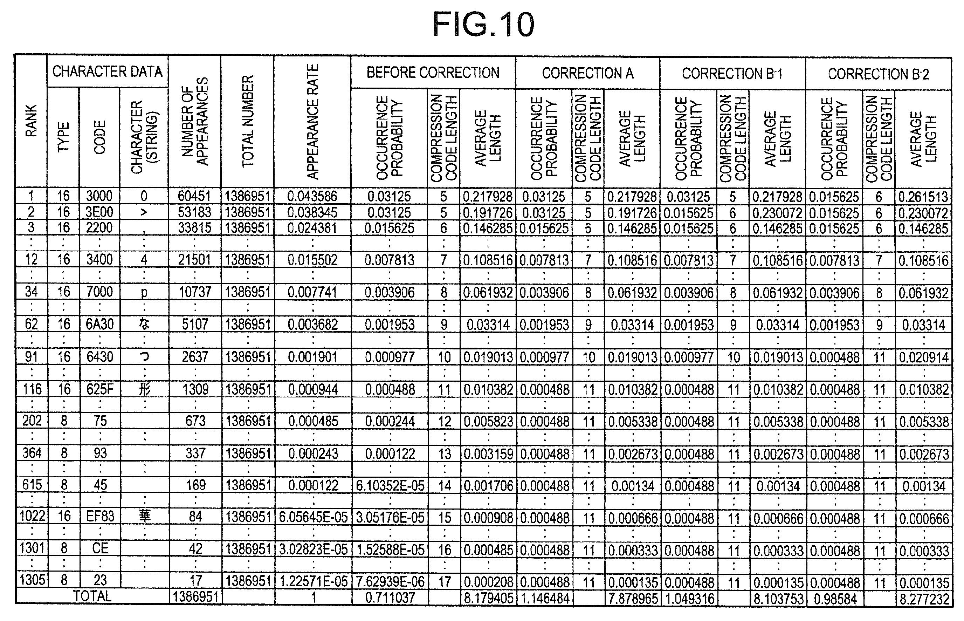

FIG. 10 is a diagram of a correction result of each character data. In FIG. 10, the correction results of the correction A and the corrections B-1 to B-2 are added to the character data table. Since the number of leaves at each compression code length is updated by the correction as depicted in FIG. 10, the compression code lengths are assigned in order such that the character data ranked first in the rank field has the shortest compression code length.

For example, if fixed with the correction B-2, the number of leaves is 6 at the compression code length of 6 bits; the number of leaves is 18 at the compression code length of 7 bits;...; and the number of leaves is 1215 at the compression code length of 11 bits. Therefore, the compression code length of 6 bits is assigned to the character data ranked in the first to sixth places (corresponding to 6 leaves); the compression code length of 7 bits is assigned to the character data ranked in the 7th to 24th places (corresponding to 18 leaves);...; and the compression code length of 11 bits is assigned to the character data ranked in the 91st to 1305th places (corresponding to 1215 leaves).

The information processing apparatus 400 assigns a compression code to each character data to generate a leaf structure based on the character data, the compression code length assigned to the character data, and the number of leaves at each compression code length. For example, since the compression code length of 5 bits is assigned to the single character "0" ranked first for the appearance rate, the compression code thereof is "000000". Therefore, a structure of a leaf L1 is generated that includes the compression code "000000", the compression code length "6", and the character data "0".

Although the compression code length is 5 bits to 11 bits in the correction process described above, the compression code map M of bi-gram character strings may be divided in some cases and, therefore, the compression code length may be corrected to the even number of bits. For example, the character data of the compression code length of 5 bits and 7 bits is corrected to 6 bits; the character data of 9 bits is corrected to 8 bits; and the character data of 11 bits is corrected to 10 bits.

FIG. 11 is a diagram of details of (6) Generation of Pointer to Leaf (N=11) of FIG. 6. FIG. 11 depicts a pointer to a leaf when the upper limit N of the compression code length is 11 bits. In FIG. 11, since the number of leaves is 6 at the compression code length of 6 bits, compression codes "000000" to "000101" are assigned. The number of branches per leaf is 32 when the compression code length is 6 bits. Therefore, 32 (=$2^5$) pointers to leaf are generated for a compression code having the compression code length of 6 bits. For example, the leading 6 bits of the pointers to leaf represent a compression code and the subsequent 5 bits represent 32 types of bit strings. Therefore, 32 types of the pointers to leaf are generated for each of the compression codes having the compression code length of 6 bits.

Although not depicted, since the number of leaves is 18 when the compression code length is 7 bits, compression codes "0001100" to "0011111" are assigned. The number of branches per leaf is 16 when the compression code length is 7 bits. Therefore, 16 (=$2^4$) pointers to leaf are generated for a compression code having the compression code length of 7 bits. For example, the leading 7 bits of the pointers to leaf represent a compression codes and the subsequent 4 bits represent 16 types of bit strings. Therefore, 16 types of the pointers to leaf are generated for each of the compression codes having the compression code length of 7 bits.

Similarly, since the number of leaves is 23 when the compression code length is 8 bits, compression codes "01000000" to "01010110" are assigned. The number of branches per leaf is 8 when the compression code length is 8 bits. Therefore, 8 (=$2^3$) pointers to leaf are generated for a compression code having the compression code length of 8 bits. For example, the leading 8 bits of the pointers to leaf represent a compression codes and the subsequent 3 bits represent 8 types of bit strings. Therefore, 8 types of the pointers to leaf are generated for each of the compression codes having the compression code length of 8 bits.

Similarly, since the number of leaves is 23 when the compression code length is 9 bits, compression codes "010101110" to "011000100" are assigned. The number of branches per leaf is 4 when the compression code length is 9 bits. Therefore, 4 (=$2^2$) pointers to leaf are generated for a compression code having the compression code length of 9 bits. For example, the leading 9 bits of the pointers to leaf represent a compression codes and the subsequent 2 bits represent 4 types of bit strings. Therefore, 4 types of the pointers to leaf are generated for each of the compression codes having the compression code length of 9 bits.

Similarly, since the number of leaves is 20 when the compression code length is 10 bits, compression codes "0110000110" to "0110011101" are assigned. The number of branches per leaf is 2 when the compression code length is 10 bits. Therefore, 2 (=$2^1$) pointers to leaf are generated for a compression code having the compression code length of 10 bits. For example, the leading 10 bits of the pointers to leaf represent a compression codes and the subsequent 1 bits represent 2 types of bit strings. Therefore, 2 types of the pointers to leaf are generated for each of the compression codes having the compression code length of 10 bits.

Similarly, since the number of leaves is 1215 when the compression code length is 11 bits, compression codes "01100111100" to "11111111010" are assigned. The number of branches per leaf is 1 when the compression code length is 11 bits. Therefore, 1 (=$2^0$) pointers to leaf are generated for a compression code having the compression code length of 11 bits. In other words, the compression code itself functions as the pointer to leaf. Therefore, 1 type of pointer to leaf is generated for each of the compression codes having the compression code length of 11 bits.

FIG. 12 is a diagram of details of (7) Construction of $2^N$-Branch Nodeless Huffman Tree H (N=11) of FIG. 6. FIG. 12 depicts a 2048(=$2^{11}$)-branch nodeless Huffman tree H in the case of N=11. A root structure stores the pointers to leaf. A pointer to leaf can specify a leaf structure at a pointed destination.

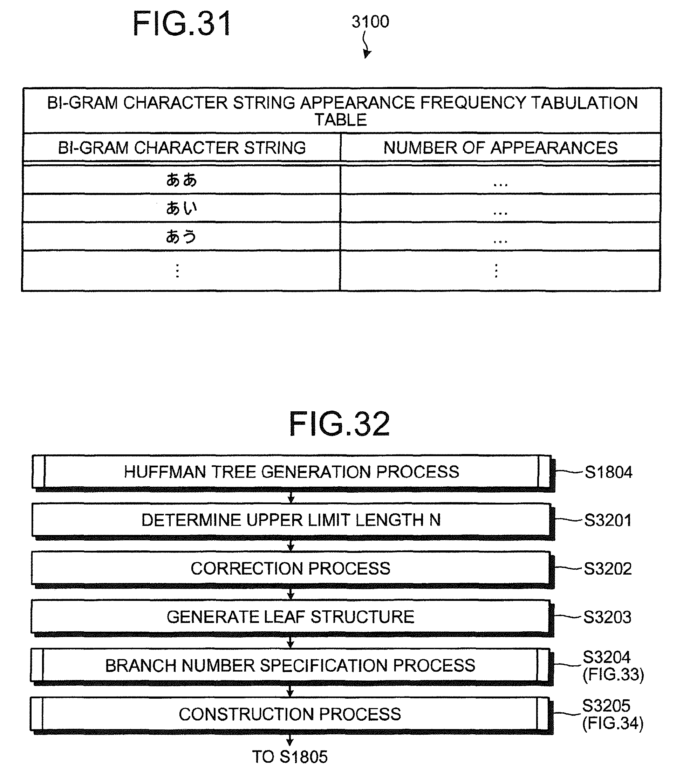

For example, as depicted in FIG. 11, 32 pointers to leaf are generated for a leaf structure storing a compression code having the compression code length of 6 bits. Therefore, for the structure of the leaf L1, 32 pointers L1P(1) to L1P(32) to the leaf L1 are stored in the root structure. The same applies to the structure of the leaf L2 to the structure of the leaf L6. The structure of the leaf L7 and the subsequent structures are also depicted in FIG. 12.

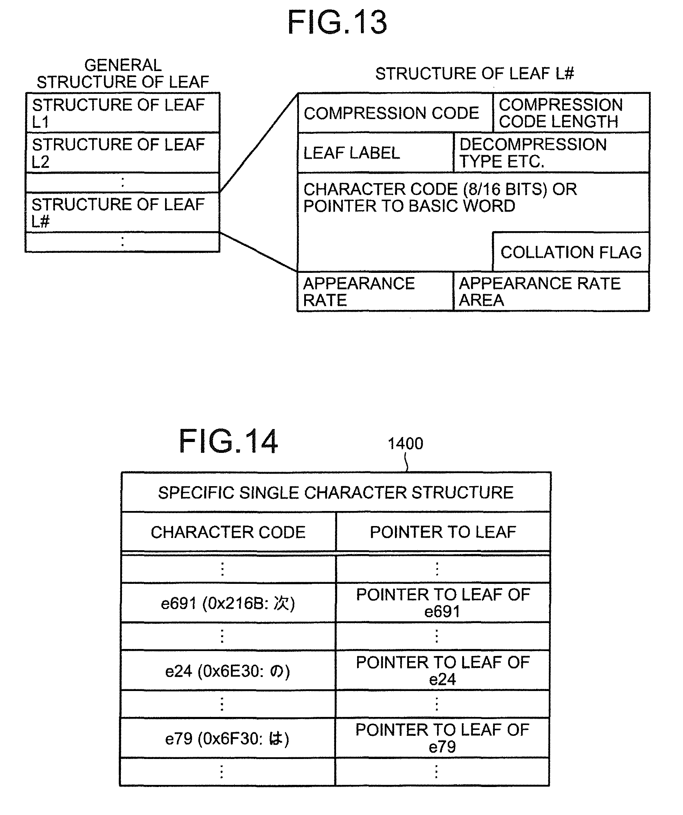

FIG. 13 is a diagram of the leaf structure. The leaf structure is a data structure having first to fourth areas. In the leaf structure, the first area stores a compression code and a compression code length thereof. The second area stores a leaf label and a decompression type (see FIG. 8) and the appearance rate (see FIG. 10). The third area stores a 16-bit character code of a specific single character, an 8-bit divided character code divided from a character code of a nonspecific single character, or a pointer to a basic word depending on the decompression type. The pointer to basic word specifies a basic word within the basic word structure. A collation flag is also stored. The collation flag is "0" by default. In the case of "0", a character to be decompressed is directly written in a decompression buffer and, in the case of "1", the character is interposed between a <color> tag and a </color> tag and written in the decompression buffer.

The fourth area stores an appearance rate and an appearance rate area of stored character data. The appearance rate is the appearance rate of character data depicted in FIG. 8. The appearance rate area will be described with reference to FIGs.S24 and 49. The fourth area also stores a code type and a code category. The code type identifies which of a numeric character, an alphabetic character, a special symbol, katakana, hiragana, or kanji a character code corresponds to, or whether a character code is a pointer to a basic word. The code category identifies whether the character code is 16-bit or 8-bit. In the case of 16-bit character code or in the case of a reserved word, "1" is assigned as the code category and, in the case of 8-bit divided character code, "0" is assigned as the code category.

The information is stored in the first to the fourth areas during the construction process (step S3205) described later.

FIG. 14 is a diagram of a specific single character structure. A specific single character structure 1400 is a data structure storing a specific single character code e# and a pointer to leaf L# thereof. For example, when the information processing apparatus 400 acquires the tabulation result from the object file group Fs, the information processing apparatus 400 stores the specific single character codes e# into the specific single character structure 1400. When the $2^N$-branch nodeless Huffman tree H is constructed, the information processing apparatus 400 stores pointers to the specific character codes e# in the specific single character structure 1400 corresponding to compression codes stored in the structures of leaves in the $2^N$-branch nodeless Huffman tree H.

When the pointers to the specific single character codes e# are stored in the structures of the corresponding leaves, the information processing apparatus 400 stores pointers to the leaves corresponding to the specific single character codes e# in the $2^N$-branch nodeless Huffman tree H in a manner correlated with the corresponding specific single character codes e# in the specific single character structure 1400. As a result, the specific single character structure 1400 is generated.

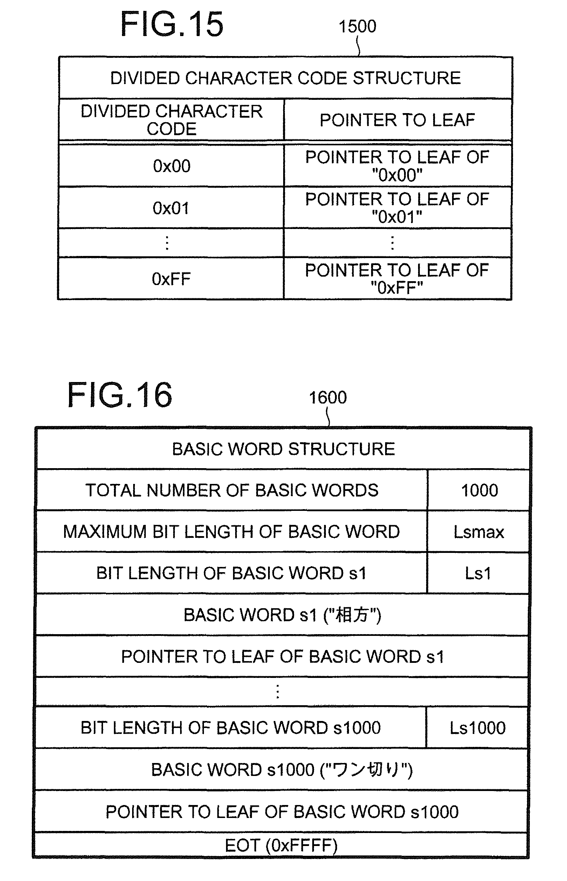

FIG. 15 is a diagram of a divided character code structure. A divided character code structure 1500 stores a divided character code and a pointer to leaf L# thereof. For example, when the information processing apparatus 400 acquires the tabulation result from the object file group Fs, the information processing apparatus 400 stores the divided character codes into the divided character code structure 1500. When the $2^N$-branch nodeless Huffman tree H is constructed, the information processing apparatus 400 stores pointers to the divided character codes in the divided character code structure 1500 corresponding to compression codes stored in the structures of leaves in the $2^N$-branch nodeless Huffman tree H.

When the pointers to the divided character codes are stored in the structures of the corresponding leaves, the information processing apparatus 400 stores pointers to the leaves corresponding to the divided character codes in the $2^N$-branch nodeless Huffman tree H in a manner correlated with the corresponding divided character codes in the divided character code structure 1500. As a result, the divided character code structure 1500 is generated.

FIG. 16 is a diagram of a basic word structure. A basic word structure 1600 is a data structure that stores basic words and pointers to leaves L# thereof. The basic word structure 1600 stores the basic words in advance. When the $2^N$-branch nodeless Huffman tree H is constructed, the information processing apparatus 400 stores pointers to the basic words in the basic word structure 1600 corresponding to compression codes stored in the structures of leaves in the $2^N$-branch nodeless Huffman tree H.

When the pointers to the basic words are stored in the structures of the corresponding leaves, the information processing apparatus 400 stores pointers to the leaves corresponding to the basic words in the $2^N$-branch nodeless Huffman tree H in a manner correlated with the corresponding basic words in the basic word structure 1600.

<Creation Example of Compression Code Map M>

Once the $2^N$-branch nodeless Huffman tree H is generated by the first generating unit 402, the creating unit 404 crates a compression code map M of single characters, a compression code map M of upper divided character codes, a compression code map M of lower divided character codes, a compression code map M of basic words, and a compression code map M of bi-gram character strings. A detailed creation example of the compression code map M of single characters, the compression code map M of upper divided character codes, the compression code map M of lower divided character codes, and the compression code map M of bi-gram character strings will hereinafter be described. The compression code map M of basic words is created in the same way as the compression code map M of single characters and therefore will not be described.

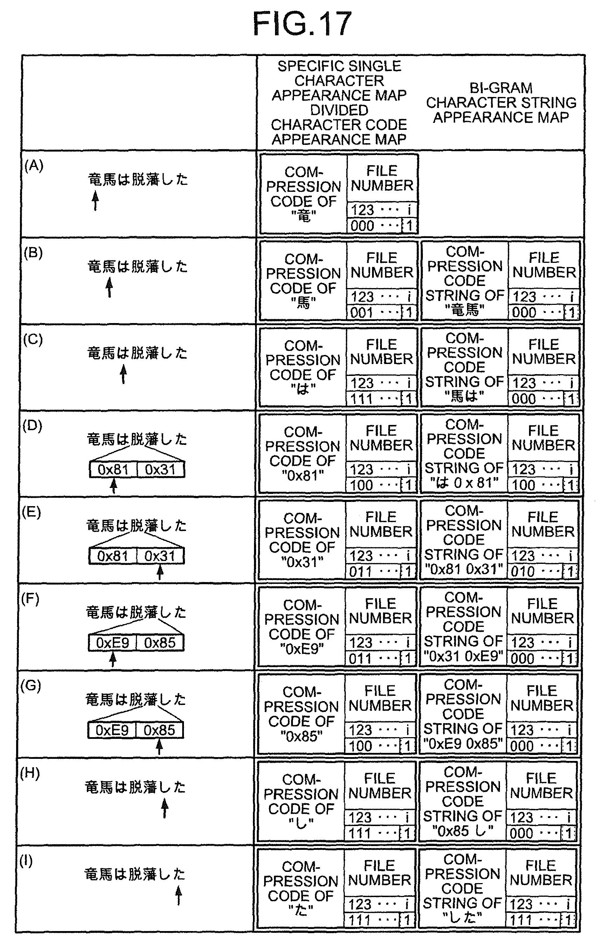

FIG. 17 is a diagram of a generation example of the compression code maps M. In FIG. 17, it is assumed that a character string "竜馬は脱藩した" is described in an object file Fi.

(A) First, the leading character "竜" is the object character. Since the object character "竜" is a specific single character, the compression code of the specific single character "竜" is acquired by accessing the $2^N$-branch nodeless Huffman tree H to identify the appearance map of the specific single character "竜". If not generated, the appearance map of the specific single character "竜" is generated that has the compression code of the specific single character "竜" as a pointer and a bit string indicating the presence in object files, which is set to all zero. In the appearance map of the specific single character "竜", the bit of the object file Fi is set to ON ("0"→"1").

(B) The object character is shifted by one gram to define "馬" as the object character. Since the object character "馬" is a specific single character, the compression code of the specific single character "馬" is acquired by accessing the $2^N$-branch nodeless Huffman tree H to identify the appearance map of the specific single character "馬". If not generated, the appearance map of the specific single character "馬" is generated that has the compression code of the specific single character "馬" as a pointer and a bit string indicating the presence in object files, which is set to all zero. In the appearance map of the specific single character "馬" the bit of the object file Fi is set to ON ("0"→"1").

When the object character is shifted to "馬", a bi-gram character string "竜馬" is acquired and, therefore, the appearance map of the bi-gram character string "竜馬" is identified by the compression code string of "竜馬" acquired by combining the compression code of "竜" and the compression code of "馬". If not generated, the appearance map of the bi-gram character string "竜馬" is generated that has the compression code of "竜馬" as a pointer and a bit string indicating the presence in object files, which is set to all zero. In the appearance map of the bi-gram character string "竜馬", the bit of the object file Fi is set to ON ("0"→"1").

(C) The object character is shifted by one gram to define "は" as the object character. The object character "は" is processed in the same way as (B) and, in the appearance map of the specific single character "は", the bit of the object file Fi is set to ON ("0"→"1"). Similarly, in the appearance map of the bi-gram character string "馬は", the bit of the object file Fi is set to ON ("0"→"1").

(D) The object character is shifted by one gram to define "脱" as the object character. Since the object character "脱" is not a specific single character, the character code "0x8131" of the object character "脱" is divided into the upper divided character code "0x81" and the lower divided character code "0x31". The object character is then defined as the upper divided character code "0x81". The upper divided character code "0x81" is processed in the same way as a specific single character and, in the appearance map of the upper divided character code "0x81", the bit of the object file Fi is set to ON ("0"→"1"). Similarly, in the appearance map of the bi-gram character string "は 0x81", the bit of the object file Fi is set to ON ("0"→"1").

(E) The object character is shifted by one gram to define the lower divided character code "0x31" of the character "脱" as the object character. The lower divided character code "0x31" is processed in the same way and, in the appearance map of the lower divided character code "0x31", the bit of the object file Fi is set to ON ("0"→"1"). Similarly, in the appearance map of the bi-gram character string "0x81 0x31", the bit of the object file Fi is set to ON ("0"→"1").

By executing the same process in (F) to (I) and completing the process for the last object file Fn, the respective compression code maps M are generated for single characters, upper divided character codes, lower divided character codes, and bi-gram character strings.

<Compression Code Map M Generation Process>

An example of the compression code map creation process of the creating unit 404 will be described.

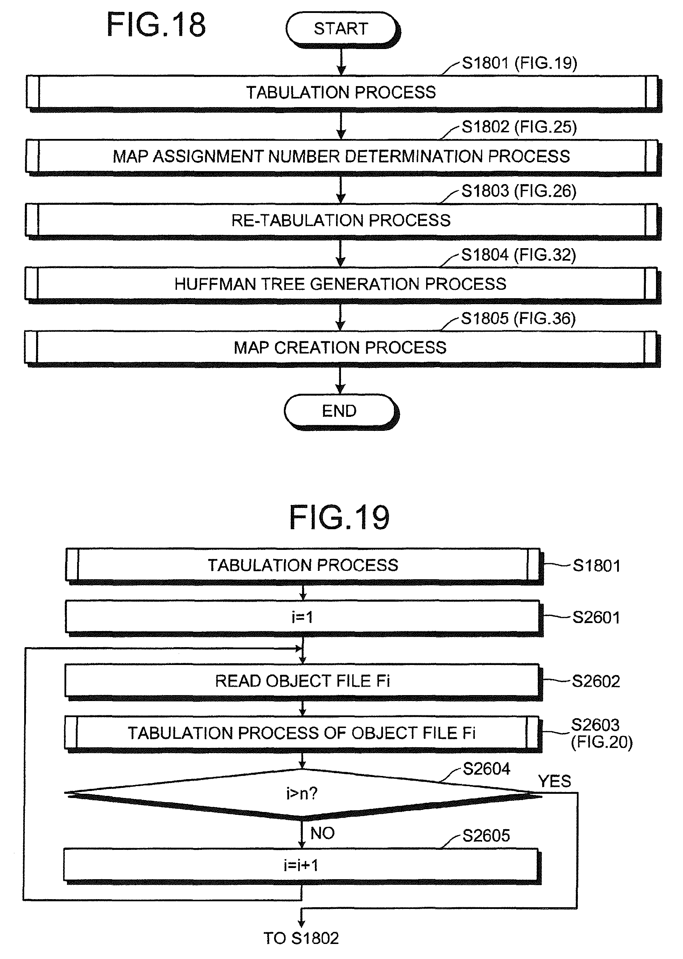

FIG. 18 is a flowchart of the compression code map creation process of the creating unit 404. The information processing apparatus 400 executes a tabulation process (step S1801), a map assignment number determination process (step S1802), a re-tabulation process (step S1803), a Huffman tree generation process (step S1804), and a map creation process (step S1805). The information processing apparatus 400 uses the tabulating unit 401 to execute the tabulation process (step S1801) to the re-tabulation process (step S1803). The information processing apparatus 400 uses the first generating unit 402 to execute the Huffman tree generation process (step S1804) and uses the creating unit 404 to executed the map creation process (step S1805).

The tabulation process (step S1801) is a process of counting the numbers of appearances (also referred to as appearance frequencies) of single characters and basic words in the object file group Fs. The map assignment number determination process (step S1802) is a process of determining the map assignment numbers of the single characters and the basic words tabulated in the tabulation process (step S1801). Single characters and basic words in the appearance ranks corresponding to the map assignment numbers are respectively defined as the specific single characters and the basic words.

The re-tabulation process (step S1803) is a process of dividing a non-specific character other than the specific single characters among the single characters into an upper divided character code and a lower divided character code and counting the respective numbers of appearances. In the re-tabulation process (step S1803), the numbers of appearances of bi-gram character strings are also tabulated.

The Huffman tree generation process (step S1804) is a process of generating the $2^N$-branch nodeless Huffman tree H as depicted in FIGs. 8 to 13. The map creation process (step S1805) is a process of generating the compression code maps M of specific single characters, basic words, upper divided character codes, lower divided character codes, and bi-gram character strings.

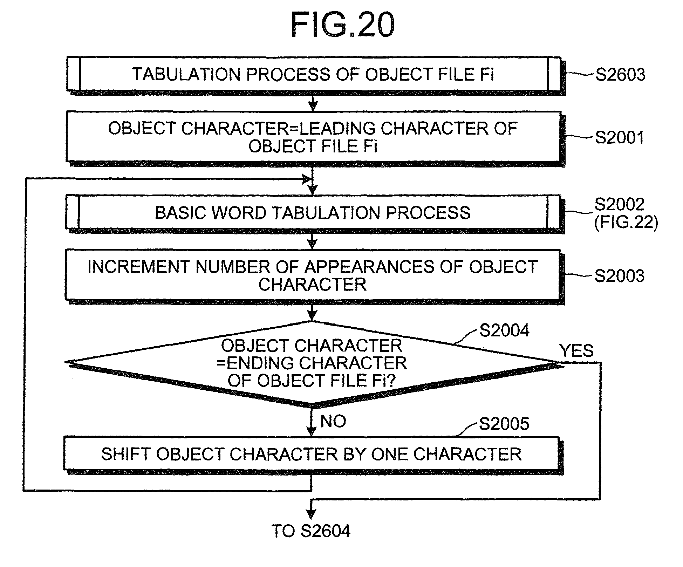

FIG. 19 is a flowchart of the tabulation process (step S1801) depicted in FIG. 18. The information processing apparatus 400 sets a file number i to i=1 (step S1901) and reads an object file Fi (step S1902). The information processing apparatus 400 executes the tabulation process of the object file Fi (step S1903), details of which will be described with reference to FIG. 20. The information processing apparatus 400 then determines whether the file number i satisfies i>n (where n is the total number of object files F1 to Fn) (step S1904).

If i>n is not satisfied (step S1904: NO), the information processing apparatus 400 increments i (step S1905) and returns to step S1902. On the other hand, if i>n is satisfied (step S1904: YES), the information processing apparatus 400 goes to the map assignment number determination process (step S1802) depicted in FIG. 18 and terminates the tabulation process (step S1801). With this tabulation process (step S1801), the tabulation process of the object file Fi (step S1903) can be executed for each of the object files Fi.

<Tabulation Process of Object File Fi (Step S1903)>

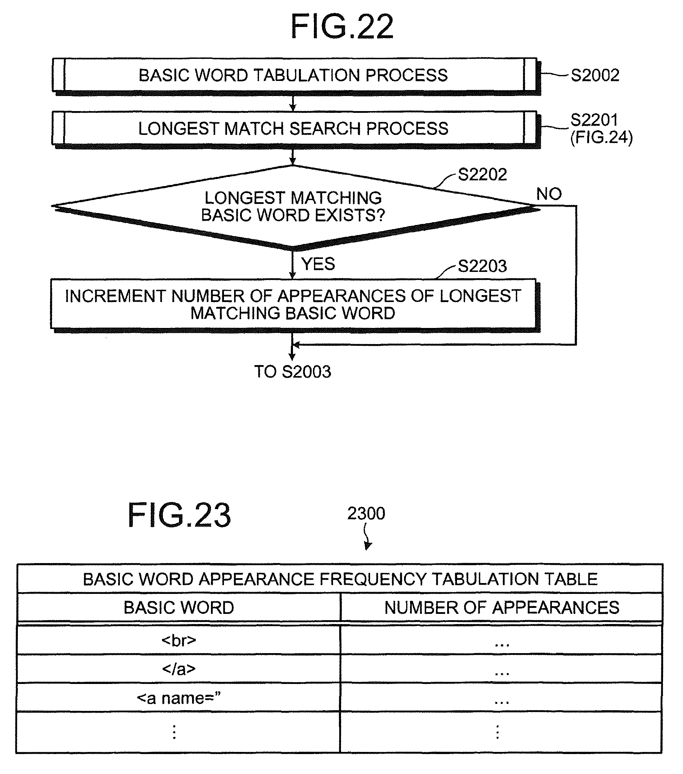

FIG. 20 is a flowchart of the tabulation process of the object file Fi (step S1903) depicted in FIG. 19. The information processing apparatus 400 defines the leading character of the object file Fi as an object character (step S2001) and executes a basic word tabulation process (step S2002), details of which will be described with reference to FIG. 22. The information processing apparatus 400 then increments the number of appearances of the object character by one in the character appearance frequency tabulation table (step S2003).

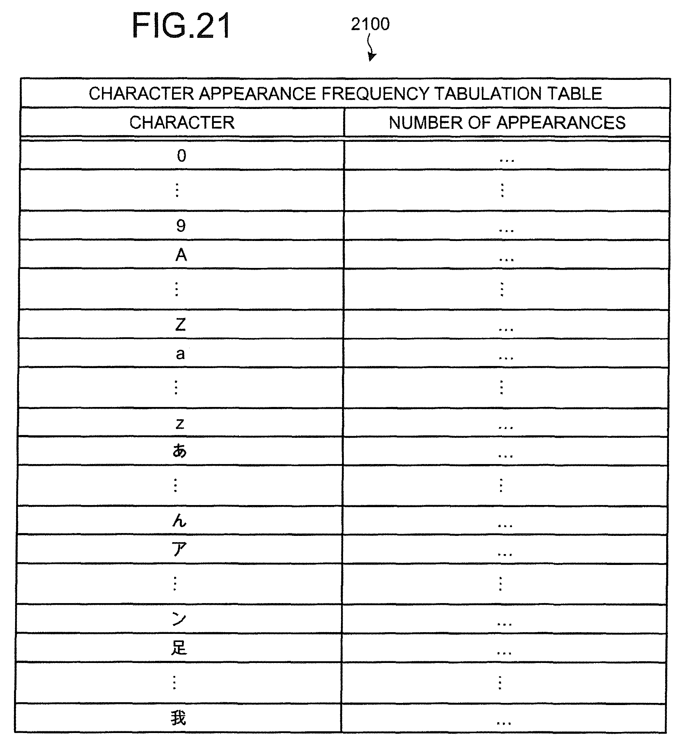

FIG. 21 is a diagram of the character appearance frequency tabulation table. A character appearance frequency tabulation table 2100 is stored in a storage device such as the RAM 203 and the magnetic disc 205 and the number of appearances is incremented by one each time a corresponding character appears.

Returning to FIG. 20, the information processing apparatus 400 determines whether the object character is the ending character of the object file Fi (step S2004). If the object character is not the ending character of the object file Fi (step S2004: NO), the information processing apparatus 400 shifts the object character by one character toward the end (step S2005) and returns to step S2002.

On the other hand, if the object character is the ending character of the object file Fi (step S2004: YES), the information processing apparatus 400 goes to step S1904 and terminates the tabulation process of the object file Fi (step S1903). With this tabulation process of the object file Fi (step S1903), the appearance frequencies of the basic words and the single characters present in the object file group Fs can be tabulated.

<Basic Word Tabulation Process (Step S2002)>

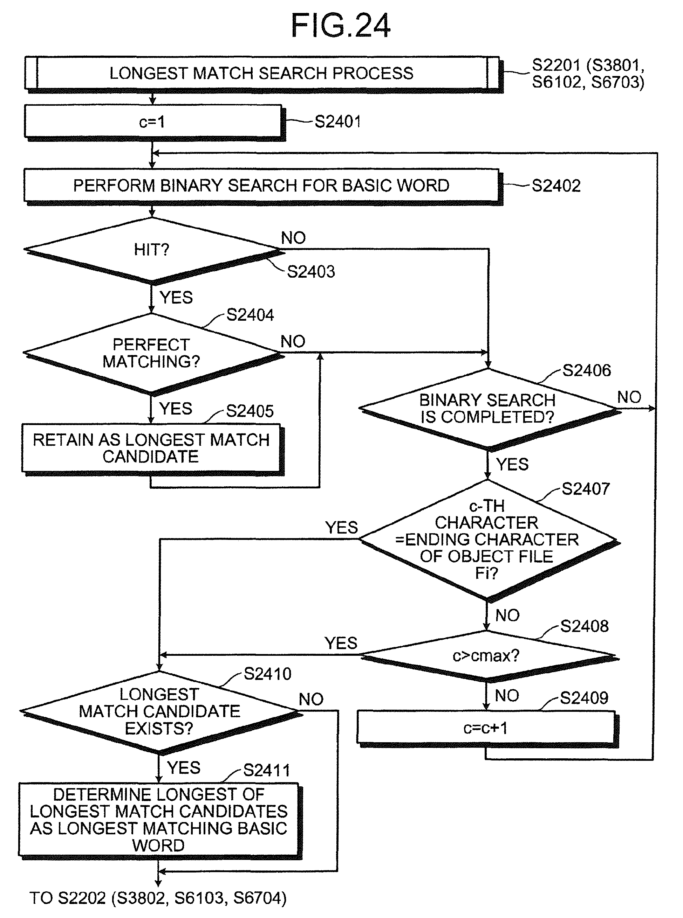

FIG. 22 is a flowchart of the basic word tabulation process (step S2002) depicted in FIG. 20. The information processing apparatus 400 executes a longest match search process (step S2201) and determines whether a longest matching basic word exists (step S2202), of which details will be described with reference to FIG. 24. If the longest matching basic word exists (step S2202: YES), the information processing apparatus 400 increments the number of appearances of the longest matching basic word by one in a basic word appearance frequency tabulation table (step S2203) and goes to step S2003.

FIG. 23 is a diagram of the basic word appearance frequency tabulation table. A basic word appearance frequency tabulation table 2300 is stored in the storage device such as the RAM 203 and the magnetic disc 205 and the number of appearances is incremented by one each time a corresponding basic word appears.

If no longest matching basic word exists (step S2202: NO), the information processing apparatus 400 goes to step S2003. As a result, the basic word tabulation process (step S2002) is terminated. With the basic word tabulation process (step S2002), the basic words can be counted by the longest match search process (step S2201) and, therefore, a basic word having a longer character string can preferentially be counted.

<Longest Match Search Process (Step S2201)>

FIG. 24 is a flowchart of the longest match search process (step S2201) depicted in FIG. 22. The information processing apparatus 400 sets c=1 (step S2401). The number of characters from the object character is denoted by c (including the object character). In the case of c=1, only the object character is indicated. The information processing apparatus 400 then performs a binary search for a basic word starting with characters matching an object character string of c characters from the object character (step S2402). The information processing apparatus 400 determines whether the basic word exists as a result of the search (step S2403). If no basic word is hit by the binary search (step S2403: NO), the information processing apparatus 400 goes to step S2406.

On the other hand, if a basic word is hit by the binary search (step S2403: YES), the information processing apparatus 400 determines whether the hit basic word perfectly matches the object character string (step S2404). If not perfectly matching (step S2404: NO), the information processing apparatus 400 goes to step S2406. On the other hand, if perfectly matching (step S2404: YES), the information processing apparatus 400 retains the basic word as a longest match candidate in a storage device (step S2405) and goes to step S2406.

At step S2406, the information processing apparatus 400 determines whether the binary search is completed for the object character string (step S2406). For example, the information processing apparatus 400 determines whether the binary search is performed to the ending basic word. If the binary search is not completed (step S2406: NO), the information processing apparatus 400 goes to step S2402 to continue until the binary search is completed.

On the other hand, if the binary search is completed for the object character string (step S2406: YES), the information processing apparatus 400 determines whether a c-th character is the ending character of the object file Fi (step S2407). If the c-th character is the ending character of the object file Fi (step S2407: YES), the information processing apparatus 400 goes to step S2410. On the other hand, if the c-th character is not the ending character of the object file Fi (step S2407: NO), the information processing apparatus 400 determines whether c>cmax is satisfied (step S2408). A preset value is denoted by cmax, thereby setting the upper limit number of characters of the object character string.

If c>cmax is not satisfied (step S2408: NO), the information processing apparatus 400 increments c (step S2409) and returns to step S2402. On the other hand, if c>cmax is satisfied (step S2408: YES), the information processing apparatus 400 determines whether a longest match candidate exists (step S2410). For example, the information processing apparatus 400 determines whether at least one longest match candidate is retained in a memory at step S2405.

If the longest match candidates exist (step S2410: YES), the information processing apparatus 400 determines the longest character string of the longest match candidates as the longest matching basic word (step S2411). The information processing apparatus 400 goes to step S2202. On the other hand, if no longest match candidate exists at step S2410 (step S2410: NO), the information processing apparatus 400 goes to step S2202. As a result, the longest match search process (step S2201) is terminated. With this longest match search process (step S2201), the longest character string of the perfectly matching character strings can be found as the basic word out of the basic words within the basic word structure.

<Map Assignment Number Determination Process (Step S1802)>

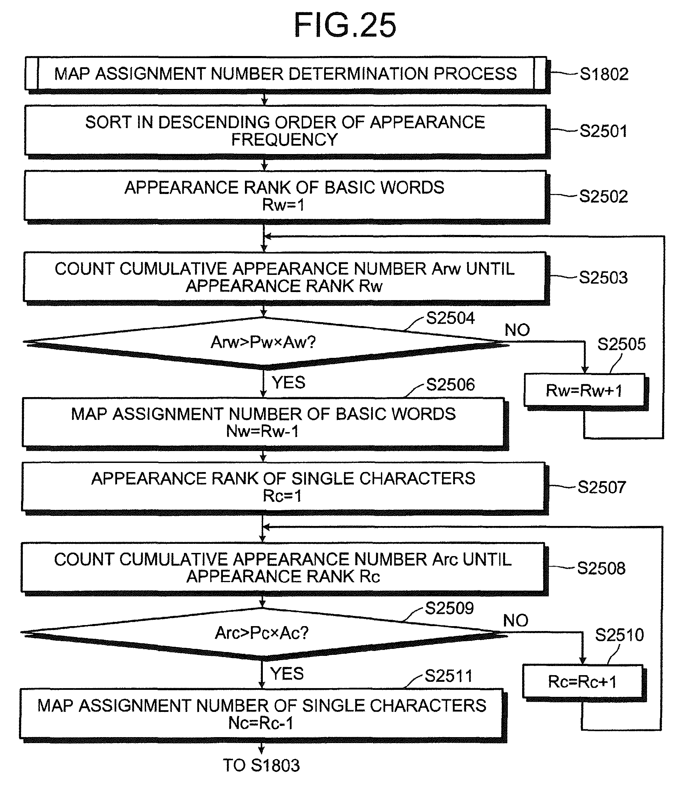

FIG. 25 is a flowchart of the map assignment number determination process (step S1802) depicted in FIG. 18. First, the information processing apparatus 400 sorts in descending order of appearance frequency the basic word appearance frequency tabulation table 2300 indicating the appearance frequency of each basic words and the character appearance frequency tabulation table 2100 indicating the appearance frequency of each single character acquired from the tabulation process (step S1801) (step S2501). The information processing apparatus 400 refers to the sorted basic word appearance frequency tabulation table 2300 to set an appearance rank Rw of the basic words to Rw=1 (step S2502) and counts the cumulative appearance number Arw until the appearance rank Rw (step S2503). The information processing apparatus 400 determines whether the following Equation (1) is satisfied (step S2504).
$$Arw > Pw \times Aw \qquad (1)$$

where Aw is the total number of appearances of the tabulated basic words.

If Equation (1) is not satisfied (step S2504: NO), the information processing apparatus 400 increments the appearance rank Rw (step S2505) and returns to step S2503. Therefore, the appearance rank Rw is continuously lowered until Equation (1) is satisfied.

If Equation (1) is satisfied (step S2504: YES), the information processing apparatus 400 sets a map assignment number Nw of the basic words to Nw=Rw-1 (step S2506). The map assignment number Nw is the number of basic words assigned to the basic word appearance map generated in the map creation process (step S1805) and means the number of records (lines) of the basic word appearance map.

The information processing apparatus 400 sets an appearance rank Rc of the single characters to Rc=1 (step S2507) and counts the cumulative appearance number Arc until the appearance rank Rc (step S2508). The information processing apparatus 400 determines whether the following Equation (2) is satisfied (step S2509).
$$Arc > Pc \times Ac \qquad (2)$$

where Ac is the total number of appearances of the tabulated single characters.

If Equation (2) is not satisfied (step S2509: NO), the information processing apparatus 400 increments the appearance rank Rc (step S2510) and returns to step S2508. Therefore, the appearance rank Rc is continuously lowered until Equation (2) is satisfied.

If Equation (2) is satisfied (step S2509: YES), the information processing apparatus 400 sets a map assignment number Nc of the single characters to Nc=Rc-1 (step S2511). The map assignment number Nc is the number of specific single characters assigned to the specific single character appearance map generated in the map creation process (step S1805) and means the number of records (lines) of the specific single character appearance map. The information processing apparatus 400 then goes to the re-tabulation process (step S1803) and terminates the map assignment number determination process (step S1802).

With the map assignment number determination process (step S1802), the basic word appearance map can be generated for the number of the basic words corresponding to the target appearance rate Pw in the map creation process (step S1805). Therefore, since it is not necessary to assign all the basic words to the map and the assignment is determined according to the target appearance rate Pw, the map size can be optimized.

For the single characters, the compression code map M of specific single characters can be generated for the number of the single characters corresponding to the target appearance rate Pc in the map creation process (step S1805). Therefore, since it is not necessary to assign all the single characters to the map and the assignment is determined according to the target appearance rate Pc, the map size can be optimized.

<Re-Tabulation Process (Step S1803)>

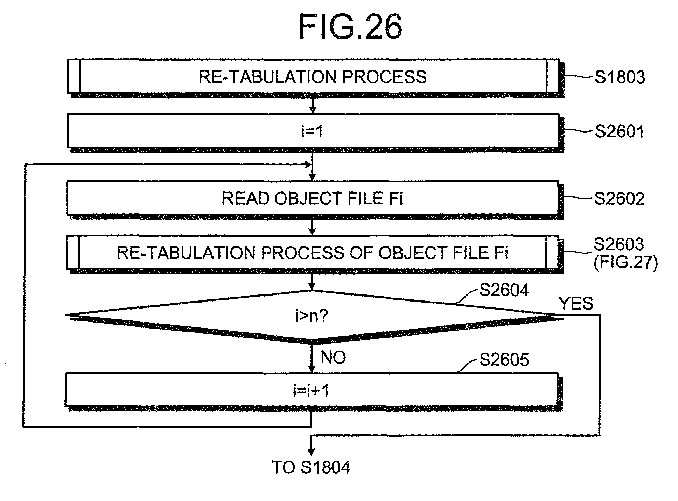

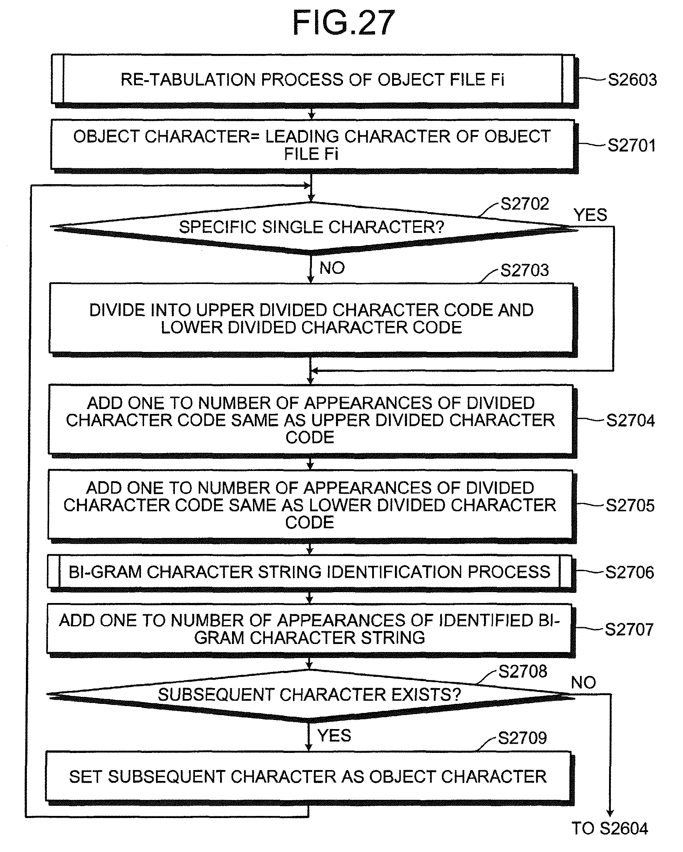

FIG. 26 is a flowchart of the re-tabulation process (step S1803) depicted in FIG. 18. First, the information processing apparatus 400 sets the file number i to i=1 (step S2601) and reads the object file Fi (step S2602). The information processing apparatus 400 executes the re-tabulation process of the object file Fi (step S2603). Details of the re-tabulation process of the object file Fi (step S2603) will be described with reference to FIG. 27. Subsequently, the information processing apparatus 400 determines whether the file number i satisfies i>n (where n is the total number of the object files F1 to Fn) (step S2604).

If i>n is not satisfied (step S2604: NO), the information processing apparatus 400 increments i (step S2605) and returns to step S2602. On the other hand, if i>n is satisfied (step S2604: YES), the information processing apparatus 400 goes to the Huffman tree generation process (step S1804) depicted in FIG. 18 and terminates the re-tabulation process (step S1803). With this re-tabulation process (step S1803), the re-tabulation process of the object file Fi (step S2603) can be executed for each of the object files Fi.

<Re-Tabulation Process of Object File Fi (Step S2603)>

FIG. 27 is a flowchart of the re-tabulation process of the object file Fi (step S2603). First, the information processing apparatus 400 defines the leading character of the object file Fi as the object character (step S2701) and determines whether the object character is a specific single character (step S2702). If the object character is a specific single character (step S2702: YES), the information processing apparatus 400 goes to step S2704 without dividing the character.

On the other hand, if the object character is not a specific single character (step S2702: NO), the information processing apparatus 400 divides the character code of the object character into the upper divided character code and the lower divided character code (step S2703). The information processing apparatus 400 goes to step S2704.

At step S2704, the information processing apparatus 400 adds one to the number of appearances of the same divided character code as the upper divided character code acquired at step S2703 in an upper divided character code appearance frequency tabulation table (step S2704).

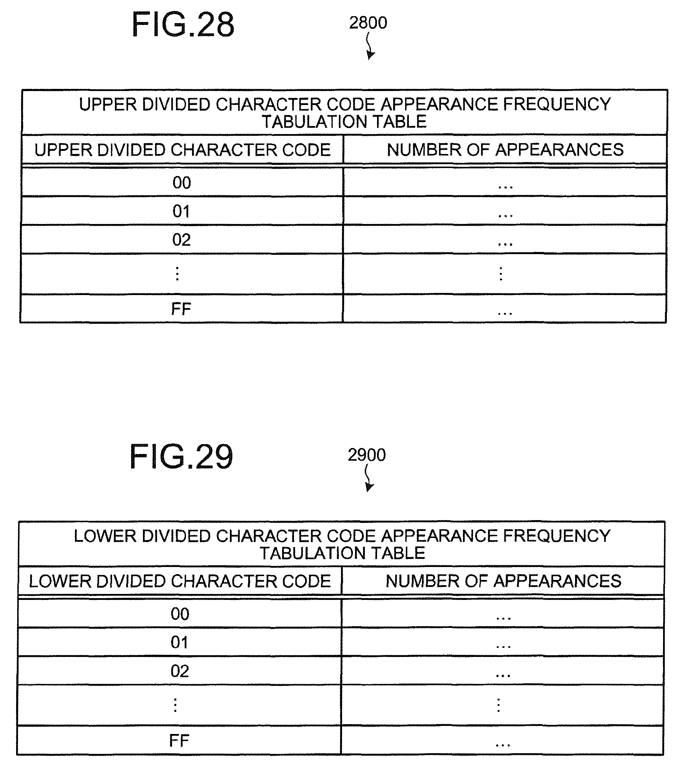

FIG. 28 is a diagram of the upper divided character code appearance frequency tabulation table. An upper divided character code appearance frequency tabulation table 2800 is stored in the storage device such as the RAM 203 and the magnetic disc 205 and the number of appearances is incremented by one each time a corresponding upper divided character code appears.

In FIG. 27, the information processing apparatus 400 adds one to the number of appearances of the same divided character code as the lower divided character code acquired at step S2703 in a lower divided character code appearance frequency tabulation table (step S2705).

FIG. 29 is a diagram of the lower divided character code appearance frequency tabulation table. An lower divided character code appearance frequency tabulation table 2900 is stored in the storage device such as the RAM 203 or the magnetic disc 205 and the number of appearances is incremented by one each time a corresponding lower divided character code appears.

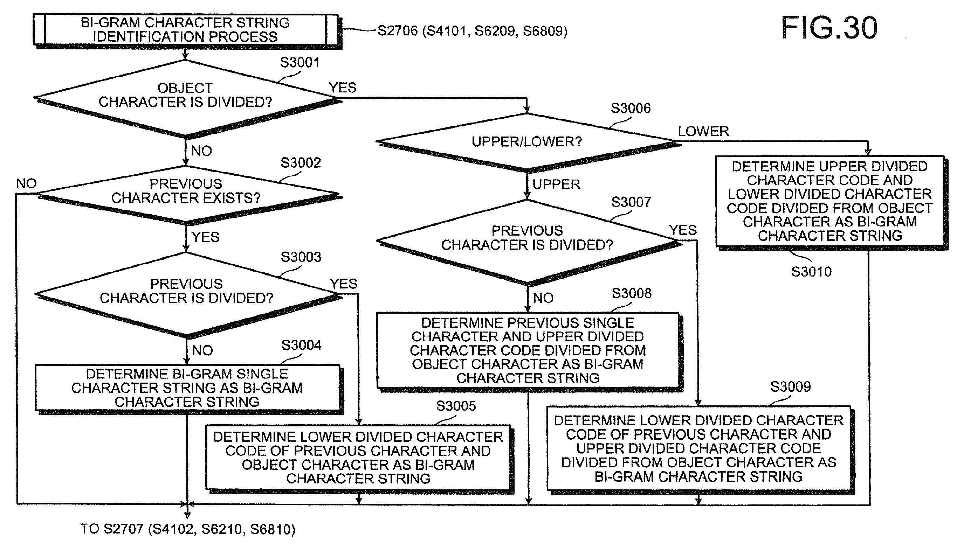

In FIG. 27, the information processing apparatus 400 executes a bi-gram character string identification process (step S2706). In the bi-gram character string identification process (step S2706), a bi-gram character string starting from the object character is identified. Details of the bi-gram character string identification process (step S2706) will be described with reference to FIG. 30.

The information processing apparatus 400 adds one to the number of appearances of the bi-gram character string identified in the bi-gram character string identification process (step S2706) in a bi-gram character string appearance frequency tabulation table (step S2707).

FIG. 30 is a flowchart of the bi-gram character string identification process (step S2706) depicted in FIG. 27. First, for the object character, the information processing apparatus 400 determines whether the object character is divided (step S3001). In other words, the information processing apparatus 400 determines whether the object character is a divided character code. If not divided (step S3001: NO), i.e., in the case of a single character, the information processing apparatus 400 determines whether the previous character exists (step S3002).

If the previous character exists (step S3002: YES), the information processing apparatus 400 determines whether the previous character is divided (step S3003). In other words, the information processing apparatus 400 determines whether the previous character is a divided character code. If not divided (step S3003:

NO), i.e., in the case of a single character, the information processing apparatus 400 determines a character string consisting of the previous single character before the object character and the object character (single character) as a bi-gram character string (step S3004). The information processing apparatus 400 goes to step S2707.

On the other hand, at step S3003, if the previous character is divided (step S3003: YES), i.e., in the case of a divided character code, the divided character code, i.e., the previous character, is a lower divided character code. Therefore, the information processing apparatus 400 determines a character string consisting of the lower divided character code, which is the previous character, and the object character as a bi-gram character string (step S3005). The information processing apparatus 400 goes to step S2707.

At step S3002, if no previous character exists (step S3002: NO), only the object character is left and, therefore, the information processing apparatus 400 goes to step S2707 without determining a bi-gram character string.

At step S3001, if the object character is divided (step S3001: YES), i.e., in the case of a divided character code, the information processing apparatus 400 determines whether the divided character code is an upper divided character code or a lower divided character code (step S3006).

In the case of the upper divided character code (step S3006: UPPER), the information processing apparatus 400 determines whether the previous character is divided (step S3007). In other words, it is determined whether the previous character is a divided character code. If not divided (step S3007: NO), i.e., in the case of a single character, the information processing apparatus 400 determines a character string consisting of the previous single character before the object character and the upper divided character code divided from the object character as a bi-gram character string (step S3008). The information processing apparatus 400 goes to step S2707.

On the other hand, at step S3007, if the previous character is divided (step S3007: YES), i.e., in the case of a divided character code, the divided character code, i.e., the previous character, is a lower divided character code. Therefore, the information processing apparatus 400 determines a character string consisting of the lower divided character code, which is the previous character, and the upper divided character code divided from the object character as a bi-gram character string (step S3009). The information processing apparatus 400 goes to step S2707.

At step S3006, in the case of the lower divided character code (step S3006: LOWER), the information processing apparatus 400 determines a character string consisting of the upper divided character code and the lower divided character code divided from the object character as a bi-gram character string (step S3010). The information processing apparatus 400 goes to step S2707.

With the bi-gram character string identification process (step S2706), a bi-gram character string can be identified even if the object character is divided. Since the bi-gram character strings are identified as characters are shifted one-by-one, the map can simultaneously be generated in parallel with the compression code map M of basic words and the compression code map M of specific single characters.

With the information generation as described above, since the numbers of basic words and single characters associated with the map creation are limited by the target appearance rates Pw and Pc, wasteful map creation is eliminated, and the acceleration of the map creation and the optimization of the map size can be realized at the same time. The multiple types of maps can simultaneously be created in parallel by shifting characters one-by-one, and the creation of the multiple types of maps used in highly accurate search can be made more efficient.

FIG. 31 is a diagram of the bi-gram character string appearance frequency tabulation table. A bi-gram character string appearance frequency tabulation table 3100 is stored in the storage device such as the RAM 203 and the magnetic disc 205 and the number of appearances is incremented by one each time a corresponding bi-gram character string appears.

Subsequently, the information processing apparatus 400 determines whether the subsequent character of the object character exists in the object file Fi (step S2708), and if the subsequent character exists (step S2708: YES), the information processing apparatus 400 sets the subsequent character as the object character (step S2709) and returns to step S2702. On the other hand, if no subsequent character exists (step S2708: NO), the information processing apparatus 400 terminates the re-tabulation process of the object file Fi (step S2603) and goes to step S2604.

As a result, the numbers of appearances of the upper divided character codes, the lower divided character codes, and the bi-gram character strings present in the object files Fi can be tabulated for each of the object files Fi.

<Huffman Tree Generation Process (Step S1804)>

FIG. 32 is a flowchart of the Huffman tree generation process (step S1804) depicted in FIG. 18. In FIG. 32, the information processing apparatus 400 determines the upper limit length N of the compression code length (step S3201). The information processing apparatus 400 then executes a correction process (step S3202). The correction process is a process of correcting the occurrence probability and the compression code length of each character data by using the upper limit length N of the compression code length as described with reference to FIGs. 8 to 10.

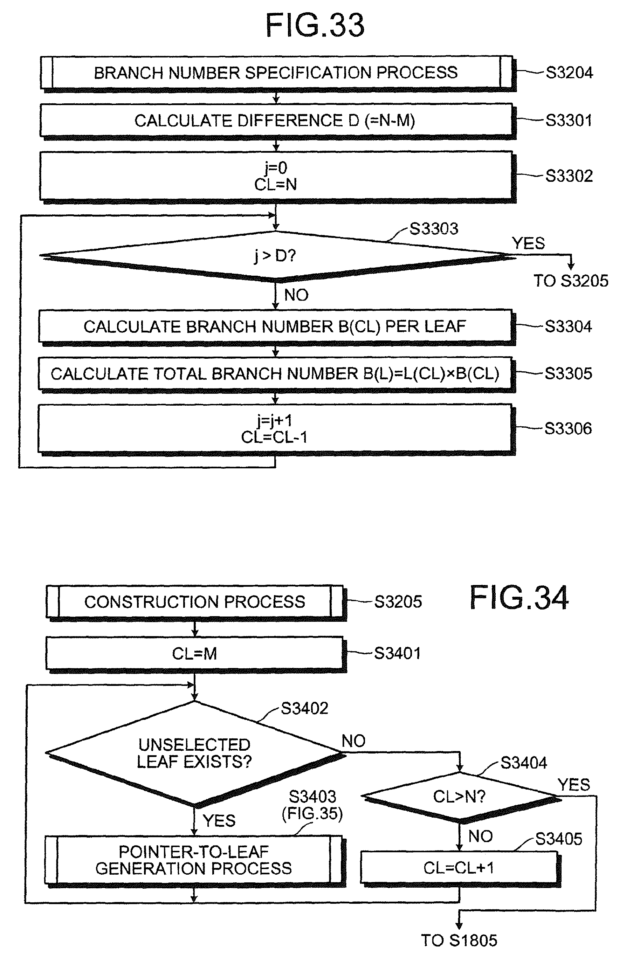

The information processing apparatus 400 generates a leaf structure for each character data (step S3203). The information processing apparatus 400 executes a branch number specification process (step S3204). In the branch number specification process (step S3204), the number of branches per leaf is specified for each compression code length. Details of the branch number specification process (step S3204) will be described with reference to FIG. 33.

The information processing apparatus 400 executes a construction process (step S3205). Since the number of branches of each leaf structure is specified by the branch number specification process (step S3204), the information processing apparatus 400 first generates pointers to a leaf to the number of branches for each leaf structure. The information processing apparatus 400 integrates the generated pointers to leaves for the leaf structures to form a root structure. As a result, the $2^N$-branch nodeless Huffman tree H is generated. The generated $2^N$-branch nodeless Huffman tree H is stored in the storage device (such as the RAM 203 and the magnetic disc 205) in the information processing apparatus 400. The information processing apparatus 400 then goes to the map creation process (step S1805) of FIG. 18.

FIG. 33 is a flowchart of the branch number specification process (step S3204) depicted in FIG. 32. First, the information processing apparatus 400 calculates a difference D (=N-M) between a maximum compression code length CLmax (=N) and a minimum compression code length CLmin (=M) (step S3301). For example, in the case of N=11, M=6 is known by reference to FIG. 9. Therefore, D=5 is obtained.

The information processing apparatus 400 sets a variable j of an exponent of 2 to j=0 and sets a variable CL of compression code length to CL=N (step S3302). The information processing apparatus 400 determines whether j>D is satisfied (step S3303). If j>D is not satisfied (step S3303: NO), the information processing apparatus 400 calculates the branch number b(CL) per leaf at the compression code length CL (step S3304). The branch number b(CL) per leaf at the compression code length CL is calculated from $b(CL)=2^j$. For example, since j=0 results in the compression code length CL=N=11, the branch number b(11) per leaf at the compression code length of 11 bits is $b(11)=2^j=2^0=1$.

The information processing apparatus 400 calculates the total branch number B(L) at the compression code length CL (step S3305). The total branch number B(L) at the compression code length CL is calculated by $B(L)=L(CL) \times b(CL)$. L(CL) is the number of leaves (number of types of character data) at the compression code length CL. For example, since j=0 results in the compression code length CL=N=11, the total branch number B(L) at the compression code length of 11 bits is $1216 \times 2^0=1216$.

Subsequently, the information processing apparatus 400 increments j and decrements the compression code length CL (step S3306) and returns to step S3303 to determine whether j after the increment satisfies j>D. In the case of N=11, j=D results in j=D=5 and, as a result, CL=M=6 is obtained. Therefore, at step S3304, the branch number b(6) per leaf at the compression code length CL (5 bits) is $b(6)=2^6=64$. Similarly, the total branch number B(L) is $B(6)=0 \times 2^6=0$. If j>D is satisfied (step S3303: YES), the information processing apparatus 400 goes to the construction process (step S3205).

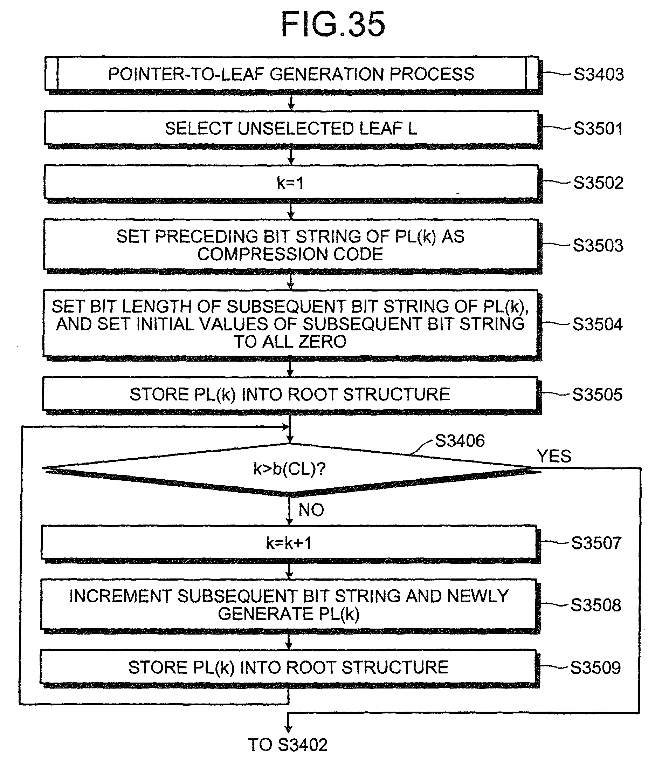

FIG. 34 is a flowchart of the construction process (step S3205) depicted in FIG. 32. The information processing apparatus 400 sets the compression code length CL to CL=CLmin=M (step S3401). The information processing apparatus 400 determines whether an unselected leaf exists at the compression code length CL (step S3402). If an unselected leaf exists (step S3402: YES), the information processing apparatus 400 executes a pointer-to-leaf generation process (step S3403) and returns to step S3402. In the pointer-to-leaf generation process (step S3403), pointers to a leaf are generated to the number of branches corresponding to the compression code length CL for each leaf structure. Details of the pointer-to-leaf generation process (step S3403) will be described with reference to FIG. 35.

On the other hand, if no unselected leaf exists at step S3402 (step S3402: NO), the information processing apparatus 400 determines whether CL>N is satisfied (step S3404). If CL>N is not satisfied (step S3404: NO), the information processing apparatus 400 increments CL (step S3405) and returns to step S3402. On the other hand, if CL>N is satisfied (step S3404: YES), this means that the $2^N$-branch nodeless Huffman tree H is constructed, and the information processing apparatus 400 goes to step S1805. The information in the first to fifth areas is stored in this construction process (step S3205).

FIG. 35 is a flowchart of the pointer-to-leaf generation process (step S3403) depicted in FIG. 34. First, the information processing apparatus 400 selects an unselected leaf L (step S3501) and sets a number k of pointers to the selected leaf to k=1 (step S3502). The information processing apparatus 400 sets a preceding bit string of a pointer PL(k) to the selected leaf as the compression code of the selected leaf (step S3503). For example, in the case of the upper limit length N=11, if the selected leaf is the leaf structure of the character data "0", the compression code is "000000". Therefore, the preceding bit string of the pointer PL(k) to the selected leaf is also "000000".

The information processing apparatus 400 sets a bit length of the subsequent bit string of the pointer PL(k) to the selected leaf to a difference acquired by subtracting the compression code length CL of the selected leaf from the maximum compression code length N and sets initial values of the subsequent bit string to all zero (step S3504). For example, if the selected leaf is the leaf structure of the character data "0", the compression code length CL is 6 bits and, therefore, the bit length of the subsequent bit string is 5 bits (=11-6). In the case of k=1, the subsequent bit string is set to all zero and, therefore, the subsequent bit string is 5-bit "00000".

The information processing apparatus 400 stores the pointer PL(k) to the selected leaf into the root structure (step S3505). Subsequently, the information processing apparatus 400 determines whether k>b(CL) is satisfied (step S3506), where b(CL) is the number of branches per leaf at the compression code length CL of the selected leaf. If k>b(CL) is not satisfied (step S3506: NO), pointers to a leaf are generated for not all the branches assigned to the selected leaf and, therefore, the information processing apparatus 400 increments k (step S3507).

The information processing apparatus 400 increments the current subsequent bit string and couples the incremented subsequent bit string to the end of the preceding bit string to newly generate the pointer PL(k) to the selected leaf (step S3508). The information processing apparatus 400 stores the pointer PL(k) to the selected leaf into the root structure (step S3509) and returns to step S3506. By repeating step S3506 to S3509, the pointers to a leaf are generated to the number of branches per leaf. At step S3506, if k>b(CL) is satisfied (step S3506: YES), the information processing apparatus 400 goes to step S3402.

Since the maximum branch number $2^N$ of the $2^N$-branch nodeless Huffman tree H can be set to the optimum number depending on the number of types of character data appearing in the object file group Fs as described above, the size of the $2^N$-branch nodeless Huffman tree H can be made appropriate. According to this embodiment, even if the upper limit length N is not an integer multiple of 2 to 4 (e.g., the upper limit length N=11 or 13), the $2^N$-branch nodeless Huffman tree H can be generated with good compression efficiency.

Subsequently, the information processing apparatus 400 mutually correlates the leaf structures in the $2^N$-branch nodeless Huffman tree H with the basic word structure, the specific character code structure, and the divided character code structure by reference to the character data table of FIG. 10. For example, as described above, the leaf structures store the specific characters corresponding to the compression codes stored in the corresponding leaves, the divided character codes, and pointers to leaves and pointers to the basic words.

The information processing apparatus 400 stores a pointer to a leaf storing a corresponding compression code for each basic word of the basic word structure. The information processing apparatus 400 stores a pointer to a leaf storing a corresponding compression code for each specific character of the specific character code structure. The information processing apparatus 400 stores a pointer to a leaf storing a corresponding compression code for each divided character code of the divided character code structure.

<Map Creation Process (Step S1805)>

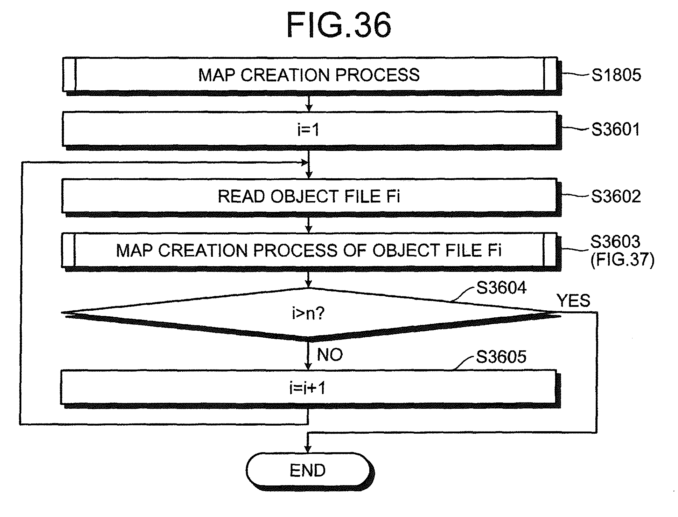

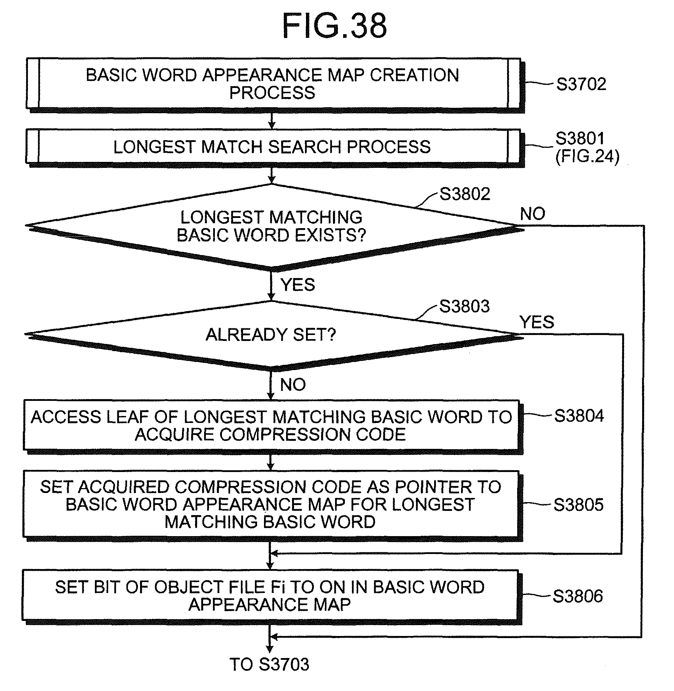

FIG. 36 is a flowchart of the map creation process (step S1805) depicted in FIG. 18. First, the information processing apparatus 400 sets the file number i to i=1 (step S3601) and reads the object file Fi (step S3602). The information processing apparatus 400 executes the map creation process of the object file Fi (step S3603). Details of the map creation process of the object file Fi (step S3603) will be described with reference to FIG. 38. Subsequently, the information processing apparatus 400 determines whether the file number i satisfies i>n (where n is the total number of the object files F1 to Fn) (step S3604).

If i>n is not satisfied (step S3604: NO), the information processing apparatus 400 increments i (step S3605) and returns to step S3602. On the other hand, if i>n is satisfied (step S3604: YES), the map creation process (step S1805) is terminated. With this map creation process (step S1505), the map creation process of the object file Fi (step S3603) can be executed for each of the object files Fi.

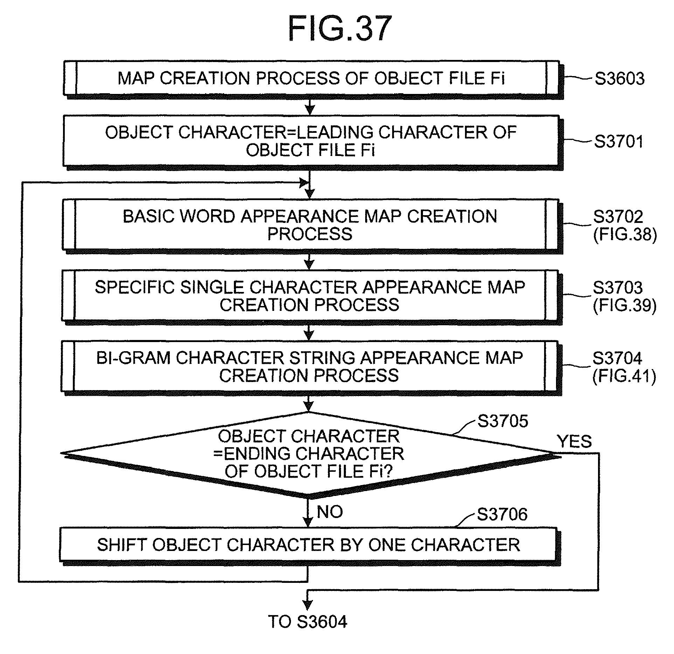

FIG. 37 is a flowchart of the map creation process of the object file Fi (step S3603) depicted in FIG. 36. First, the information processing apparatus 400 defines the leading character of the object file Fi as the object character (step S3701) and executes a basic word appearance map creation process (step S3702), a specific single character appearance map creation process (step S3703), and a bi-gram character string appearance map creation process (step S3704).

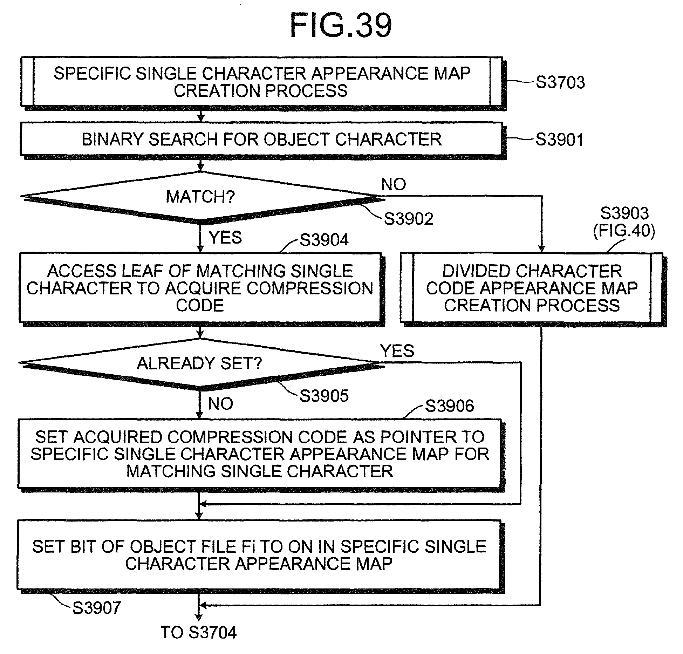

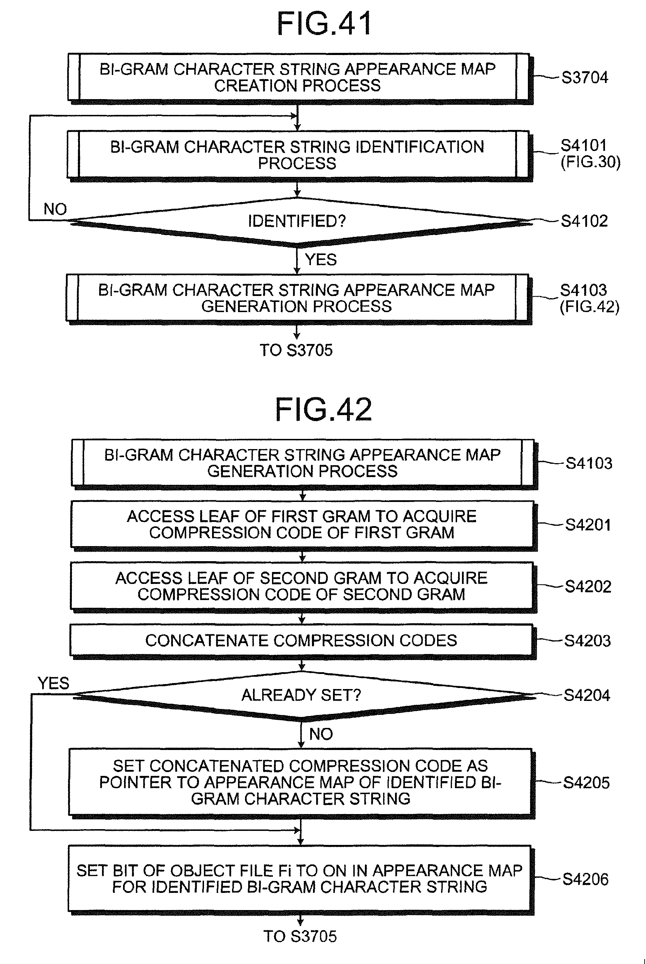

Details of the basic word appearance map creation process (step S3702) will be described with reference to FIG. 38. Details of the specific single character appearance map creation process (step S3703) will be described with reference to FIG. 39. Details of the bi-gram character string appearance map creation process (step S3704) will be described with reference to FIG. 41.

Subsequently, the information processing apparatus 400 determines whether the object character is the ending character of the object file Fi (step S3705). If the object character is not the ending character of the object file Fi (step S3705: NO), the information processing apparatus 400 shifts the object character by one character toward the end (step S3706) and returns to step S3702. On the other hand, if the object character is the ending character of the object file Fi (step S3705: YES), the information processing apparatus 400 goes to step S3604 and terminates the map creation process of the object file Fi (step S3603).

With this map creation process of the object file Fi (step S3603), the basic word appearance map, the specific single character appearance map, and the bi-gram character string appearance map can simultaneously be generated in parallel while the object character is shifted one-by-one.

FIG. 38 is a flowchart of the basic word appearance map creation process (step S3702) depicted in FIG. 37. First, the information processing apparatus 400 executes a longest match search process (step S3801). The longest match search process (step S3801) is the same as the longest match search process (step S2201) depicted in FIG. 22 and therefore will not be described.

The information processing apparatus 400 determines whether a longest matching basic word, i.e., a basic word exists (step S3802). If no longest matching basic word exists (step S3802: NO), the information processing apparatus 400 goes to the specific single character appearance map creation process (step S3703). On the other hand, if a longest matching basic word exists (step S3802: YES), the information processing apparatus 400 determines whether the basic word appearance map is already set in terms of the longest matching basic word (step S3803).

If already set (step S3803: YES), the information processing apparatus 400 goes to step S3806. On the other hand, if not already set (step S3803: NO), the information processing apparatus 400 accesses the leaf of the longest matching basic word in the $2^N$-branch nodeless Huffman tree H to acquire the compression code thereof (step S3804). The information processing apparatus 400 sets the acquired compression code as a pointer to the basic word appearance map for the longest matching basic word (step S3805) and goes to step S3806. At step S3806, the information processing apparatus 400 sets the bit of the object file Fi to ON in the basic word appearance map for the longest matching basic word (step S3806).

The information processing apparatus 400 then terminates the basic word appearance map creation process (step S3702) and goes to the specific single character appearance map creation process (step S3703). With this basic word appearance map creation process (step S3702), the map can be created with the longest matching basic word defined as a basic word for each object character.

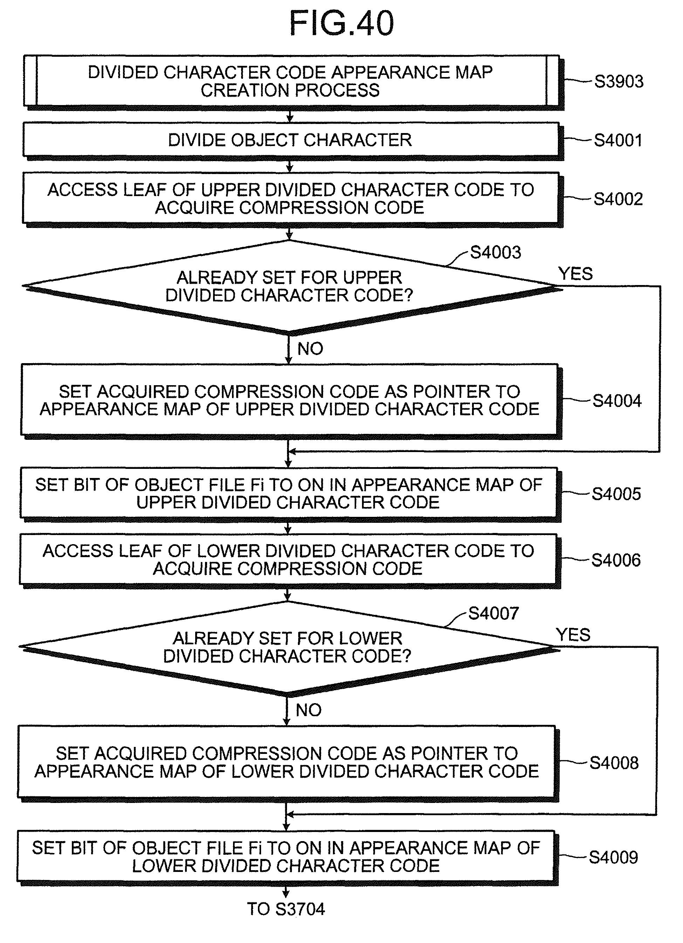

FIG. 39 is a flowchart of the specific single character appearance map creation process (step S3703) depicted in FIG. 37. First, the information processing apparatus 400 performs binary search of the specific single character structure for the object character (step S3901) and determines whether a match is found (S3902). If no matching single character exists (step S3902: NO), the information processing apparatus 400 executes a divided character code appearance map creation process (step S3903) and goes to the bi-gram character string appearance map creation process (step S3704). Details of the divided character code appearance map creation process (step S3903) will be described with reference to FIG. 40.

On the other hand, at step S3902, if a single character matching the object character exists as a result of the binary search (step S3902: YES), the information processing apparatus 400 accesses the leaf of the binary-searched single character in the $2^N$-branch nodeless Huffman tree H to acquire the compression code thereof (step S3904). The information processing apparatus 400 determines whether the specific single character appearance map is already set in terms of the acquired compression code (step S3905). If already set (step S3905: YES), the information processing apparatus 400 goes to step S3907.

On the other hand, if not already set (step S3905: NO), the information processing apparatus 400 sets the acquired compression code as a pointer to the specific single character appearance map for the binary-searched single character (step S3906) and goes to step S3907. At step S3907, the information processing apparatus 400 sets the bit of the object file Fi to ON in the specific single character appearance map for the binary-searched single character (step S3907).

The information processing apparatus 400 then terminates the specific single character appearance map creation process (step S3703) and goes to the bi-gram character string appearance map generation process (step S3704). With this specific single character appearance map creation process (step S3703), the map can be created with the binary-searched object character defined as a specific single character.

FIG. 40 is a flowchart of the divided character code appearance map creation process (step S3903) depicted in FIG. 39. First, the information processing apparatus 400 divides the object character (step S4001) and accesses the leaf of the upper divided character code in the $2^N$-branch nodeless Huffman tree H to acquire the compression code (step S4002). The information processing apparatus 400 determines whether the upper divided character code appearance map is already set in terms of the acquired compression code (step S4003).

If already set (step S4003: YES), the information processing apparatus 400 goes to step S4005. On the other hand, if not already set (step S4003: NO), the information processing apparatus 400 sets the acquired compression code as a pointer to the appearance map of the upper divided character code (step S4004) and goes to step S4005. At step S4005, the information processing apparatus 400 sets the bit of the object file Fi to ON in the appearance map of the upper divided character code divided from the object character (step S4005).

The information processing apparatus 400 accesses the leaf of the lower divided character code in the $2^N$-branch nodeless Huffman tree H to acquire the compression code (step S4006). The information processing apparatus 400 determines whether the appearance map of the lower divided character code is already set in terms of the acquired compression code (step S4007). If already set (step S4007: YES), the information processing apparatus 400 goes to step S4009.

On the other hand, if not already set (step S4007: NO), the information processing apparatus 400 sets the acquired compression code as a pointer to the appearance map of the lower divided character code (step S4008) and goes to step S4009. At step S4009, the information processing apparatus 400 sets the bit of the object file Fi to ON in the appearance map of the lower divided character code divided from the object character (step S4009).

The information processing apparatus 400 then terminates the divided character code appearance map creation process (step S4003) and goes to the bi-gram character string appearance map creation process (step S3704). With this divided character code appearance map creation process (step S4003), single characters ranked lower than the rank corresponding to the target appearance rate Pc cause a large number of OFF bits to appear due to lower appearance frequency.

However, by excluding the single characters ranked lower than the rank corresponding to the target appearance rate Pc from the objects of the generation of the appearance maps of the specific single characters, the map size of the compression code map M of the specific single characters can be optimized. By dividing a character, the single characters ranked lower than the rank corresponding to the target appearance rate Pc are set in maps having the fixed map sizes such as the compression code map M of the upper divided character codes and the compression code map M of the lower divided character codes. Therefore, the map sizes can be prevented from increasing and memory saving can be achieved regardless of an appearance rate set as the target appearance rate Pc.

FIG. 41 is a flowchart of the bi-gram character string appearance map creation process (step S3704) depicted in FIG. 37. In FIG. 41, first, the information processing apparatus 400 executes a bi-gram character string identification process (step S4101). The bi-gram character string identification process (step S4101) is the same as the bi-gram character string identification process (step S2706) depicted in FIG. 30 and therefore will not be described.

The information processing apparatus 400 determines whether a bi-gram character string is identified in the bi-gram character string identification process (step S4101) (step S4102). If not identified (step S4102: NO), the information processing apparatus 400 goes to step S3705 of FIG. 37.

On the other hand, if identified (step S4102: YES), the information processing apparatus 400 executes a bi-gram character string appearance map generation process (step S4103) and goes to step S3705.

FIG. 42 is a flowchart of the bi-gram character string appearance map generation process (step S4103). In FIG. 42, first, the information processing apparatus 400 accesses a leaf of the $2^N$-branch nodeless Huffman tree H for a first gram (specific single character or divided character code) of the bi-gram character string identified in the bi-gram character string identification process (step S4101) of FIG. 41 to acquire a compression code (step S4201). The information processing apparatus 400 also accesses a leaf of the $2^N$-branch nodeless Huffman tree H for a second gram (specific single character or divided character code) to acquire a compression code (step S4202).

The information processing apparatus 400 concatenates the compression code of the first gram and the compression code of the second gram (step S4203). The information processing apparatus 400 determines whether an appearance map having the concatenated compression code as a pointer is already set (step S4204). If already set (step S4204: YES), the information processing apparatus 400 goes to step S4206.

On the other hand, if not already set (step S4204: NO), the information processing apparatus 400 sets the concatenated compression code as the pointer to the appearance map of the identified bi-gram character string (step S4205). At step S4206, the information processing apparatus 400 sets the bit of the object file Fi to ON in the appearance map for the identified bi-gram character string (step S4206).

Thus, the bi-gram character string appearance map generation process (step S4103) is completed, and the information processing apparatus 400 goes to step S3705. With this bi-gram character string appearance map generation process (S4203), the concatenated compression code of the bi-gram character strings can directly specify the bi-gram character string appearance map.

<Specific Example of Compression Process>

A specific example of the compression process of the object file Fi will be described. As described above, if the compression code map M is generated, an appearance map in the compression code map M can be pointed by a compression code string obtained by compressing the search character string. A specific example of the compression process is described in the following.

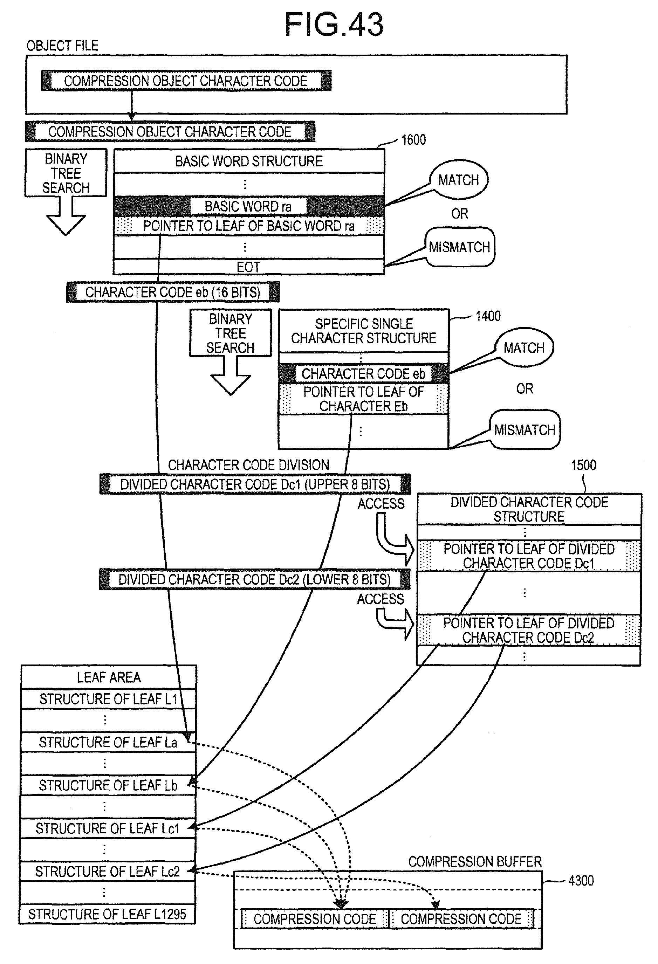

FIG. 43 is a diagram of a specific example of the compression process using a $2^N$-branch nodeless Huffman tree H. The information processing apparatus 400 acquires a compression object character code of a first character from the object file group Fs and retains a position on an object file Fi. The information processing apparatus 400 performs a binary tree search of the basic word structure 1600. Since a basic word is a character code string of two or more characters, if the compression object character code of the first character is hit, a character code of a second character is acquired as the compression object character code.

The character code of the second character is searched from the position where the compression object character code of the first character is hit. The binary tree search is repeatedly performed for a third character or later until a mismatching compression object character code appears. If a matching basic word ra ("a" is a number of a leaf) is found, a pointer to the leaf La correlated in the basic word structure 1600 is used to access a structure of the leaf La. The information processing apparatus 400 searches for the compression code of the basic word ra stored in the accessed structure of the leaf La and stores the compression code into a compression buffer 4300.

On the other hand, if a mismatching compression character code appears, the binary tree search of the basic word structure 1600 is terminated (proceeds to End Of Transmission (EOT)). The information processing apparatus 400 sets the compression object character code of the first character into a register again and performs the binary tree search of the specific single character structure 1400.

If a matching character code eb (b is a number of a leaf) is found, the information processing apparatus 400 uses a pointer to the leaf Lb to access a structure of the leaf Lb. The information processing apparatus 400 searches for the compression code of the character code eb stored in the accessed structure of the leaf Lb and stores the compression code into the compression buffer 4300.

On the other hand, if no matching character code appears and the binary tree search is terminated, the compression object character code is not a specific single character code and, therefore, the information processing apparatus 400 divides the compression object character code into upper 8 bits and lower 8 bits. For the divided character code of the upper 8 bits, the information processing apparatus 400 performs a binary tree search of the divided character code structure 1500. If a matching divided character code Dc1 (c1 is a number of a leaf) is found, the information processing apparatus 400 uses a pointer to the leaf Lc1 to access a structure of the leaf Lc1. The information processing apparatus 400 searches for the compression code of the divided character code Dc1 stored in the accessed structure of the leaf Lc1 and stores the compression code into the compression buffer 4300.

For the divided character code of the lower 8 bits, the information processing apparatus 400 continues the binary tree search of the divided character code structure. If a matching divided character code Dc2 (c2 is a number of a leaf) is found, the information processing apparatus 400 uses a pointer to the leaf Lc2 to access a structure of the leaf Lc2. The information processing apparatus 400 searches for the compression code of the divided character code Dc2 stored in the accessed structure of the leaf Lc2 and stores the compression code into the compression buffer 4300. Thus, the object file Fi is compressed.

<Compression Process of Object File Group Fs>

The compression process of the object file group Fs by the first compressing unit 403 will be described.

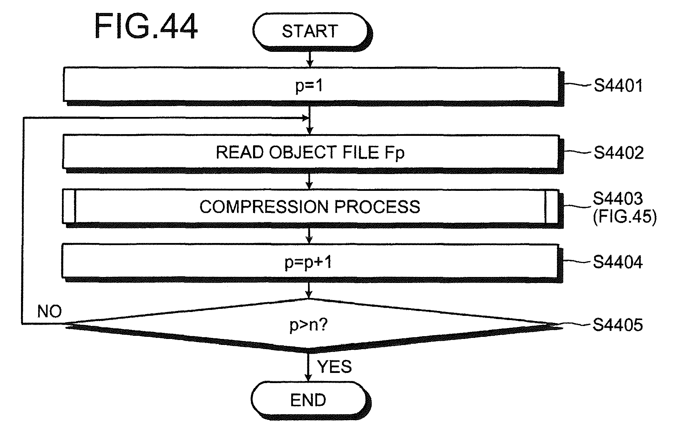

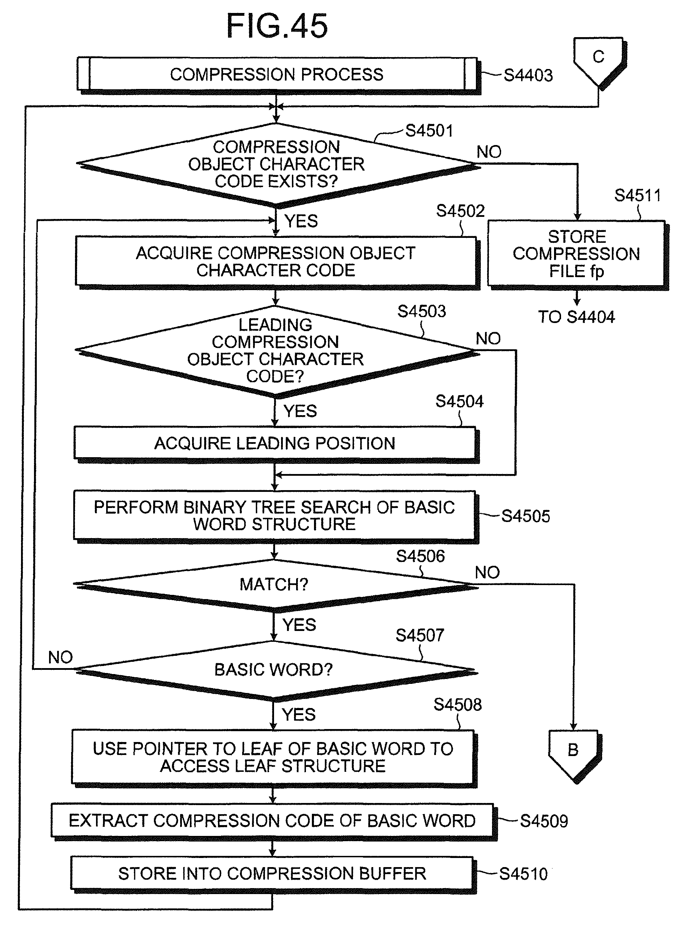

FIG. 44 is a flowchart of the compression process of the object file group Fs using the $2^N$-branch nodeless Huffman tree H by the first compressing unit 403. The information processing apparatus 400 sets the file number: p to p=1 (step S4401) and reads an object file Fp (step S4402). The information processing apparatus 400 executes the compression process (step S4403) and increments the file number: p (step S4404). Details of the compression process (step S4403) will be described with reference to FIG. 45.

The information processing apparatus 400 determines whether p>n is satisfied (step S4405), where n is the total number of the object files Fs. If p>n is not satisfied (step S4405: NO), the information processing apparatus 400 returns to step S4402. On the other hand, if p>n is satisfied (step S4405: YES), the information processing apparatus 400 terminates the file compression process of the object file group Fs.

FIG. 45 is a flowchart (part 1) of the compression process (step S4403) depicted in FIG. 44. In FIG. 45, the information processing apparatus 400 determines whether a compression object character code exists in the object file group Fs (step S4501). If existing (step S4501: YES), the information processing apparatus 400 acquires and sets the compression object character code in the register (step S4502). The information processing apparatus 400 determines whether the compression object character code is the leading compression object character code (step S4503).

The leading compression object character code is an uncompressed character code of a first character. If the code is the leading code (step S4503: YES), the information processing apparatus 400 acquires a pointer of the position (leading position) of the compression object character code on the object file group Fs (step S4504) and goes to step S4505. On the other hand, if the code is not the leading code (step S4503: NO), the information processing apparatus 400 goes to step S4505 without acquiring the leading position.

The information processing apparatus 400 performs the binary tree search of the basic word structure 1600 (step S4505). If the compression object character code matches (step S4506: YES), the information processing apparatus 400 determines whether a continuous matching character code string corresponds to (a character code string of) a basic word (step S4507). If not corresponding (step S4507: NO), the information processing apparatus 400 returns to step S4502 and acquires the subsequent character code as the compression object character code. In this case, since the subsequent character code is not the leading code, the leading position is not acquired.

On the other hand, at step S4507, if corresponding to a basic word (step S4507: YES), the information processing apparatus 400 uses a pointer to a leaf L# of the corresponding basic word to access a structure of the leaf L# (step S4508). The information processing apparatus 400 extracts the compression code of the basic word stored in the pointed structure of the leaf L# (step S4509).

Subsequently, the information processing apparatus 400 stores the extracted compression code into the compression buffer 4300 (step S4510) and returns to step S4501. This loop makes up a flow of the compression process of basic words. At step S4501, if no compression object character code exists (step S4501: NO), the information processing apparatus 400 performs file output from the compression buffer 4300 to store a compression file fp acquired by compressing an object file Fp (step S4511). The information processing apparatus 400 goes to step S4404. On the other hand, if not matching at step S4506 (step S4506: NO), the information processing apparatus 400 enters a loop of the compression process of 16-bit character codes.

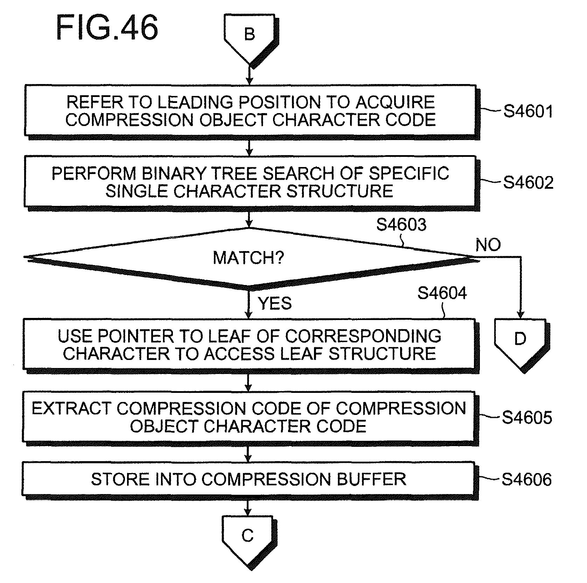

FIG. 46 is a flowchart (part 2) of the compression process (step S4403) depicted in FIG. 44. In FIG. 46, the information processing apparatus 400 refers to the pointer of the leading position acquired at step S4604 to acquire and set the compression object character code from the object file group Fs into the register (step S4601).

The information processing apparatus 400 performs the binary tree search of the specific single character structure 1400 for the compression object character code (step S4602). If matching (step S4603: YES), the information processing apparatus 400 uses a pointer to the leaf L# of the corresponding character to access the structure of the leaf L# (step S4604). The information processing apparatus 400 extracts the compression code of the compression object character code stored in the pointed structure of the leaf L# (step S4605).

Subsequently, the information processing apparatus 400 stores the compression code into the compression buffer 4300 (step S4606) and returns to step S4501. This loop makes up a flow of the compression process of 16-bit character codes. On the other hand, if no matching character code exists at step S4603 (step S4603: NO), the information processing apparatus 400 enters a loop of the compression process of divided character codes.

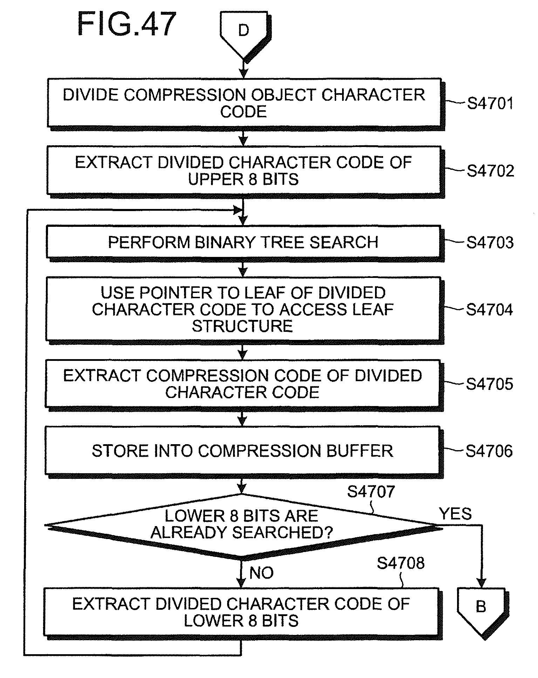

FIG. 47 is a flowchart (part 3) of the compression process (step S4403) depicted in FIG. 44. In FIG. 47, the information processing apparatus 400 divides the compression object character code into upper 8 bits and lower 8 bits (step S4701) and extracts the divided character code of the upper 8 bits (step S4702). The information processing apparatus 400 performs the binary tree search of the divided character code structure 1500 (step S4703).

The information processing apparatus 400 uses a pointer to the leaf L# of the searched divided character code to access the structure of the leaf L# (step S4704). The information processing apparatus 400 extracts the compression code of the divided character code stored in the pointed structure of the leaf L# (step S4705). Subsequently, the information processing apparatus 400 stores the compression code into the compression buffer 4300 (step S4706).

The information processing apparatus 400 determines whether the lower 8 bits are already searched (step S4707) and if not already searched (step S4707: NO), the information processing apparatus 400 extracts the divided character code of the lower 8 bits (step S4708) and executes steps S4703 to S4706. On the other hand, if the lower 8 bits are already searched (step S4707: YES), the information processing apparatus 400 returns to step S4701 and enters the loop of the compression process of basic words.

As described above, in the compression process using the $2^N$-branch nodeless Huffman tree H, it is not necessary to search toward the root because of the absence of inner nodes, and the character data stored in the pointed structure of the leaf L# may simply be extracted and written into the compression buffer 4300. Therefore, the compression process can be accelerated.

The structure of the leaf L# storing the compression object character code can immediately be identified from the basic word structure, the specific single character code structure, and the divided character code structure. Therefore, it is not necessary to search the leaves of the $2^N$-branch nodeless Huffman tree H and the compression process can be accelerated. By dividing a lower-order character code into an upper bit code and a lower bit code, nonspecific single characters can be compressed into compression codes of only 256 types of divided character codes. Therefore, the compression rate can be improved.

<Specific Example of Map Compression>

A specific example of map compression of the appearance maps in the compression code map M by the second compression unit 406 will be described. The second compressing unit 406 compresses an appearance map in a compression area and does not compress an appearance map in a non-compression area. The compression area corresponds to bit strings of appearance maps until the file number of $\alpha \times$(quotient of $n/\alpha$) when the file numbers 1 to n are assigned. In this equation, n is the total number of current object files. For example, in the case of $\alpha$=256 bits and the current object file number n=600, the quotient of $n/\alpha$ is two and, therefore, the bit strings of the appearance maps of the file number from 1 to $2\alpha$ make up the compression area. The bit strings of the file number from $(2\alpha+1)$ to n make up the non-compression area and are not compressed.

In the bit strings of the appearance maps, successive "0s" occur in a larger number of places in the bit strings as the total file number $\alpha$ increases. Conversely, for character data with higher appearance frequency, successive "1s" occur in a larger number of places. Therefore, an appearance rate area is set depending on an appearing rate of a character. The appearance rate area is a range of the appearance rate. The Huffman tree h for appearance map compression is assigned depending on the appearance rate area.

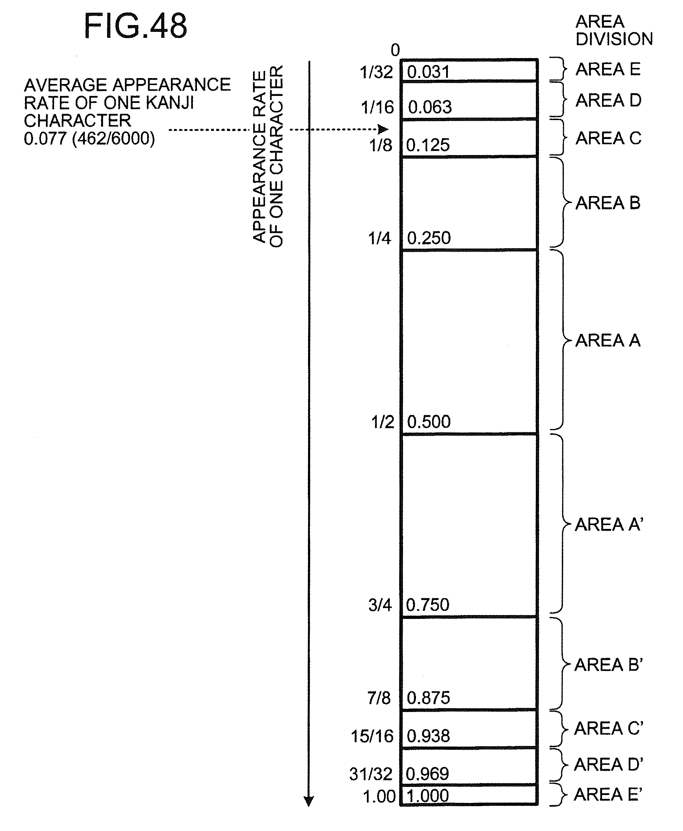

FIG. 48 is a diagram of relationship between the appearance rate and the appearance rate area. Assuming that the appearance rate ranges from 0 to 100%, as depicted in FIG. 48, an area can be divided into areas A to E and areas A' to E'. Therefore, the Huffman tree h for appearance map compression is assigned as a compression pattern depending on the appearance rate area specified by the areas A to E and the areas A' to E'.

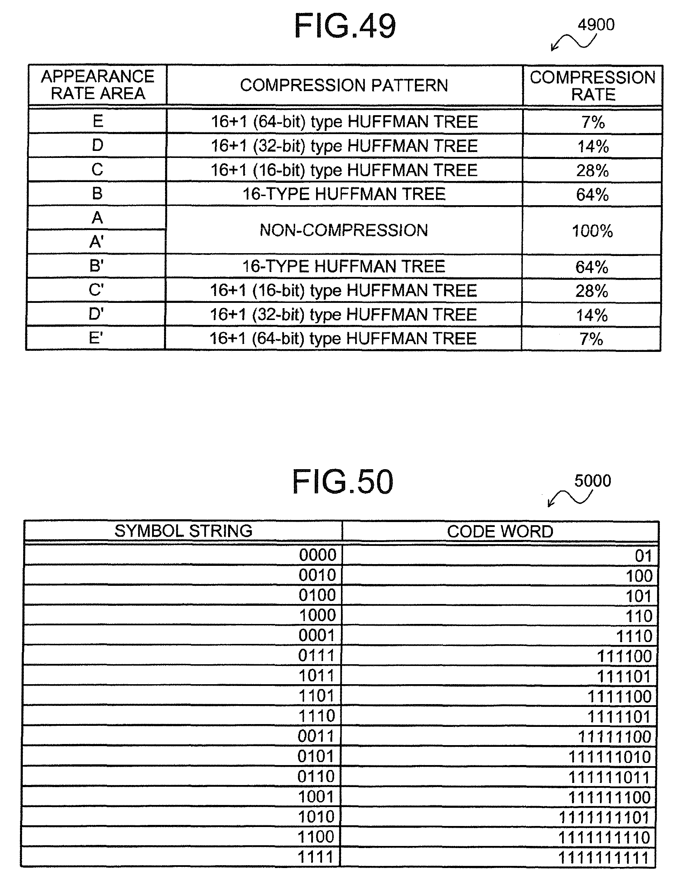

FIG. 49 is a diagram of a compression pattern table having compression patterns by appearance rate areas. Since the appearance rate is stored in the fifth area of the structure of the leaf L# as depicted in FIG. 13, the structure of the leaf L# is specified to specify a compression pattern by reference to a compression pattern table 4900. The areas A and A' are not compressed and therefore have no Huffman tree used as a compression pattern.

FIG. 50 is a diagram of a compression pattern in the case of the areas B and B'. A compression pattern 5000 is the Huffman tree h having 16 types of leaves.

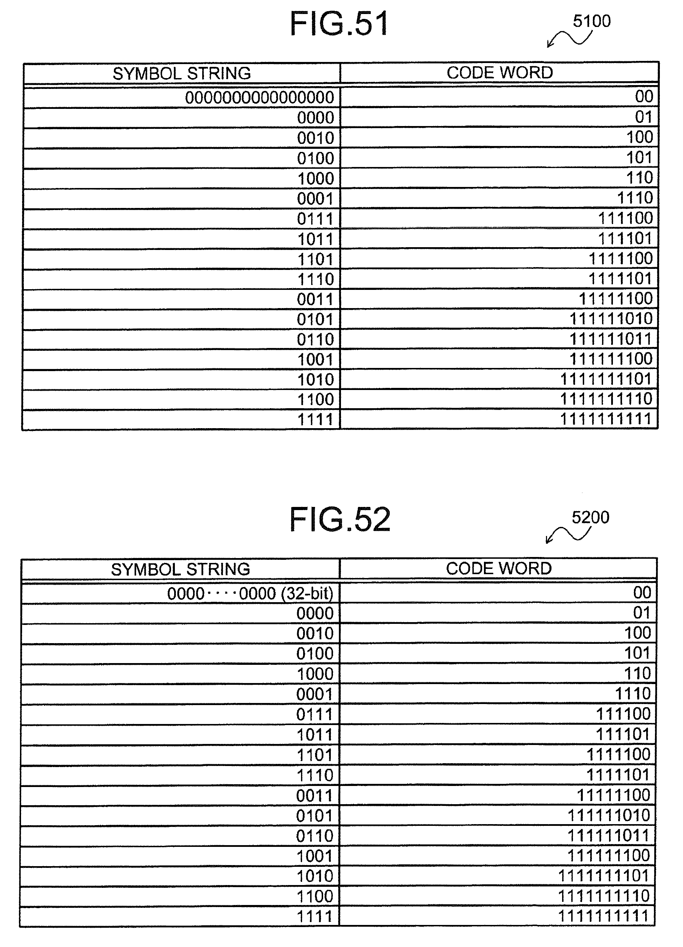

FIG. 51 is a diagram of a compression pattern in the case of the areas C and C'. A compression pattern 5100 is the Huffman tree h having 16+1 types of leaves. In the compression pattern 5100, successive "0s" or successive "1s" stochastically occur in a larger number of places as compared to the areas B and B'. Therefore, the bit string having a value of "0" continuing for 16 bits is assigned with a code word "00".

FIG. 52 is a diagram of a compression pattern in the case of the areas D and D'. A compression pattern 5200 is the Huffman tree having 16+1 types of leaves. In the compression pattern 5200, successive "0s" or successive "1s" stochastically occur in a larger number of places as compared to the areas C and C'. Therefore, the bit string having a value of "0" continuing for 32 bits is assigned with a code word "00".

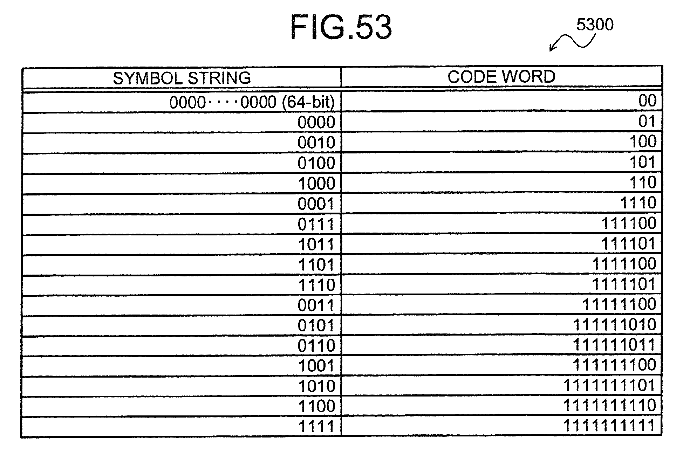

FIG. 53 is a diagram of a compression pattern in the case of the areas E and E'. A compression pattern 5300 is the Huffman tree h having 16+1 types of leaves. In the compression pattern 5300, successive "0s" or successive "1s" stochastically occur in a larger number of places as compared to the areas D and D'. Therefore, the bit string having a value of "0" continuing for 64 bits is assigned with a code word "00". Since the number of successive "0s" indicating the absence of a character code increases depending on the appearance rate area as described above, the compression efficiency of the compression code map M can be improved depending on the appearance rate of a character code.

<Compression Code Map Compression Process>

A compression code map compression process will be described. The compression code map compression process is a process of compressing the bit string in the compression area. For example, the compression pattern table 4900 depicted in FIG. 49 and the compression patterns 5000 to 5300 (Huffman trees h) depicted in FIGs. 50 to 53 are used for compressing the bit string in the compression area of the compression code map M. A compression code map compression process will hereinafter be described.

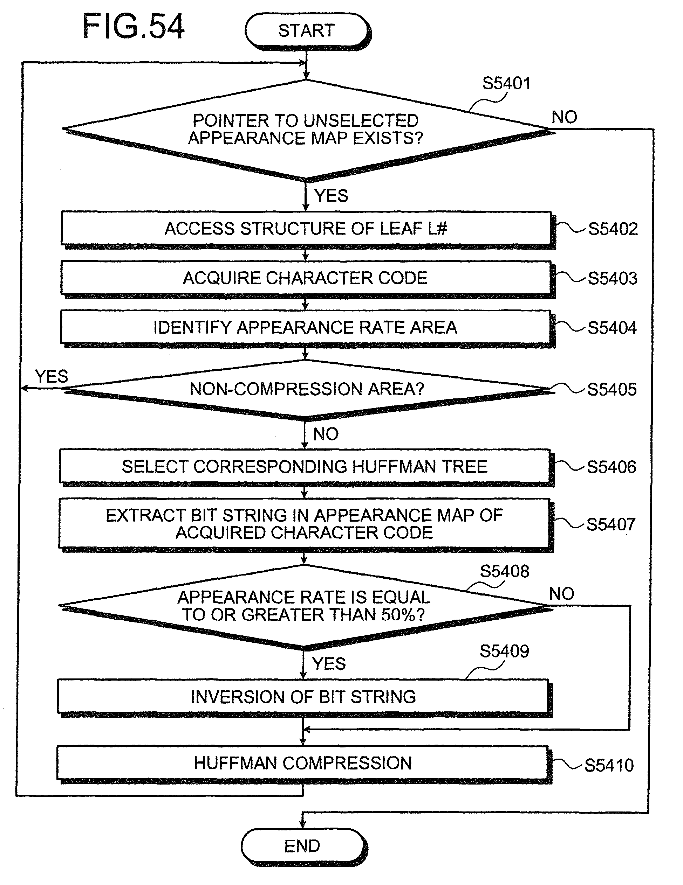

FIG. 54 is a flowchart of a compression code map M compression process. In FIG. 54, first, the information processing apparatus 400 determines whether a pointer to an unselected appearance map exists in a compression code map M group Ms (step S5401). If an unselected address exists (step S5401: YES), the information processing apparatus 400 selects the unselected address to access the structure of the leaf L# (step S5402) and acquires a character code from the first area of the structure of the leaf L# (step S5403). The information processing apparatus 400 acquires an appearance rate area from the fifth area of the accessed structure of the leaf L# to identify the appearance rate area of the acquired character code (step S5404).

The information processing apparatus 400 then refers to the compression pattern table of FIG. 52 to determine whether the identified appearance rate area is the non-compression area (e.g., the appearance rate area A or A') (step S5405). In the case of the non-compression area (step S5405: YES), the information processing apparatus 400 returns to step S5401 and selects the next address.

On the other hand, if not the non-compression area (step S5405: NO), the information processing apparatus 400 uses the identified appearance area to select the corresponding compression pattern (Huffman tree h) out of the compression patterns 5000 to 5300 (Huffman trees h) depicted in FIGs. 50 to 53 (step S5406). The information processing apparatus 400 extracts the bit string of the compression area in the appearance map of the acquired character code to be compressed (step S5407).

The information processing apparatus 400 determines whether the appearance rate of the acquired character code is equal to or greater than 50 % (step S5408). As described above, the appearance rate is a value acquired by using the number of all the files in the object file group Fs as a parent population (denominator) and the number of files having the corresponding character data as a numerator. Since the appearance rate area is determined depending on the appearance rate (see FIG. 48), if the appearance rate area is A to E, it is determined that the appearance rate of the acquired character code is not equal to or greater than 50 %. On the other hand, if the appearance rate area is A' to E', the information processing apparatus 400 determines that the appearance rate of the acquired character code is equal to or greater than 50 %.

If the appearance rate is equal to or greater than 50 % (step S5408: YES), the information processing apparatus 400 inverts the bit string extracted at step S5407 so as to increase the compression efficiency. For example, if the extracted bit string is "1110", the bit string is inverted to "0001" to increase the number of "0s". The information processing apparatus 400 compresses the inverted bit string by using the Huffman tree selected at step S5406 and stores the bit string into the storage device (e.g., a flash memory or the magnetic disc 205) (step S5410). The information processing apparatus 400 returns to step S5401. This inversion of the bit string eliminates the needs of preparing the Huffman tree h of the appearance rate areas A' to E' and, therefore, memory saving can be achieved.

On the other hand, if the appearance rate is not equal to or greater than 50 % (step S5408: NO), the information processing apparatus 400 compresses the bit string extracted at step S5407 by using the Huffman tree selected at step S5406 (step S5410) without inversion of the bit string (step S5409) and returns to step S5401. If an unselected address does not exist at step S5401 (step S5401: NO), the information processing apparatus 400 terminates the compression code map compression process.

With such a compression code map compression process, the bit string in the compression area is compressed for each character data depending on the appearance rate as depicted in FIG. 1(A). Since the number of successive "0s" indicating the absence of the character data increases depending on the appearance rate area in this way, the compression efficiency of the compression code map M can be improved depending on the appearance rate of character data.

If an object file is subsequently added, compression of the added object file may generate the need for adding a bit string indicating the presence of a character to the compression code map M. In the compression code map M before the compression, the bit strings of the appearance maps of the file numbers 1 to n are compressed with the compression patterns 5000 to 5300 and a code length is different in each record. In other words, the bit strings are defined as the compression area because of the variable length.

Thus, as depicted in FIG. 1(A), the beginnings of the compression code strings (on the file number n side) are aligned while the ends (on the file number 1 side) are not aligned. If a sequence of a bit string is assigned in the order of the file numbers 1 to n from the side of the pointer to the compression code map M (compression code of character data), the bit string of the additional file is inserted on the ending side of the compression code string, making the compression code string and the bit string of the additional file discontinuous. Therefore, the bit strings of the compression area of the compression code map M group Ms are arranged in descending order of the file number p of the object file group Fs from the leading position to the ending position in advance. In the compression code map M, the non-compression area is set between the pointer to the appearance map (compression code of character data) and the compression area.

As depicted in FIG. 1(C), the bits of the file number n+1 are assigned on the side of the file numbers 1 to n on which the compression code strings are aligned. As a result, when the bit strings of the file numbers 1 to n are compressed, the bit strings can be made continuous in the order of file number even if the bit strings of the non-compression file numbers n+1 to 2n are inserted. As a result, even when the bit strings of the file numbers 1 to n are compressed, the file number of the additional file is not deviated from the bits thereof and the object file can accurately be narrowed down.

<Second Functional Configuration Example>

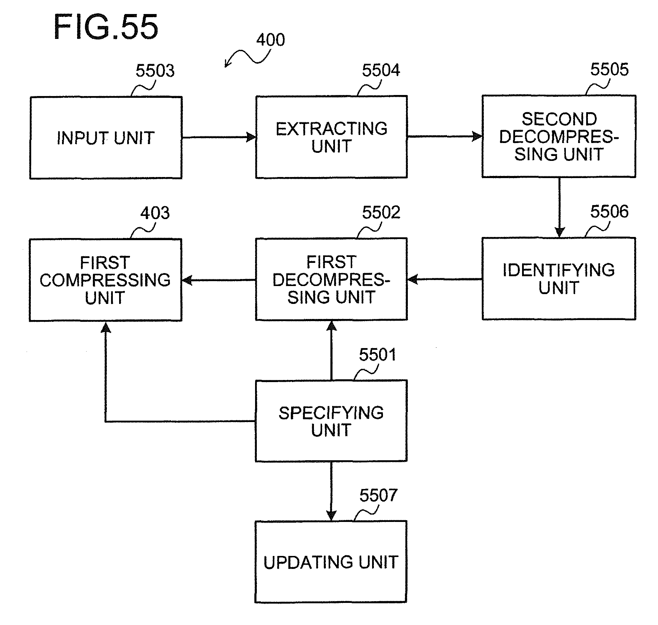

FIG. 55 is a block diagram of a second functional configuration example of the information processing apparatus 400 according to this embodiment. In FIG. 55, the information processing apparatus 400 includes a specifying unit 5501, a first decompressing unit 5502, the first compressing unit 403, an input unit 5503, an extracting unit 5504, a second decompressing unit 5505, an identifying unit 5506, and an updating unit 5507. For example, the functions of the specifying unit 5501 to the updating unit 5507 are implemented by causing the CPU 201 to execute programs stored in a storage device such as the ROM 202, the RAM 203, and the magnetic disc 205 depicted in FIG. 2. Each of the specifying unit 5501 to the updating unit 5507 writes an execution result into the storage device and reads an execution result of another unit to perform calculations. The specifying unit 5501 to the updating unit 5507 will hereinafter briefly be described.

The specifying unit 5501 accepts open specification of any object file in the object file group Fs. For example, an operation of the keyboard, the mouse, or the touch panel by a user causes the specifying unit 5501 to accept the open specification of the object file Fi. If the open specification is accepted, a pointer to a compression file fi correlated with the file number i of the object file Fi specified to be opened is specified in the compression code map M. As a result, the compression file fi of the object file Fi specified to be opened is read that is stored at the pointed address.

The specifying unit 5501 accepts save specification of an opened object file Fi. For example, an operation of the keyboard, the mouse, or the touch panel by a user causes the specifying unit 5501 to accept the save specification of the object file Fi. If the save specification is accepted, the object file F specified to be saved is compressed by the first compressing unit 403 with the $2^N$-branch nodeless Huffman tree H and stored as the compression file fi in the storage device.

The first decompressing unit 5502 decompresses the compression file fi of the object file Fi with the $2^N$-branch nodeless Huffman tree H. For example, the first decompressing unit 5502 decompresses the compression file fi of the object file Fi specified to be opened by the specifying unit 5501 with the $2^N$-branch nodeless Huffman tree H. The first decompressing unit 5502 also decompresses the object file Fi identified by the identifying unit 5506 described later with the $2^N$-branch nodeless Huffman tree H. A specific example of decompression will be described later.

The input unit 5503 accepts input of a search character string. For example, an operation of the keyboard, the mouse, or the touch panel by a user causes the input unit 5503 to accept the input of a search character string.

The extracting unit 5504 extracts the compression codes of character data in the search character string input by the input unit 5503 from the $2^N$-branch nodeless Huffman tree H. For example, the extracting unit 5504 extracts corresponding character data out of specific single characters, upper divided character codes, lower divided character codes, bi-gram character strings, and basic words from the search character string.

For example, if the search character string is "人形", specific single characters "人" and "形" and a bi-gram character string "人形" are extracted. The extracting unit 5504 identifies the compression codes of the extracted character data with the $2^N$-branch nodeless Huffman tree H and extracts appearance maps corresponding to the compression code map M. For example, the compressed appearance map of the specific single character "人", the compressed appearance map of "形", and the compressed appearance map of the bi-gram character string "人形" are extracted.

The second decompressing unit 5505 decompresses the compressed appearance maps extracted by the extracting unit 5504. For example, since the appearance rate area can be identified from the appearance rate of the character data, the second decompressing unit 5505 decompresses the compression area of the compressed appearance map with the Huffman tree corresponding to the identified appearance rate area. In the above example, as depicted in FIG. 1(B), the compressed appearance map of the specific single character "人", the compressed appearance map of "形", and the compressed appearance map of the bi-gram character string "人形" are decompressed.

The identifying unit 5506 performs the AND operation of the appearance map group and the deletion map D after the decompression by the second decompressing unit 5505 to identify a compression file of the object file including the character data in the search character string out of the compression file group. In the above example, as depicted in FIG. 1(B), the identifying unit 5506 performs the AND operation of the compressed appearance map of the specific single character "人", the compressed appearance map of "形", the compressed appearance map of the bi-gram character string "人形", and the deletion map D. The process until the identifying unit 5506 is the process in the extracting device in the information processing apparatus 400.

As a result, (the compression file f3 of) the file number 3 is identified. The first decompressing unit 5502 decompresses the compression file (the compression file f3 in the above example) identified by the identifying unit 5506 with the $2^N$-branch nodeless Huffman tree H.

When an opened object file is updated and saved, the updating unit 5507 assigns a new file number and sets the bits for the new file number for the compression code map M and the deletion map D. The bits are set to "0" (OFF) in the compression code map M and "1" (ON) in the deletion map D.

The character data in the object file to be updated is tabulated by the tabulating unit 401 and a bit of the newly assigned file number is set to ON for the character data appearing at least once. The bit of the file number in the deletion map D at the time of opening is set to OFF. With the newly assigned file number, the updating unit 5507 correlates the address of the upated compression file as a pointer. As a result, if the newly assigned file number is specified after the update, the specifying unit 5501 specifies the updated compression file. Details of the updating unit 5507 will be described later.

<File Decompression Example>

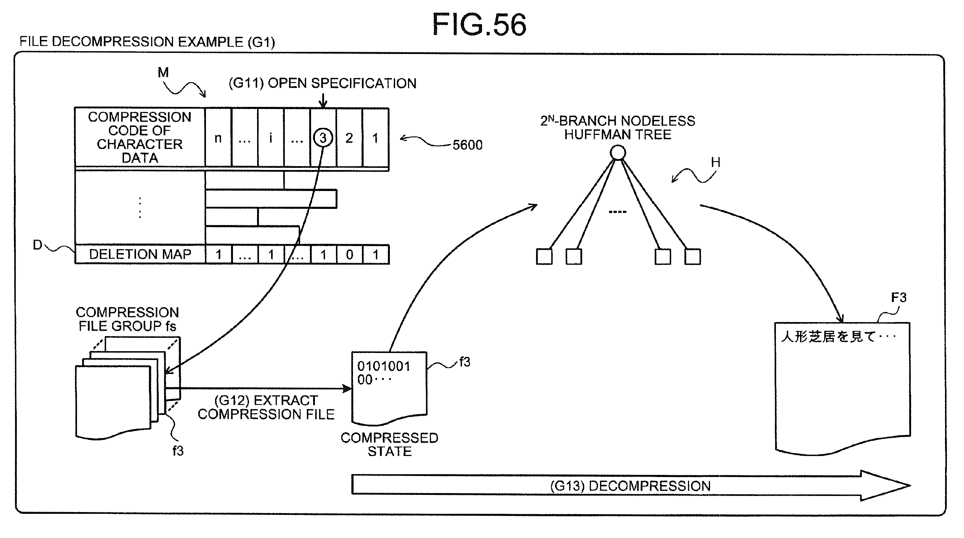

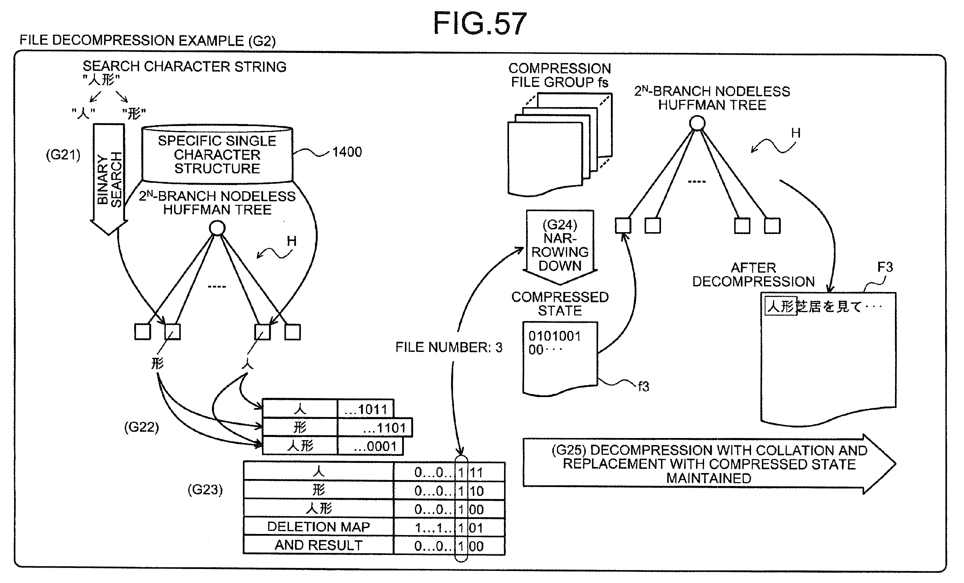

A file decompression example will be described. If a compression file f1 is decompressed, when the object file Fi is opened, a method (G1) of directly specifying the file number i and a method (G2) of using a search character string to narrow down the object file Fi to be opened are available. The former (G1) will be described with reference to FIG. 56 and the latter (G2) will be described with reference to FIG. 57. Both (G1) and (G2) can be performed either before or after the update of this embodiment.

FIG. 56 is a diagram of the file decompression example (G1). A process described as the file decompression example (G1) is executed by the specifying unit 5501 and the first decompressing unit 5502. By way of example, the file number 3 is specified to be opened. In FIG. 56, reference numeral 5600 denotes a management area of the compression code map M. The management area 5600 stores the file number i (i=1 to n) corresponding to the bits of the appearance maps. The management area 5600 stores a pointer specifying a storage destination of the compression file fi specified by the file number i in a manner correlated with the file number i. Therefore, if the file number i is specified, the compression file fi thereof can be pointed and read out.

(G11) First, the object file F3 is specified to be opened by the specifying unit 5501. The file number 3 of the compression code map M is correlated with the pointer to the compression file f3 of the object file F3. (G12) Therefore, the compression file f3 is extracted by the pointer. (G13) The extracted compression file f3 is decompressed with the $2^N$-branch nodeless Huffman tree H. A detailed decompression process will be described later.

FIG. 57 is a diagram of the file decompression example (G2). A process described as the file decompression example (G2) is executed by the input unit 5503, the extracting unit 5504, the second decompressing unit 5505, the identifying unit 5506, and the first decompressing unit 5502. (G21) First, if the input unit 5503 inputs a

search character string "人形", binary search of the specific single character structure 1400 is performed for the characters "人" and "形" making up the search character string "人形", and the specific single characters "人" and "形" are obtained. The specific single character structure 1400 is correlated with the pointers to the leaves (specific single characters) of the $2^N$-branch nodeless Huffman tree H. Therefore, if a hit is made in the specific single character structure, a leaf of the $2^N$-branch nodeless Huffman tree H can directly be specified.

(G22) When a leaf of the $2^N$-branch nodeless Huffman tree H is directly specified, the collation flag in the structure of the corresponding leaf is set to ON and a compression code is extracted. The compression code acts as a pointer to an appearance map of a specific single character and therefore enables direct specification. In this example, the compression codes of the specific single characters "人" and "形" are extracted and, therefore, the appearance map of "人" and the appearance map of "形" are extracted. The concatenated compression code acquired by concatenating the compression code of "人" and the compression code of "形" acts as a pointer to the appearance map of the bi-gram character string and therefore enables direct specification. Thus, the appearance map of the bi-gram character string "人形" is extracted.

(G23) The three extracted appearance maps are decompressed with a Huffman tree for a map. The decompressed appearance maps and the deletion map D are used for performing the AND operation and an AND result is acquired.

(G24) Since the file number 3 is set to ON in the AND result, it is found that the search character string "人形" exists in the object file F3. Therefore, the compression file f3 is extracted from the compression file group. As a result, the compression file to be decompressed is narrowed down and unnecessary decompression processes can be reduced.

(G25) Lastly, the extracted compression file f3 is collated and decompressed while the compressed state is maintained, thereby opening the decompressed object file F3. Since the collation flag is set to ON in the structures of leaves of the "人" and "形", when "人" and "形" are decompressed, character strings are decompressed and replaced for highlighting. For example, "人" and "形" having the collation flag set to ON are decompressed and interposed between <B> and </B> tags so as to be displayed in bold. A character having the collation flag set to OFF is not interposed between the <B> and </B> tags and is directly decompressed.

<Specific Example of Decompression Process>

A specific example of the decompression process of FIGs. 56 and 57 will be described. In the example of this description, the compression code string of the search character string "人形" is used to decompress the compression file fi while performing the collation. By way of example, the compression code of the specific single character "人" is "1100010011" (10 bits) and the compression code of the specific single character "形" is "0100010010" (10 bits).

In the decompression process, the compression code string is set in a register and a compression code is extracted through a mask pattern. The extracted compression code is searched from the root of the $2^N$-branch nodeless Huffman tree H by one pass (access through one branch). A character code stored in the accessed structure of the leaf L# is read and stored in a decompression buffer.

To extract the compression code, the mask position of the mask pattern is offset. The initial value of the mask pattern is set to "0xFFF00000". This mask pattern is a bit string having the leading 12 bits of "1" and the subsequent 20 bits of "0".

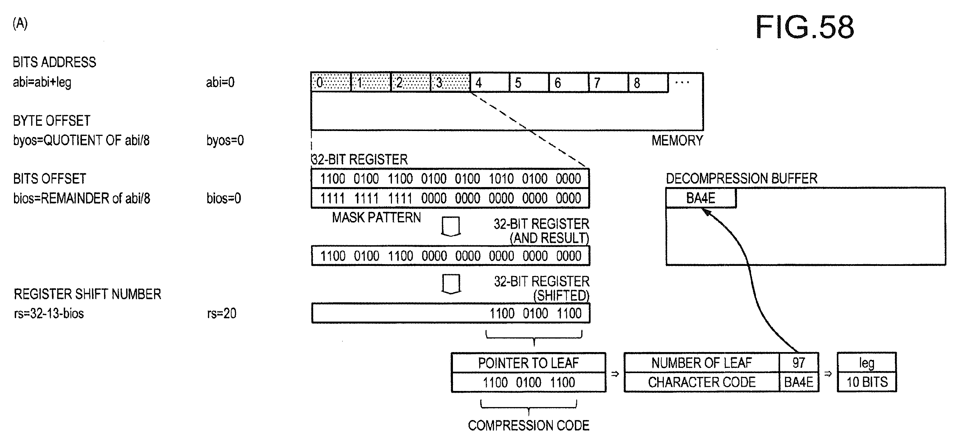

FIGs. 58 to 59 are diagrams of specific examples of the decompression process of FIGs. 56 and 57. FIG. 58 depicts a decompression example (A) for the specific single character "人". In FIG. 58, the CPU calculates a bit address abi, a byte offset byos, and a bit offset bios. The bit address abi is a value indicating a bit position of the extracted compression code and the current bit address abi is a value obtained by adding a compression code length leg of the previously extracted compression code to the pervious bit address abi. In the initial state, the bit address abi is set to abi=0.

The byte offset byos is a value indicative of a byte boundary of the compression code string retained in a memory and is obtained as a quotient of the bit address abi/8. For example, in the case of the byte offset byos=0, the compression code string from the start stored in the memory is set in the register and, in the case of the byte offset byos=1, the compression code string from the first byte stored in the memory is set in the register.

The bit offset bios is a value of offsetting the mask position ("FFF") of the mask pattern and is a remainder of the bit address abi/8. For example, in the case of the bit offset bios=0, the mask position is not shifted, resulting in the mask pattern of "0xFFF00000". On the other hand, in the case of the bit offset bios=4, the mask position is shifted by 4 bits toward the end, resulting in the mask pattern of "0x0FFF0000".

A register shift number rs is the number of bits by which the compression code string in the register is shifted toward the end after the AND operation with the mask pattern, and is obtained from rs=32-12-bios. Due to this shift, a bit string of the ending m bits in the register after the shift is extracted as an object bit string. After the object bit string is extracted, the register is cleared.

A block in the memory indicates a one-byte bit string and a numerical character inside indicates a byte position that is a byte boundary. In FIG. 58, the bit address abi=0 leads to the byte offset byos=0 and the bit offset bios=0. Because of the byte offset byos=0, a compression code string of four bytes (shaded in FIG. 58) from the start of the compression code string retained in the memory is set in the register.

Because of the bit offset bios=0, the mask pattern is "0xFFF00000". Therefore, an AND result is acquired from the logical product (AND) operation of the compression code string set in the register and the mask pattern "0xFFF00000".

Because of the bit offset bios=0, the register shift number rs is rs=32-m-bios=32-12-0=20. Therefore, the AND result in the register is shifted by 20 bits toward the end. Due to this shift, "110001001100" is left in the register and, therefore, the ending 12 bits are extracted as the object bit string. In this case, "110001001100" is extracted as the object bit string. After the extraction, the register is cleared.

Since the root structure of the $2^N$-branch nodeless Huffman tree H includes the extracted object bit string "110001001100", the pointer (branch number) to the leaf L# matched with this object bit string is searched. In this case, since one of the pointers to a leaf L97 is matched, the corresponding pointer to the leaf L97 is read to access the structure of the leaf L97.

Since the structure of the leaf L97 stores a character code "0xBA4E", this character code "0xBA4E" is extracted and stored in the decompression buffer. In the case of the file decompression example (G1), the character code is directly stored in the decompression buffer and, in the case of the file decompression example (G2), the character code "0xBA4E" is interposed and stored between the <B> and </B> tags because of the collation flag set to ON.

Since the structure of the leaf L97 also stores the compression code length leg (=10 bits) of the character code "0xBA4E", the compression code length leg of the character code "0xBA4E" is extracted. The bit address abi is updated with this extracted compression code length leg. In this case, the updated bit address abi is abi=0+10=10.

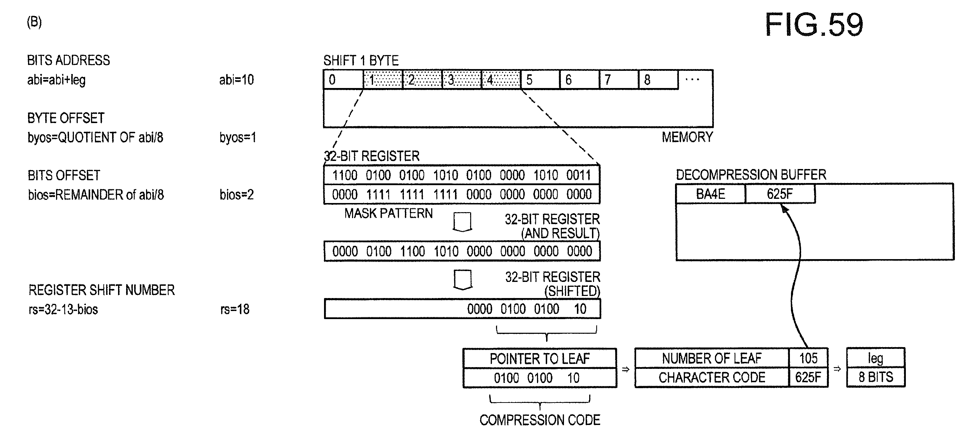

FIG. 59 depicts an example (B) of decompressing the specific single character "形". For example, if the register is shifted by the byte offset byos from the state (A) of FIG. 58, since the bit address abi of (A) at the previous time is abi=0 and the compression code length leg is 10 bits, the bit address abi of (B) is abi=10 bits.

This bit address abi=10 leads to the byte offset byos=1 and the bit offset bios=2. Because of the byte offset byos=1, a compression code string of four bytes (shaded in FIG. 59) from the first byte of the compression code string retained in the memory is set in the register.

Because of the bit offset bios=2, the mask pattern is "0x3FFC0000". Therefore, an AND result is acquired from the logical product (AND) operation of the compression code string set in the register and the mask pattern "0x3FFC0000".

Because of the bit offset bios=2, the register shift number rs is rs=32-m-bios=32-12-2=18. Therefore, the AND result in the register is shifted by 18 bits toward the end. Due to this shift, "00000100010010" is left in the register and, therefore, the ending 10 bits are extracted as the object bit string. In this case, "0100010010" is extracted as the object bit string. After the extraction, the register is cleared.

Since the root structure of the $2^N$-branch nodeless Huffman tree H includes the extracted object bit string "0100010010", the pointer (branch number) to the leaf L# matched with this bit string is searched. In this case, since the object bit string "0100010010" matches one of the pointers to a leaf L105, the corresponding pointer to the leaf L105 is read to access the structure of the leaf L105.

Since the structure of the leaf L105 stores a character code "0x625F", this character code "0x625F" is extracted and stored in the decompression buffer. In the case of the file decompression example (G1), the character code is directly stored in the decompression buffer and, in the case of the file decompression example (G2), the character code "0x625F" is interposed and stored between the <B> and </B> tags because of the collation flag set to ON. Since the structure of the leaf L105 also stores the compression code length leg (=8 bits) of the character code "0x625F", the compression code length leg of the character code "0x625F" is extracted. The bit address abi is updated with this extracted compression code length leg. In this case, the updated bit address abi is abi=10+8=18. By performing the decompression in this way, the object file is opened.

<Search Process>

A search process according to this embodiment will be described. For example, this corresponds to the file decompression example (G2) depicted in FIG. 57.

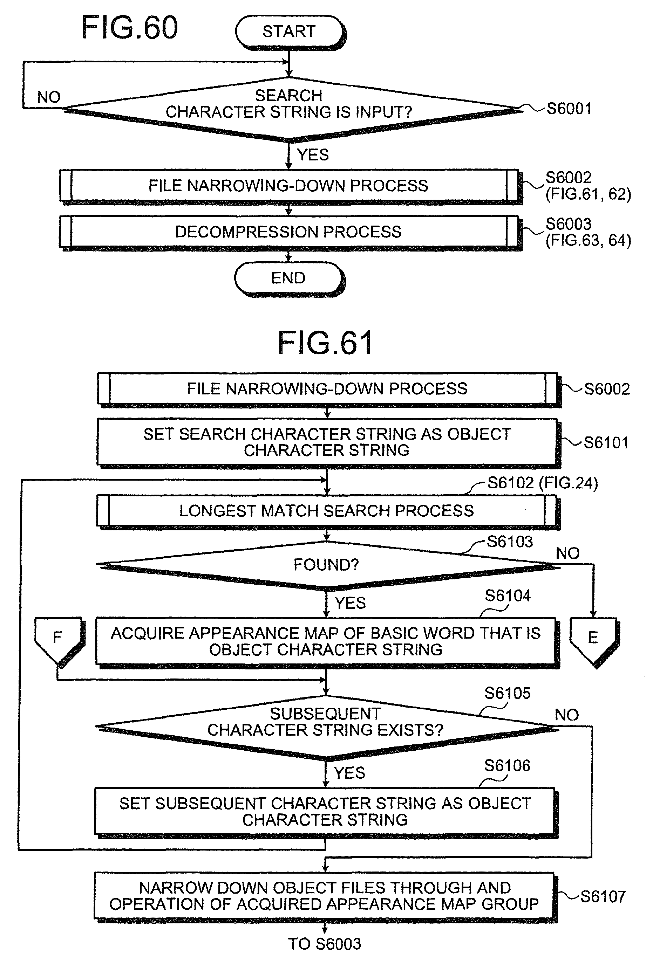

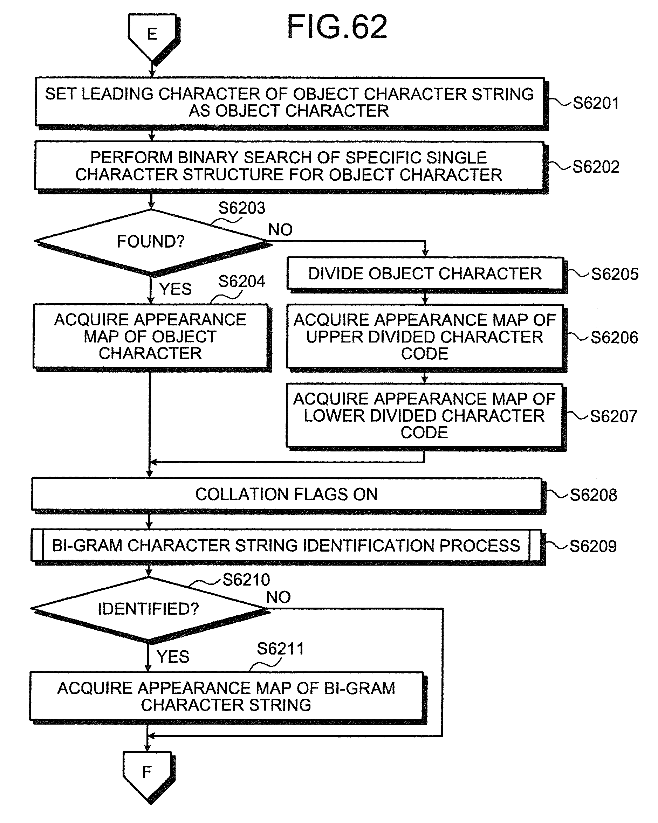

FIG. 60 is a flowchart of a search process according to this embodiment. First, the information processing apparatus 400 waits for input of a search character string (step S6001: NO) and, if the search character string is input (step S6001: YES), the information processing apparatus 400 executes a file narrowing-down process (step S6002) and a decompression process (step S6003). In the file narrowing-down process (step S6002), the compression files fi of the object files Fi having the character data making up the search character string are narrowed down from the compression file group fs. Details of the file narrowing-down process (step S6002) will be described with reference to FIGs. 61 and 62.

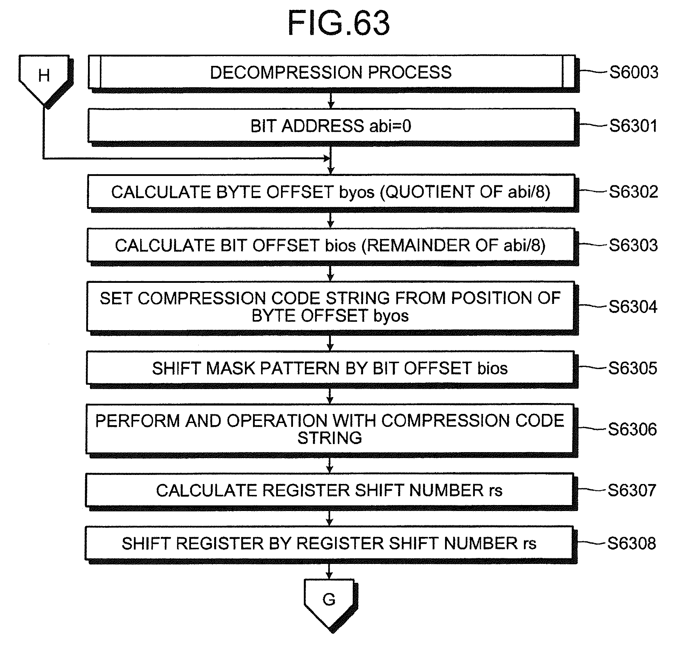

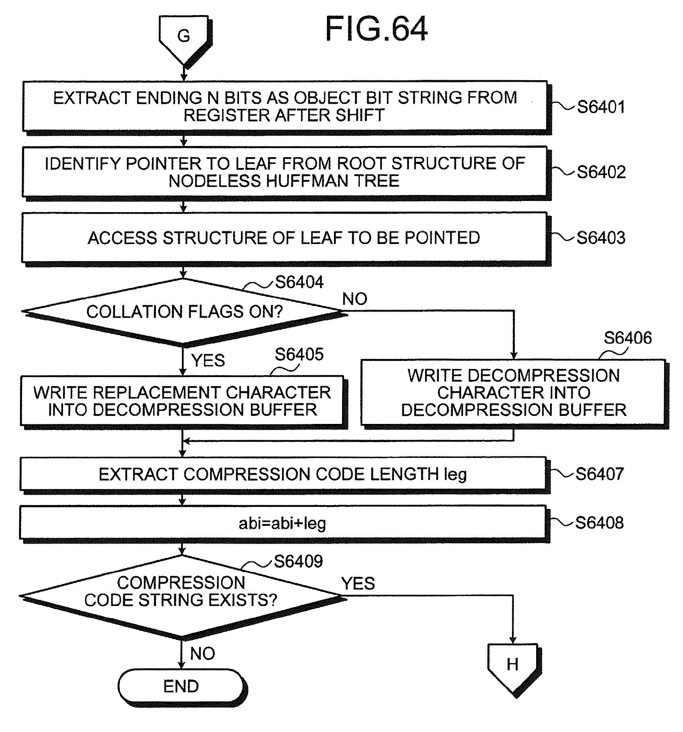

In the decompression process (step S6003), the compression code string to be decompressed is collated with the compression character string of the search character string in the course of decompressing the compression files fi narrowed down by the file narrowing-down process (step S6002). Details of the decompression process (step S6003) will be described with reference to FIGs. 63 and 64.

FIG. 61 is a flowchart (part 1) of the file narrowing-down process (step S6002) depicted in FIG. 60. First, the information processing apparatus 400 sets the search character string as the object character string (step S6101) and executes a longest match search process (step S6102). The longest match search process (step S6102) is the same process as the longest match search process (step S3801) depicted in FIG. 38 and therefore will not be described.

The information processing apparatus 400 performs binary search of the basic word structure for the longest match search result acquired by the longest match search process (step S6102) (step S6103). If the longest match search result is found from the basic word structure (step S6103: YES), for the basic word that is the object character string, the information processing apparatus 400 acquires the appearance map of the basic word from the appearance map group of basic words (step S6104).

The information processing apparatus 400 determines whether the object character string has a subsequent character string (step S6105). If a subsequent character string exists (step S6105: YES), the information processing apparatus 400 sets the subsequent character string as the object character string (step S6106) and returns to the longest match search process (step S6102). On the other hand, if no subsequent character string exists (step S6105: NO), the object files are narrowed down through the AND operation of the acquired appearance map group at this point (step S6107). The information processing apparatus 400 then terminates the file narrowing-down process (step S6002) and goes to the decompression process (step S6003).

At step S6103, if the longest match search result is not found from the basic word structure (step S6103: NO), the information processing apparatus 400 goes to step S6201 of FIG. 62. For example, if the longest match search result is not registered in the basic word structure or if no longest match candidate exists as a result of the longest match search (step S6103: NO), the information processing apparatus 400 goes to step S6201 of FIG. 62.

FIG. 62 is a flowchart (part 2) of the file narrowing-down process (step S6002) depicted in FIG. 60. FIG. 62 depicts a process of acquiring an appearance map for each character making up the object character string.

The information processing apparatus 400 sets the leading character of the object character string as the object character (step S6201). The information processing apparatus 400 performs the binary search of the specific single character structure for the object character (step S6202). If the object character is found (step S6203:

YES), the information processing apparatus 400 acquires the appearance map of the object character from the compression code map M of specific single characters (step S6204).

On the other hand, if not found at step S6203 (step S6203: NO), the information processing apparatus 400 divides the object character into upper 8 bits and lower 8 bits (step S6205). The information processing apparatus 400 acquires the appearance map of the upper divided character code acquired by the division at step S6205 from the compression code map M of upper divided character codes (step S6206).

The information processing apparatus 400 also acquires the appearance map of the lower divided character code acquired by the division at step S6205 from the compression code map M of lower divided character codes (step S6207). For the object character and the divided character codes divided at step S6205, the information processing apparatus 400 accesses the leaves of the $2^N$-branch nodeless Huffman tree H to set the collation flags to ON (step S6208). Subsequently, the information processing apparatus 400 executes a bi-gram character string identification process (step S6209). The bi-gram character string identification process (step S6209) is the same process as the bi-gram character string identification process (step S2706) depicted in FIG. 30 and therefore will not be described.

If no bi-gram character string is identified in the bi-gram character string identification process (step S6209) (step S6210: NO), the information processing apparatus 400 returns to step S6105 of FIG. 61. On the other hand, if a bi-gram character string is identified (step S6210: YES), the information processing apparatus 400 acquires the appearance map of the bi-gram character string (step S6211). For example, the information processing apparatus 400 accesses the $2^N$-branch nodeless Huffman tree H to acquire and concatenate the compression code of the first gram and the compression code of the second gram, and acquires the appearance map specified by the concatenated compression code from the compression code map M of bi-gram character strings. The information processing apparatus 400 then returns to step S6105 of FIG. 61.

As described above, with the process depicted in FIG. 62, the appearance map group for the object character and the appearance map group for the bi-gram character strings can be acquired. Therefore, the compression files fi can be narrowed down through the AND operation at step S6107 of FIG. 61.

FIG. 63 is a flowchart (part 1) of a decompression process (step S6003) using the $2^N$-branch nodeless Huffman tree H depicted in FIG. 60. In FIG. 63, the information processing apparatus 400 sets the bit address abi to abi=0 (step S6301), calculates the byte offset byos (step S6302), and calculates the bit offset bios (step S6303). The information processing apparatus 400 sets a compression code string from the position of the byte offset byos into the register r1 (step S6304).

The information processing apparatus 400 shifts a mask pattern set in the register r2 by the bit offset bios toward the end (step S6305) and performs an AND operation with the compression code string set in the register r1 (step S6306). The information processing apparatus 400 subsequently calculates the register shift number rs (step S6307) and shifts the register r2 after the AND operation by the register shift number rs toward the end (step S6308).

FIG. 64 is a flowchart (part 2) of the decompression process (step S6003) using the $2^N$-branch nodeless Huffman tree H depicted in FIG. 60. After step S6308, in FIG. 64, the information processing apparatus 400 extracts the ending N bits as an object bit string from the register r2 after the shift (step S6401). The information processing apparatus 400 identifies the pointer to the leaf L# from the root structure of the $2^N$-branch nodeless Huffman tree H (step S6402) and accesses the structure of the leaf L# to be pointed by one pass (S6403). The information processing apparatus 400 determines whether the collation flag of the accessed structure of the leaf L# is set to ON (step S6404).

If the collation flag is set to ON (step S6404: YES), the information processing apparatus 400 writes a replacement character for the character data in the accessed structure of the leaf L# into the decompression buffer (step S6405) and goes to step S6407. On the other hand, if the collation flag is set to OFF (step S6404: NO), the information processing apparatus 400 writes the character data (decompression character) in the accessed structure of the leaf L# into the decompression buffer (step S6406) and goes to step S6407.

At step S6407, the information processing apparatus 400 extracts the compression code length leg from the accessed structure of the leaf L# (step S6407) and updates the bit address abi (step S6408). The information processing apparatus 400 then determines whether a compression code string exists in the memory, for example, whether a compression code string not subjected to the mask process using the mask pattern exists (step S6409). For example, this is determined based on whether a byte position corresponding to the byte offset byos exists. If the compression code string exists (step S6409: YES), the information processing apparatus 400 returns to step S6302 of FIG. 63. On the other hand, if no compression code string exists (step S6409: NO), the decompression process (step S6003) is terminated.

With this decompression process (step S6003), the collation/decompression can be performed while the compressed state is maintained, and the decompression rate can be accelerated.

<Specific Example of Update Process>

A specific example of the update process depicted in FIG. 1 will be described. As depicted in FIG. 1, the update of the object file Fi and the update of the compression code map M are performed without decompressing the compressed compression code map M.

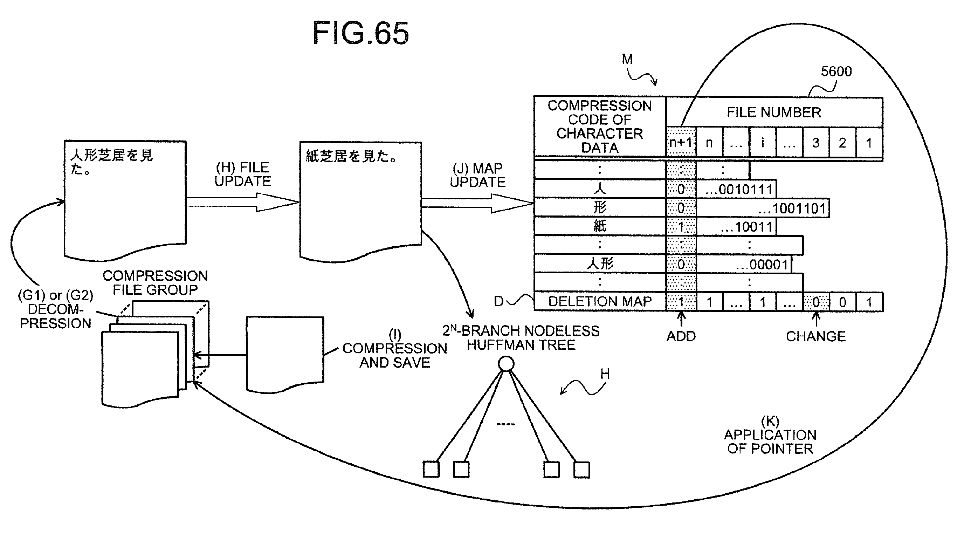

FIG. 65 is a diagram of a specific example of the update process. In FIG. 65, the case of updating the object file F3 will be described as an example. It is assumed that a compression file f3 is decompressed from the compression file group fs according to the file decompression example (G1) of FIG. 56 or the file decompression example (G2) of FIG. 57 and that the decompressed object file F3 is written on a main memory (e.g., the RAM 203).

(H) It is assumed that a character string "人形芝居を見た。" in the object file F3 is changed to "紙芝居を見た。" and that a save instruction is given. In this case, a newly assigned file number n+1 is applied to the object file F3 on the main memory to form an object file F(n+1).

(I) The object file F(n+1) is compressed with the $2^N$-branch nodeless Huffman tree H into a compression file f(n+1) and stored into a storage device. In this case, the compression file f3 is overwritten with the compression file f(n+1) and saved in the storage device.

(J) By tabulating the character data of the object file F(n+1) on the main memory with the tabulating unit 401, the presence of the character data can be detected. Therefore, the bits of the newly assigned file number n+1 are added to the appearance maps of the character data (OFF by default) and a bit of the appearing character data is set to ON. A bit of the file number n+1 is added to the deletion map D (ON by default). The bit of the file number 3 of the update source object file F3 is set to OFF in the deletion map D.

(K) Since the compression file f3 is overwritten with and saved as the compression file f(n+1), the file number n+1 is correlated with the pointer correlated with the file number 3 in the management area. As a result, when the file number (n+1) is subsequently specified, the compression file f(n+1) can be decompressed to open the object file F(n+1).

Although the compression file f3 is overwritten with and saved as the compression file f(n+1) in FIG. 65, the compression file f(n+1) may separately be saved without overwriting and saving. In this case, in the management area 5600 of the compression code map M, the file number n+1 is assigned with a new pointer specifying a free space rather than the pointer to the compression file f3. Although the compression file f3 remains in this case, the file number 3 is changed to OFF in the deletion map D and therefore has no effect on a search.

If the file is restored to the state before update, the file number 3 before update may be correlated with the file number n+1 after update. As a result, since a restoration instruction including the file number n+1 can be given to specify the compression file f3 through the file number 3, the object file F3 can be acquired by decompression.

<Update Process>

The update process depicted in FIG. 65 will be described.

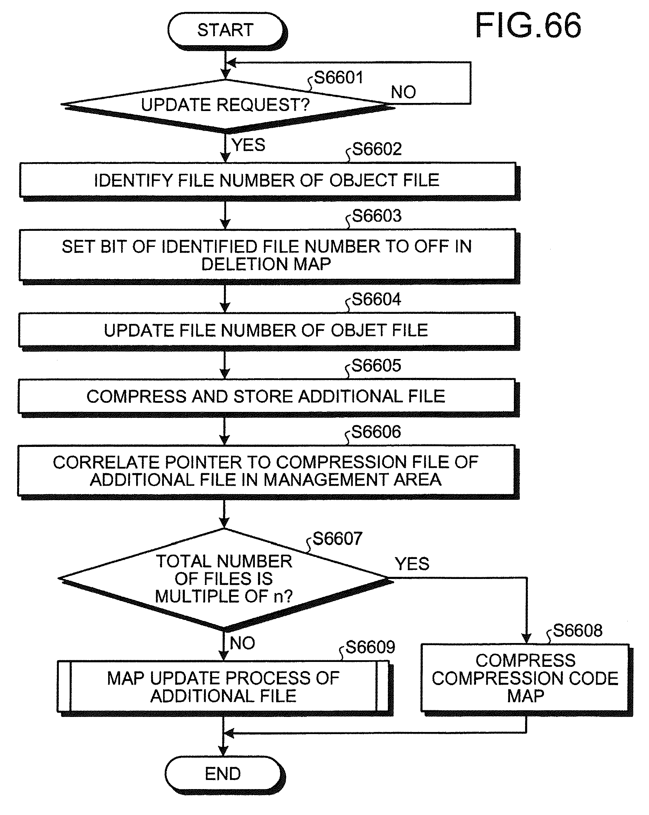

FIG. 66 is a flowchart of the update process depicted in FIG. 65. First, the information processing apparatus 400 waits for acceptance of an update request (step S6601: NO) and, if an update request is accepted (step S6001: YES), the information processing apparatus 400 identifies a file number i of an object file Fi for which the update request is made (step S6602).

The information processing apparatus 400 sets the bit of the identified file number i to OFF in the deletion map D (step S6603). As a result, the objet file Fi of the identified file number i is not searched and the search accuracy can be improved.

The information processing apparatus 400 updates the file number i of the objet file Fi (step S6604). In other words, the file number acquired by adding one to the ending file number at this point is assigned and applied to the object file. For example, as depicted in FIG. 65, the file number n+1 is assigned and applied to the object file F3 on the main memory (RAM 203) to form the object file F(n+1). An object file having a newly assigned file number applied in this way is referred to as an additional file.

The information processing apparatus 400 compresses the additional file F(n+1) with the $2^N$-branch nodeless Huffman tree H into a compression file (step S6605). The information processing apparatus 400 correlates the pointer to the compression file of the additional file F(n+1) with the file number (n+1) of the additional file F(n+1) in the management area 5600 of the compression code map M (step S6606).

The information processing apparatus 400 determines whether the total number of files (the ending file number) is a multiple of n (step S6607). In the case of a multiple of n (step S6607: YES), all the bits of the compression code map M correspond to the compression area and, therefore, the appearance maps of the compression code map M are compressed (step S6608). As a result, the size of the compression code map M can be reduced.

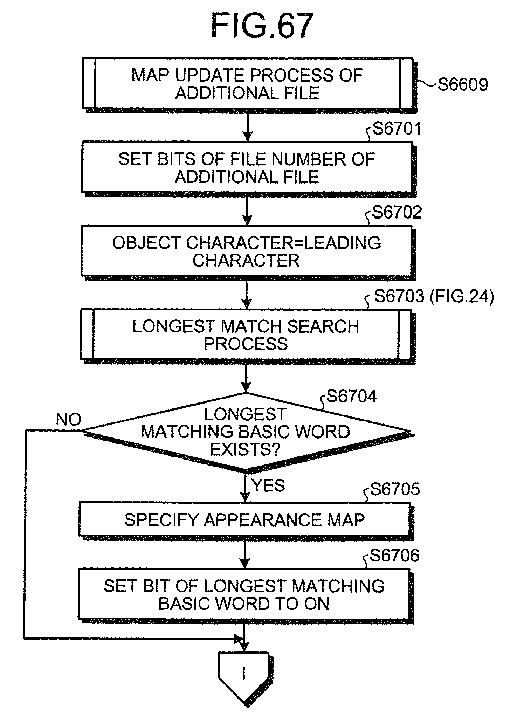

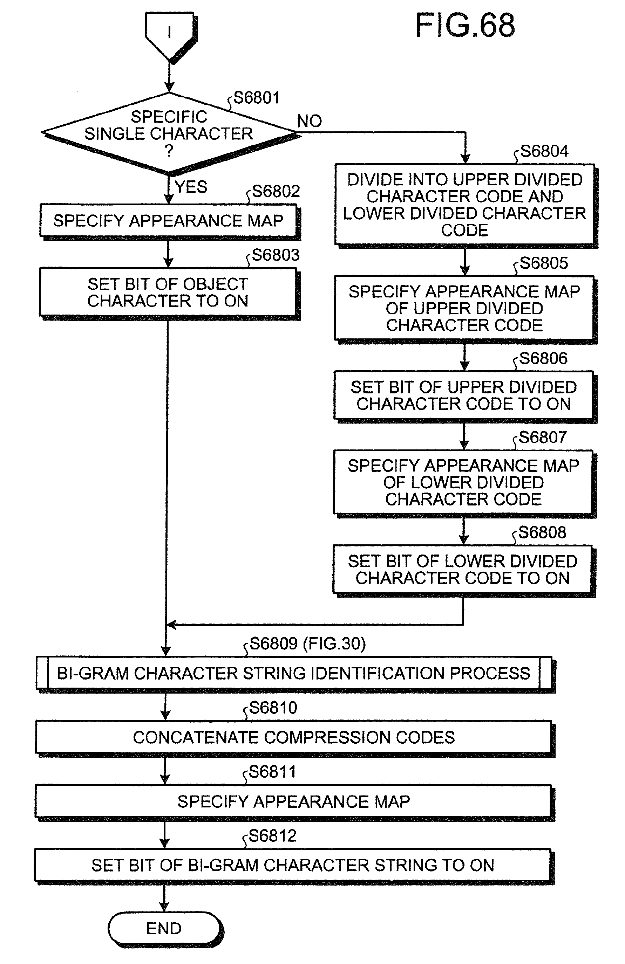

On the other hand, if not a multiple of n (step S6607: NO), a map update process of the additional file F(n+1) is executed (step S6609) and a sequence of process is terminated. Details of the map update process of the additional file F(n+1) (step S6609) will be described with reference to FIGs. 67 and 68.

FIG. 67 is a flowchart (first half) of the map update process of the additional file (step S6609) depicted in FIG. 66. First, the information processing apparatus 400 sets the bits of the file number of the additional file in the compression code map M and the deletion map D (step S6701). For example, the bit of OFF is set in the appearance map for the file number of the additional file and the bit of ON is set in the deletion map D for the file number of the additional file.

The information processing apparatus 400 sets the leading character in the additional file as the object character (step S6702) and executes a longest match search process for the object character (step S6703). The longest match search process (step S6703) is the same process contents as the process depicted in FIG. 24 and therefore will not be described.

The information processing apparatus 400 then determines whether the longest matching basic word is included in the basic word structure 1600 (step S6704). If not included (step S6704: NO), the information processing apparatus 400 goes to step S6801 of FIG. 68. On the other hand, if included (step S6704: YES), the information processing apparatus 400 identifies the compression code of the longest matching basic word from the $2^N$-branch nodeless Huffman tree H and uses the compression code to specify the appearance map of the longest matching basic word (step S6705). The information processing apparatus 400 sets the bit corresponding to the file number of the additional file to ON in the specified appearance map (step S6706). The information processing apparatus 400 then goes to step S6801 of FIG. 68.

FIG. 68 is a flowchart (second half) of the map update process of the additional file (step S6609) depicted in FIG. 66. The information processing apparatus 400 determines whether the object character is a specific single character (step S6801). For example, the information processing apparatus 400 determines whether the object character hits in the specific single character structure.

If the object character is a specific single character (step S6801: YES), the information processing apparatus 400 identifies the compression code of the hit specific single character from the $2^N$-branch nodeless Huffman tree H and uses the compression code to specify the appearance map of the hit specific single character (step S6802). The information processing apparatus 400 sets the bit corresponding to the file number of the additional file to ON in the specified appearance map (step S6803). The information processing apparatus 400 then goes to step S6809.

On the other hand, if the object character is not a specific single character (step S6801: NO), the information processing apparatus 400 divides the object character into an upper divided character code and a lower divided character code (step S6804). The information processing apparatus 400 identifies the compression code of the upper divided character code hit in the divided character code structure from the $2^N$-branch nodeless Huffman tree H and uses the compression code to specify the appearance map of the hit upper divided character code (step S6805). The information processing apparatus 400 sets the bit corresponding to the file number of the additional file to ON in the specified appearance map (step S6806).

Similarly, the information processing apparatus 400 identifies the compression code of the lower divided character code hit in the divided character code structure from the $2^N$-branch nodeless Huffman tree H and uses the compression code to specify the appearance map of the hit lower divided character code (step S6807). The information processing apparatus 400 sets the bit corresponding to the file number of the additional file to ON in the specified appearance map (step S6808). The information processing apparatus 400 then goes to step S6809.

At step S6809, the information processing apparatus 400 executes a bi-gram character string identification process (step S6809). The bi-gram character string identification process (step S6809) is the same process as the process depicted in FIG. 30 and therefore will not be described.

The information processing apparatus 400 concatenates the compression code of the leading gram character (e.g., "人" ) and the compression code of the ending gram character (e.g., "形") of the bi-gram character string (e.g., "人形") (step S6810). The information processing apparatus 400 uses the concatenated compression code to specify the appearance map of the bi-gram character string (step S6811). The information processing apparatus 400 sets the bit corresponding to the file number of the additional file to ON in the specified appearance map (step S6812) and terminates a sequence of process.

As described above, according to this embodiment, a pointer to the compression file of the updated object file is applied to the added file number. Therefore, if the file number of the additional file is specified/searched after the update, the compression file of the additional file can promptly be specified and decompressed.

Therefore, if any of multiple files to be searched by using index information is updated, a process time can be reduced that is from the start of the update process until the search using the index information corresponding to the multiple files after update is made executable.

Even if the object file Fi is deleted due to overwriting and saving, map update can be performed by adding bits to the appearance map and the deletion map D for the file number n+1 and changing the bit of the deletion map D. Therefore, it is not necessary to execute processes such as decompressing the compression area of the appearance map and deleting the bit of the file number i before recompression and the efficient map update can be performed.

The bit strings of the compression area of the compression code map M are arranged in advance in descending order of the file number p of the object file group Fs from the leading position to the ending position in advance. As a result, even if the bit strings of the file number 1 to n are compressed, the file number of the additional file is not deviated from the bits thereof and the object files Fi can accurately be narrowed down.

Since the compression area of the compression code map M is defined as a bit string of the largest multiple of a predetermined number (e.g., the largest multiple of a predetermined file number, 256), it is not necessary to compress the compression code map M each time an object file is added. As a result, the calculation load of the information processing apparatus 400 can be reduced. If the total number of files reaches the largest multiple of the initial number of files, all the bits corresponding to the file number of the compression code map M are defined as the compression area and, therefore, the compression code map M is compressed by the Huffman tree h. As a result, memory saving can be achieved. Since the compression is performed on the basis of a predetermined file number (e.g., 256 files), the reduction in calculation load and the memory saving can be implemented at the same time.

The information processing method described in this embodiment can be implemented by executing a preliminarily prepared program by the information processing apparatus 400 such as a personal computer and a workstation. This information processing program is recorded in a recording medium such as a hard disc, a flexible disc, a CD-ROM, an MO, and a DVD readable with the information processing apparatus 400 and is read from the recording medium by the information processing apparatus 400 for execution. This information processing program may be distributed via a network such as the Internet.

EXPLANATIONS OF LETTERS OR NUMERALS

| | |
|---|---|
| 400 | information processing apparatus |
| 401 | tabulating unit |
| 402 | first generating unit |
| 403 | first compressing unit |
| 404 | creating unit |
| 405 | second generating unit |
| 406 | second compressing unit |
| 5501 | specifying unit |
| 5502 | first decompressing unit |
| 5503 | input unit |
| 5504 | extracting unit |
| 5505 | second decompressing unit |
| 5506 | identifying unit |
| 5507 | updating unit |

**Claims**

1. An extracting method, wherein a computer is driven to execute the steps of:

storing compression information acquired by compressing first information indicating whether each of a plurality of files includes predetermined character data into storage;
storing, if a certain file included in the plurality of files is updated, second information indicating whether the updated certain file includes the predetermined character data into the storage and storing third information identifying the certain file into the storage; and

extracting, if a search request for the predetermined character data is received, a file out of the plurality of files and the updated file except a file indicated as a file not including the predetermined character data by the first information acquired by decompressing the compression information or the second information and the certain file identified by the third information.

2. The extracting method of claim 1, wherein
the first information is a bit string indicating whether each of the plurality of files includes the predetermined character data, wherein
the third information is a bit string indicating whether each of the plurality of files is defined as a search object, and wherein
if the search request is received, the computer is driven to execute the step of excluding a file indicated as a file not including the predetermined character data and the certain file from the plurality of files based on a bit string generated by bit operation using the first information and the third information

3. An information processing method, wherein a computer is driven to execute the steps of:

compressing and storing first information indicating whether each of a plurality of files includes predetermined character data into a storage; and
storing, if a certain file included in the plurality of files is updated, second information indicating whether the updated certain file includes the predetermined character data into the storage and storing third information indicating that the certain file is excluded from search objects, into the storage.

4. The information processing method of claim 3, wherein
the computer is driven to execute the step of storing a pointer indicating the updated certain file into the storage in a manner correlated with the second information.

5. The information processing method of claim 3 or 4, wherein
the computer is driven to execute the step of acquiring the compression information by compressing the first information with a Huffman tree corresponding to an appearance rate of the predetermined character data in the plurality of files.

6. The information processing method of any one of claims 3 to 5, wherein
the computer is driven to execute the step of compressing and storing an area of the first information from a leading file number of the plurality of files to a file number that is a largest multiple of the number of files into the storage, and wherein the remaining area is stored without compression into the storage.

7. The information processing method of any one of claims 3 to 6, wherein
if a search request for the predetermined character data is received, the computer is driven to execute the step of extracting out of the plurality of files a file that is indicated as a file including the predetermined character data by the first information acquired by decompressing the compression information and that is not indicated as a file excluded from search objects by the third information and extracting the updated certain file if the second information indicates that the predetermined character data is included.

8. An extracting program causing a computer to execute the steps of:

storing compression information acquired by compressing first information indicating whether each of a plurality of files includes predetermined character data into storage;
storing, if a certain file included in the plurality of files is updated, second information indicating whether the updated certain file includes the predetermined character data into the storage and storing third information identifying the certain file into the storage; and
extracting, if a search request for the predetermined character data is received, a file out of the plurality of files and the updated file except a file indicated as a file not including the predetermined character data by the first information acquired by decompressing the compression information or the second information and the certain file identified by the third information.

9. An information processing program causing a computer to execute the steps of:

compressing and storing first information indicating whether each of a plurality of files includes predetermined character data into a storage; and
storing, if a certain file included in the plurality of files is updated, second information indicating whether the updated certain file includes the predetermined character data into the storage and storing third information indicating that the certain file is excluded from search objects, into the storage.

**10.** An extracting apparatus comprising:

a storing unit that stores compression information acquired by compressing first information indicating whether each of a plurality of files includes predetermined character data;

an updating unit that stores, if a certain file included in the plurality of files is updated, second information indicating whether the updated certain file includes the predetermined character data into the storing unit and stores third information identifying the certain file into the storing unit; and

an extracting unit that extracts, if a search request for the predetermined character data is received, a file out of the plurality of files and the updated file except a file indicated as a file not including the predetermined character data by the first information acquired by decompressing the compression information or the second information and the certain file identified by the third information.

**11.** An information processing apparatus comprising:

a storing unit that compresses and stores first information indicating whether each of a plurality of files includes predetermined character data; and

an updating unit that stores, if a certain file included in the plurality of files is updated, second information indicating whether the updated certain file includes the predetermined character data and stores third information indicating that the certain file is excluded from search objects, into the storing unit.

# FIG.1

F3 — 人形芝居を見た。

M

**(A)**

| COMPRESSION CODE OF CHARACTER DATA | FILE NUMBER | | | | | | |
|---|---|---|---|---|---|---|---|
| | n | ... | i | ... | 3 | 2 | 1 |
| : | | | : | | | | |
| 人 | | | ...0010111 | | | | |
| 形 | | | ...1001101 | | | | |
| 紙 | | | ...10011 | | | | |
| : | | | : | | | | |
| 人形 | | | ...00001 | | | | |
| : | | | : | | | | |
| D⁓ DELETION MAP | 1 | ... | 1 | ... | 1 | 0 | 1 |

COMPRESSION AREA

UPDATE FILE F3 ⟹

DECOMPRESSION ⟱ M

**(B)**

| COMPRESSION CODE OF CHARACTER DATA | FILE NUMBER | | | | | | |
|---|---|---|---|---|---|---|---|
| | n | ... | i | ... | 3 | 2 | 1 |
| 人 | 0 | ... | 0 | ... | 1 | 1 | 1 |
| 形 | 0 | ... | 0 | ... | 1 | 1 | 0 |
| 紙 | 0 | ... | 0 | ... | 0 | 0 | 1 |
| 人形 | 0 | ... | 0 | ... | 1 | 1 | 0 |
| D⁓ DELETION MAP | 1 | ... | 1 | ... | 1 | 0 | 1 |

F(n+1) — 紙芝居を見た。   F3 — 人形芝居を見た。

M

**(C)**

| COMPRESSION CODE OF CHARACTER DATA | FILE NUMBER | | | | | | | |
|---|---|---|---|---|---|---|---|---|
| | n+1 | n | ... | i | ... | 3 | 2 | 1 |
| : | | | | : | | | | |
| 人 | 0 | | | ...0010111 | | | | |
| 形 | 0 | | | ...1001101 | | | | |
| 紙 | 1 | | | ...10011 | | | | |
| : | | | | : | | | | |
| 人形 | 0 | | | ...00001 | | | | |
| : | | | | : | | | | |
| D⁓ DELETION MAP | 1 | 1 | ... | 1 | ... | 0 | 0 | 1 |

NON-COMPRESSION AREA   COMPRESSION AREA

EP 2 706 466 A1

# FIG.2

CPU 201

ROM 202

RAM 203

MAGNETIC DISK 205

MAGNETIC DISK DRIVE 204

OPTICAL DISK 207

OPTICAL DISK DRIVE 206

DISPLAY 208

200

I/F 209

210 KEYBOARD

211 MOUSE

212 SCANNER

213 PRINTER

NETWORK 214

# FIG.3

301 INFORMATION PROCESSING APPARATUS

304 NETWORK

305 SWITCH

302 INFORMATION PROCESSING APPARATUS

307 WIRELESS BASE STATION

303 INFORMATION PROCESSING APPARATUS

EP 2 706 466 A1

# FIG.4

400

| 401 | | 404 |
|-----|---|------|
| TABULATING UNIT | → | CREATING UNIT |

| 402 | | 405 |
|-----|---|------|
| FIRST GENERATING UNIT | | SECOND GENERATING UNIT |

| 403 | | 406 |
|-----|---|------|
| FIRST COMPRESSING UNIT | | SECOND COMPRESSING UNIT |

# FIG.5

(A) TABULATION OF CHARACTER DATA

(D) GENERATION OF MAP

Fs

M

(B) GENERATION OF HUFFMAN TREE (FOR CHARACTER DATA)

H

(E) GENERATION OF HUFFMAN TREE (FOR MAP)

h

(C) COMPRESSION OF OBJECT FILE GROUP

fs

(F) COMPRESSION OF MAP

M

# FIG.6

OBJECT FILE

(1) TABULATION OF NUMBER OF APPEARANCES

**TABULATION RESULT**

| RANK | CHARACTER DATA | NUMBER OF APPEARANCES |
|------|----------------|-----------------------|
| 1 | 0 | 60451 |
| 2 | > | 53183 |
| : | : | : |

(2) CALCULATION OF COMPRESSION CODE LENGTH

| RANK | CHARACTER DATA | NUMBER OF APPEARANCES | APPEARANCE RATE | OCCURRENCE PROBABILITY | COMPRESSION CODE LENGTH |
|------|----------------|-----------------------|-----------------|------------------------|-------------------------|
| 1 | 0 | 60451 | 4.3% | $1/2^5$ | 5 |
| 2 | > | 53183 | 3.8% | $1/2^5$ | 5 |
| : | : | : | : | : | : |

(3) SPECIFICATION OF NUMBER OF LEAVES

| COMPRESSION CODE LENGTH | NUMBER OF LEAVES |
|-------------------------|------------------|
| 5 | 2 |
| 6 | 9 |
| : | : |
| 11 | 86 |
| : | : |
| 17 | 1 |

(4) CORRECTION OF NUMBER OF LEAVES

| COMPRESSION CODE LENGTH | NUMBER OF LEAVES | NUMBER OF BRANCHES PER LEAF |
|-------------------------|------------------|-----------------------------|
| 5 | 0 | 64 |
| 6 | 6 | 32 |
| : | : | : |
| 12 | 1215 | 1 |

(5) GENERATION OF LEAF STRUCTURE

L1305 ... L2 L1

| COMPRESSION CODE | COMPRESSION CODE LENGTH | CHARACTER DATA | ... |
|------------------|-------------------------|----------------|-----|
| 000000 | 6 | 0 | ... |

(6) GENERATION OF POINTER TO LEAF FOR EACH LEAF

POINTER TO LEAF
L1305

| 1111101011 |  1 POINTER

128 POINTERS

| 000000 | 00000 |
| ' | ' |
| 000000 | 11111 |

POINTER TO LEAF
L1
ROOT STRUCTURE IS FORMED

(7) GENERATION OF NODELESS HUFFMAN TREE

$2^N$-BRANCH NODELESS HUFFMAN TREE

EP 2 706 466 A1

# FIG.7

EP 2 706 466 A1

# FIG.8

| RANK | CHARACTER DATA | | | NUMBER OF APPEAR-ANCES | TOTAL NUMBER | APPEAR-ANCE RATE | BEFORE CORRECTION | |
|---|---|---|---|---|---|---|---|---|
| | TYPE | CODE | CHARACTER (STRING) | | | | OCCURRENCE PROBABILITY | COMPRESSION CODE LENGTH |
| 1 | 16 | 3000 | 0 | 60451 | 1386951 | 0.043585534 | 0.03125 | 5 |
| 2 | 16 | 3E00 | > | 53183 | 1386951 | 0.038345262 | 0.03125 | 5 |
| ⋮ | ⋮ | ⋮ | ⋮ | ⋮ | ⋮ | ⋮ | | |
| 6 | BASIC | 6E30 | <br> | 28999 | 1386951 | 0.020908453 | 0.015625 | 6 |
| ⋮ | ⋮ | ⋮ | ⋮ | ⋮ | ⋮ | ⋮ | | |
| 24 | 16 | 6E30 | の | 15577 | 1386951 | 0.011231111 | 0.0078125 | 7 |
| ⋮ | ⋮ | ⋮ | ⋮ | ⋮ | ⋮ | ⋮ | | |
| 34 | 16 | 7000 | p | 10737 | 1386951 | 0.007741441 | 0.00390625 | 8 |
| ⋮ | ⋮ | ⋮ | ⋮ | ⋮ | ⋮ | ⋮ | | |
| 79 | 16 | 6F30 | は | 3529 | 1386951 | 0.00254443 | 0.001953125 | 9 |
| ⋮ | ⋮ | ⋮ | ⋮ | ⋮ | ⋮ | ⋮ | | |
| 110 | 16 | 6972 | 物 | 1569 | 1386951 | 0.001131258 | 0.000976563 | 10 |
| ⋮ | ⋮ | ⋮ | ⋮ | ⋮ | ⋮ | ⋮ | | |
| 156 | 8 | 0x4E | | 879 | 1386951 | 0.000633764 | 0.000488281 | 11 |
| ⋮ | ⋮ | ⋮ | ⋮ | ⋮ | ⋮ | ⋮ | | |
| 167 | 8 | 0x51 | | 835 | 1386951 | 0.00060204 | 0.000488281 | 11 |
| ⋮ | ⋮ | ⋮ | ⋮ | ⋮ | ⋮ | ⋮ | | |
| 286 | 16 | D552 | 動 | 485 | 1386951 | 0.000349688 | 0.000244141 | 12 |
| ⋮ | ⋮ | ⋮ | ⋮ | ⋮ | ⋮ | ⋮ | | |
| 364 | 8 | 0x93 | | 337 | 1386951 | 0.000242979 | 0.00012207 | 13 |
| ⋮ | ⋮ | ⋮ | ⋮ | ⋮ | ⋮ | ⋮ | | |
| 691 | 16 | 216B | 次 | 145 | 1386951 | 0.000104546 | 6.10352E-05 | 14 |
| ⋮ | ⋮ | ⋮ | ⋮ | ⋮ | ⋮ | ⋮ | | |
| 1022 | 16 | EF83 | 華 | 84 | 1386951 | 6.05645E-05 | 3.05176E-05 | 15 |
| ⋮ | ⋮ | ⋮ | ⋮ | ⋮ | ⋮ | ⋮ | | |
| 1301 | 8 | 0xCE | | 42 | 1386951 | 3.02823E-05 | 1.52588E-05 | 16 |
| 1302 | 8 | 0xFD | | 35 | 1386951 | 2.52352E-05 | 1.52588E-05 | 16 |
| 1303 | 8 | 0xEA | | 33 | 1386951 | 2.37932E-05 | 1.52588E-05 | 16 |
| 1304 | 8 | 0x24 | | 23 | 1386951 | 1.65831E-05 | 1.52588E-05 | 16 |
| 1305 | 8 | 0x23 | | 17 | 1386951 | 1.22571E-05 | 7.62939E-06 | 17 |
| | | | | | TOTAL OCCURRENCE PROBABILITY | | 0.711037 | |

EP 2 706 466 A1

# FIG.9

| COMPRESSION CODE LENGTH | NUMBER OF LEAVES | NUMBER OF LEAVES WITH CORRECTION A | NUMBER OF LEAVES WITH CORRECTION B-1 | NUMBER OF LEAVES WITH CORRECTION B-2 | NUMBER OF LEAVES WITH CORRECTION B-3 | NUMBER OF BRANCHES OF HUFFMAN TREE | |
|---|---|---|---|---|---|---|---|
| | | | | | | PER LEAF | SUBTOTAL |
| 5 | 2 | 2 | 1 | 0 | 0 | 64 | 0 |
| 6 | 9 | 9 | 7 | 6 | 6 | 32 | 192 |
| 7 | 22 | 22 | 19 | 18 | 18 | 16 | 288 |
| 8 | 28 | 28 | 24 | 23 | 23 | 8 | 184 |
| 9 | 29 | 29 | 25 | 23 | 23 | 4 | 92 |
| 10 | 25 | 25 | 21 | 20 | 20 | 2 | 40 |
| 11 | 86 | 1190 | 1208 | 1215 | 1215 | 1 | 1215 |
| 12 | 162 | | | | | | |
| 13 | 251 | | | | | | |
| 14 | 407 | | | | | | |
| 15 | 279 | | | | | | |
| 16 | 4 | | | | | | |
| 17 | 1 | | | | | | |
| TOTAL NUMBER OF LEAVES  TOTAL OCCURRENCE PROBABILITY | 1305  0.711 | 1305  1.146 | 1305  1.042 | 1305  0.982 | 1305  0.982 | | |
| TOTAL NUMBER OF BRANCHES | | | | | | | 2011 |

EP 2 706 466 A1

# FIG.10

| RANK | CHARACTER DATA | | | NUMBER OF APPEARANCES | TOTAL NUMBER | APPEARANCE RATE | BEFORE CORRECTION | | | CORRECTION A | | | CORRECTION B-1 | | | CORRECTION B-2 | | |
|---|---|---|---|---|---|---|---|---|---|---|---|---|---|---|---|---|---|---|
| | TYPE | CODE | CHARACTER (STRING) | | | | OCCURRENCE PROBABILITY | COMPRESSION CODE LENGTH | AVERAGE LENGTH | OCCURRENCE PROBABILITY | COMPRESSION CODE LENGTH | AVERAGE LENGTH | OCCURRENCE PROBABILITY | COMPRESSION CODE LENGTH | AVERAGE LENGTH | OCCURRENCE PROBABILITY | COMPRESSION CODE LENGTH | AVERAGE LENGTH |
| 1 | 16 | 3000 | 0 | 60451 | 1386951 | 0.043586 | 0.03125 | 5 | 0.217928 | 0.03125 | 5 | 0.217928 | 0.03125 | 5 | 0.217928 | 0.015625 | 6 | 0.261513 |
| 2 | 16 | 3E00 | > | 53183 | 1386951 | 0.038345 | 0.03125 | 5 | 0.191726 | 0.03125 | 5 | 0.191726 | 0.015625 | 6 | 0.230072 | 0.015625 | 6 | 0.230072 |
| 3 | 16 | 2200 | , | 33815 | 1386951 | 0.024381 | 0.015625 | 6 | 0.146285 | 0.015625 | 6 | 0.146285 | 0.015625 | 6 | 0.146285 | 0.015625 | 6 | 0.146285 |
| : | : | : | : | : | : | : | : | : | : | : | : | : | : | : | : | : | : | : |
| 12 | 16 | 3400 | 4 | 21501 | 1386951 | 0.015502 | 0.007813 | 7 | 0.108516 | 0.007813 | 7 | 0.108516 | 0.007813 | 7 | 0.108516 | 0.007813 | 7 | 0.108516 |
| : | : | : | : | : | : | : | : | : | : | : | : | : | : | : | : | : | : | : |
| 34 | 16 | 7000 | p | 10737 | 1386951 | 0.007741 | 0.003906 | 8 | 0.061932 | 0.003906 | 8 | 0.061932 | 0.003906 | 8 | 0.061932 | 0.003906 | 8 | 0.061932 |
| : | : | : | : | : | : | : | : | : | : | : | : | : | : | : | : | : | : | : |
| 62 | 16 | 6A30 | な | 5107 | 1386951 | 0.003682 | 0.001953 | 9 | 0.03314 | 0.001953 | 9 | 0.03314 | 0.001953 | 9 | 0.03314 | 0.001953 | 9 | 0.03314 |
| : | : | : | : | : | : | : | : | : | : | : | : | : | : | : | : | : | : | : |
| 91 | 16 | 6430 | つ | 2637 | 1386951 | 0.001901 | 0.000977 | 10 | 0.019013 | 0.000977 | 10 | 0.019013 | 0.000977 | 10 | 0.019013 | 0.000488 | 11 | 0.020914 |
| : | : | : | : | : | : | : | : | : | : | : | : | : | : | : | : | : | : | : |
| 116 | 16 | 625F | 形 | 1309 | 1386951 | 0.000944 | 0.000488 | 11 | 0.010382 | 0.000488 | 11 | 0.010382 | 0.000488 | 11 | 0.010382 | 0.000488 | 11 | 0.010382 |
| : | : | : | : | : | : | : | : | : | : | : | : | : | : | : | : | : | : | : |
| 202 | 8 | 75 | | 673 | 1386951 | 0.000485 | 0.000244 | 12 | 0.005823 | 0.000488 | 11 | 0.005338 | 0.000488 | 11 | 0.005338 | 0.000488 | 11 | 0.005338 |
| : | : | : | : | : | : | : | : | : | : | : | : | : | : | : | : | : | : | : |
| 364 | 8 | 93 | | 337 | 1386951 | 0.000243 | 0.000122 | 13 | 0.003159 | 0.000488 | 11 | 0.002673 | 0.000488 | 11 | 0.002673 | 0.000488 | 11 | 0.002673 |
| : | : | : | : | : | : | : | : | : | : | : | : | : | : | : | : | : | : | : |
| 615 | 8 | 45 | | 169 | 1386951 | 0.000122 | 6.10352E-05 | 14 | 0.001706 | 0.000488 | 11 | 0.00134 | 0.000488 | 11 | 0.00134 | 0.000488 | 11 | 0.00134 |
| : | : | : | : | : | : | : | : | : | : | : | : | : | : | : | : | : | : | : |
| 1022 | 16 | EF83 | 華 | 84 | 1386951 | 6.05645E-05 | 3.05176E-05 | 15 | 0.000908 | 0.000488 | 11 | 0.000666 | 0.000488 | 11 | 0.000666 | 0.000488 | 11 | 0.000666 |
| : | : | : | : | : | : | : | : | : | : | : | : | : | : | : | : | : | : | : |
| 1301 | 8 | CE | | 42 | 1386951 | 3.02823E-05 | 1.52588E-05 | 16 | 0.000485 | 0.000488 | 11 | 0.000333 | 0.000488 | 11 | 0.000333 | 0.000488 | 11 | 0.000333 |
| : | : | : | : | : | : | : | : | : | : | : | : | : | : | : | : | : | : | : |
| 1305 | 8 | 23 | | 17 | 1386951 | 1.22571E-05 | 7.62939E-06 | 17 | 0.000208 | 0.000488 | 11 | 0.000135 | 0.000488 | 11 | 0.000135 | 0.000488 | 11 | 0.000135 |
| TOTAL | | | | 1386951 | | 1 | 0.711037 | | 8.179405 | 1.146484 | | 7.878965 | 1.049316 | | 8.103753 | 0.98584 | | 8.277232 |

# FIG.11

| COMPRES-SION CODE LENGTH | COMPRES-SION CODE |
|---|---|
| 6 BIT (6 CODES) | 000000 |
| | 000001 |
| | 000010 |
| | 000011 |
| | 000100 |
| | 000101 |

POINTER TO LEAF (BRANCH NUMBER)

| 000000 | 000000 |
|---|---|
| - | |
| 000000 | 111111 |

} 32 POINTERS

SAME BIT STRING AS COMPRESSION CODE

⋮

| 000101 | 000000 |
|---|---|
| - | |
| 000101 | 111111 |

} 32 POINTERS

SAME BIT STRING AS COMPRESSION CODE

192 POINTERS

# FIG.12

ROOT STRUCTURE

| Label | Code | Split | | Leaf |
|---|---|---|---|---|
| L1P(1) | 000000 | 00000 | → | STRUCTURE OF LEAF L1 |
| - | | - | | |
| L1P(32) | 000000 | 11111 | | ⋮ |
| ⋮ | | ⋮ | | |
| L6P(1) | 000101 | 000000 | → | STRUCTURE OF LEAF L6 |
| - | | - | | |
| L6P(32) | 000101 | 111111 | | |
| L7P(1) | 0001100 | 0000 | → | STRUCTURE OF LEAF L7 |
| - | | - | | |
| L7P(16) | 0001100 | 1111 | | ⋮ |
| ⋮ | | ⋮ | | |
| L24P(1) | 0011111 | 0000 | → | STRUCTURE OF LEAF L24 |
| - | | - | | |
| L24P(16) | 0011111 | 1111 | | |
| L25P(1) | 01000000 | 000 | → | STRUCTURE OF LEAF L25 |
| - | | - | | |
| L25P(8) | 01000000 | 111 | | ⋮ |
| ⋮ | | ⋮ | | |
| L46P(1) | 01010110 | 000 | → | STRUCTURE OF LEAF L47 |
| - | | - | | |
| L46P(8) | 01010110 | 111 | | |
| L48P(1) | 010101110 | 00 | → | STRUCTURE OF LEAF L46 |
| L48P(2) | 010101110 | 01 | | |
| L48P(3) | 010101110 | 10 | | |
| L48P(4) | 010101110 | 11 | | ⋮ |
| ⋮ | | ⋮ | | |
| L70P(1) | 011000100 | 00 | → | STRUCTURE OF LEAF L70 |
| L70P(2) | 011000100 | 01 | | |
| L70P(3) | 011000100 | 10 | | |
| L70P(4) | 011000100 | 11 | | |
| L71P(1) | 0110000100 | 0 | → | STRUCTURE OF LEAF L71 |
| L71P(2) | 0110000100 | 1 | | |
| ⋮ | | ⋮ | | ⋮ |
| L90P(1) | 0110011101 | 0 | → | STRUCTURE OF LEAF L90 |
| L90P(2) | 0110011101 | 1 | | |
| L91P | 01100111100 | | → | STRUCTURE OF LEAF L91 |
| ⋮ | ⋮ | | | ⋮ |
| L1305P | 11111111010 | | → | STRUCTURE OF LEAF L1305 |

COMPRESSION CODE LENGTH 6 BIT

COMPRESSION CODE LENGTH 7 BIT

COMPRESSION CODE LENGTH 8 BIT

COMPRESSION CODE LENGTH 9 BIT

COMPRESSION CODE LENGTH 10 BIT

COMPRESSION CODE LENGTH 11 BIT

# FIG.13

GENERAL
STRUCTURE OF LEAF

| STRUCTURE OF LEAF L1 |
| STRUCTURE OF LEAF L2 |
| ⋮ |
| STRUCTURE OF LEAF L# |
| ⋮ |

STRUCTURE OF LEAF L#

| COMPRESSION CODE | COMPRESSION CODE LENGTH |
|---|---|
| LEAF LABEL | DECOMPRESSION TYPE ETC. |
| CHARACTER CODE (8/16 BITS) OR POINTER TO BASIC WORD | |
| | COLLATION FLAG |
| APPEARANCE RATE | APPEARANCE RATE AREA |

# FIG.14

1400

| SPECIFIC SINGLE CHARACTER STRUCTURE | |
|---|---|
| CHARACTER CODE | POINTER TO LEAF |
| ⋮ | ⋮ |
| e691 (0x216B: 次) | POINTER TO LEAF OF e691 |
| ⋮ | ⋮ |
| e24 (0x6E30: の) | POINTER TO LEAF OF e24 |
| ⋮ | ⋮ |
| e79 (0x6F30: は) | POINTER TO LEAF OF e79 |
| ⋮ | ⋮ |

## FIG.15

1500

| DIVIDED CHARACTER CODE STRUCTURE | |
|---|---|
| DIVIDED CHARACTER CODE | POINTER TO LEAF |
| 0x00 | POINTER TO LEAF OF "0x00" |
| 0x01 | POINTER TO LEAF OF "0x01" |
| ⋮ | ⋮ |
| 0xFF | POINTER TO LEAF OF "0xFF" |

## FIG.16

1600

| BASIC WORD STRUCTURE | |
|---|---|
| TOTAL NUMBER OF BASIC WORDS | 1000 |
| MAXIMUM BIT LENGTH OF BASIC WORD | Lsmax |
| BIT LENGTH OF BASIC WORD s1 | Ls1 |
| BASIC WORD s1 ("相方") | |
| POINTER TO LEAF OF BASIC WORD s1 | |
| ⋮ | |
| BIT LENGTH OF BASIC WORD s1000 | Ls1000 |
| BASIC WORD s1000 ("ワン切り") | |
| POINTER TO LEAF OF BASIC WORD s1000 | |
| EOT (0xFFFF) | |

# FIG.17

| | SPECIFIC SINGLE CHARACTER APPEARANCE MAP DIVIDED CHARACTER CODE APPEARANCE MAP | | BI-GRAM CHARACTER STRING APPEARANCE MAP | |
|---|---|---|---|---|
| (A) 竜馬は脱藩した ↑ | COMPRESSION CODE OF "竜" | FILE NUMBER  123 … i  / 000 … 1 | | |
| (B) 竜馬は脱藩した ↑ | COMPRESSION CODE OF "馬" | FILE NUMBER  123 … i  / 001 … 1 | COMPRESSION CODE STRING OF "竜馬" | FILE NUMBER  123 … i  / 000 … 1 |
| (C) 竜馬は脱藩した ↑ | COMPRESSION CODE OF "は" | FILE NUMBER  123 … i  / 111 … 1 | COMPRESSION CODE STRING OF "馬は" | FILE NUMBER  123 … i  / 000 … 1 |
| (D) 竜馬は脱藩した  [0x81 \| 0x31] ↑ | COMPRESSION CODE OF "0x81" | FILE NUMBER  123 … i  / 100 … 1 | COMPRESSION CODE STRING OF "は 0x81" | FILE NUMBER  123 … i  / 100 … 1 |
| (E) 竜馬は脱藩した  [0x81 \| 0x31] ↑ | COMPRESSION CODE OF "0x31" | FILE NUMBER  123 … i  / 011 … 1 | COMPRESSION CODE STRING OF "0x81 0x31" | FILE NUMBER  123 … i  / 010 … 1 |
| (F) 竜馬は脱藩した  [0xE9 \| 0x85] ↑ | COMPRESSION CODE OF "0xE9" | FILE NUMBER  123 … i  / 011 … 1 | COMPRESSION CODE STRING OF "0x31 0xE9" | FILE NUMBER  123 … i  / 000 … 1 |
| (G) 竜馬は脱藩した  [0xE9 \| 0x85] ↑ | COMPRESSION CODE OF "0x85" | FILE NUMBER  123 … i  / 100 … 1 | COMPRESSION CODE STRING OF "0xE9 0x85" | FILE NUMBER  123 … i  / 000 … 1 |
| (H) 竜馬は脱藩した ↑ | COMPRESSION CODE OF "し" | FILE NUMBER  123 … i  / 111 … 1 | COMPRESSION CODE STRING OF "0x85 し" | FILE NUMBER  123 … i  / 000 … 1 |
| (I) 竜馬は脱藩した ↑ | COMPRESSION CODE OF "た" | FILE NUMBER  123 … i  / 111 … 1 | COMPRESSION CODE STRING OF "した" | FILE NUMBER  123 … i  / 111 … 1 |

# FIG.18

```
( START )
        │
        ▼                              ┌─ S1801 (FIG.19)
┌─────────────────────────────────────────────────┐
│              TABULATION PROCESS                  │
└─────────────────────────────────────────────────┘
        │
        ▼                              ┌─ S1802 (FIG.25)
┌─────────────────────────────────────────────────┐
│   MAP ASSIGNMENT NUMBER DETERMINATION PROCESS    │
└─────────────────────────────────────────────────┘
        │
        ▼                              ┌─ S1803 (FIG.26)
┌─────────────────────────────────────────────────┐
│             RE-TABULATION PROCESS                │
└─────────────────────────────────────────────────┘
        │
        ▼                              ┌─ S1804 (FIG.32)
┌─────────────────────────────────────────────────┐
│        HUFFMAN TREE GENERATION PROCESS           │
└─────────────────────────────────────────────────┘
        │
        ▼                              ┌─ S1805 (FIG.36)
┌─────────────────────────────────────────────────┐
│              MAP CREATION PROCESS                │
└─────────────────────────────────────────────────┘
        │
        ▼
     ( END )
```

# FIG.19

```
┌─────────────────────────────────────────────────┐
│              TABULATION PROCESS                  │─ S1801
└─────────────────────────────────────────────────┘
        │
        ▼
┌─────────────────────────────────────────────────┐
│                    i=1                           │─ S2601
└─────────────────────────────────────────────────┘
        │
        ▼
┌─────────────────────────────────────────────────┐
│              READ OBJECT FILE Fi                 │─ S2602
└─────────────────────────────────────────────────┘
        │
        ▼
┌─────────────────────────────────────────────────┐
│       TABULATION PROCESS OF OBJECT FILE Fi       │─ S2603
└─────────────────────────────────────────────────┘    (FIG.20)
        │
        ▼                          ┌─ S2604
      ╱ i>n? ╲─────────────────────────────── YES
      ╲      ╱
        │ NO                       ┌─ S2605
        ▼
┌─────────────────────────────────────────────────┐
│                   i=i+1                          │
└─────────────────────────────────────────────────┘
        │
        ▼
    TO S1802
```

# FIG.20

| TABULATION PROCESS OF OBJECT FILE Fi | S2603 |

↓

| OBJECT CHARACTER=LEADING CHARACTER OF OBJECT FILE Fi | S2001 |

↓

| BASIC WORD TABULATION PROCESS | S2002 (FIG.22) |

↓

| INCREMENT NUMBER OF APPEARANCES OF OBJECT CHARACTER | S2003 |

↓

OBJECT CHARACTER =ENDING CHARACTER OF OBJECT FILE Fi? — S2004 — YES

↓ NO — S2005

| SHIFT OBJECT CHARACTER BY ONE CHARACTER |

↓

TO S2604

# FIG.21

2100

| CHARACTER APPEARANCE FREQUENCY TABULATION TABLE | |
|---|---|
| CHARACTER | NUMBER OF APPEARANCES |
| 0 | ... |
| ⋮ | ⋮ |
| 9 | ... |
| A | ... |
| ⋮ | ⋮ |
| Z | ... |
| a | ... |
| ⋮ | ⋮ |
| z | ... |
| あ | ... |
| ⋮ | ⋮ |
| ん | ... |
| ア | ... |
| ⋮ | ⋮ |
| ン | ... |
| 足 | ... |
| ⋮ | ⋮ |
| 我 | ... |

# FIG.22

BASIC WORD TABULATION PROCESS ⎯ S2002

↓

LONGEST MATCH SEARCH PROCESS ⎯ S2201 (FIG.24)

↓

S2202
LONGEST MATCHING BASIC WORD EXISTS? — NO

↓ YES   S2203

INCREMENT NUMBER OF APPEARANCES OF LONGEST MATCHING BASIC WORD

↓

TO S2003

# FIG.23

2300

| BASIC WORD APPEARANCE FREQUENCY TABULATION TABLE | |
|---|---|
| BASIC WORD | NUMBER OF APPEARANCES |
| <br> | ... |
| </a> | ... |
| <a name=" | ... |
| ⋮ | ⋮ |

# FIG.24

LONGEST MATCH SEARCH PROCESS — S2201 (S3801, S6102, S6703)

c=1 — S2401

PERFORM BINARY SEARCH FOR BASIC WORD — S2402

HIT? — S2403

NO

YES

PERFECT MATCHING? — S2404

NO

YES — S2405

RETAIN AS LONGEST MATCH CANDIDATE

BINARY SEARCH IS COMPLETED? — S2406

NO

YES

c-TH CHARACTER =ENDING CHARACTER OF OBJECT FILE Fi? — S2407

YES

NO

c>cmax? — S2408

YES

NO — S2409

c=c+1

LONGEST MATCH CANDIDATE EXISTS? — S2410

NO

YES — S2411

DETERMINE LONGEST OF LONGEST MATCH CANDIDATES AS LONGEST MATCHING BASIC WORD

TO S2202 (S3802, S6103, S6704)

# FIG.25

```
MAP ASSIGNMENT NUMBER DETERMINATION PROCESS ──── S1802
                        │
                        ▼
SORT IN DESCENDING ORDER OF APPEARANCE ──── S2501
              FREQUENCY
                        │
                        ▼
        APPEARANCE RANK OF BASIC WORDS ──── S2502
                  Rw=1
                        │
                        ▼
COUNT CUMULATIVE APPEARANCE NUMBER Arw UNTIL ──── S2503
          APPEARANCE RANK Rw
                        │
                        ▼
```

S2504

$Arw > Pw \times Aw$? ── NO ──→ S2505 · Rw=Rw+1

YES ── S2506

```
MAP ASSIGNMENT NUMBER OF BASIC WORDS
              Nw=Rw-1
                        │
                        ▼
APPEARANCE RANK OF SINGLE CHARACTERS ──── S2507
                  Rc=1
                        │
                        ▼
COUNT CUMULATIVE APPEARANCE NUMBER Arc UNTIL ──── S2508
          APPEARANCE RANK Rc
                        │
                        ▼
```

S2509

$Arc > Pc \times Ac$? ── NO ──→ S2510 · Rc=Rc+1

YES ── S2511

```
MAP ASSIGNMENT NUMBER OF SINGLE CHARACTERS
              Nc=Rc-1
                        │
                        ▼
               TO S1803
```

56

# FIG.26

| RE-TABULATION PROCESS | —S1803 |

↓

| i=1 | —S2601 |

↓

| READ OBJECT FILE Fi | —S2602 |

↓

| RE-TABULATION PROCESS OF OBJECT FILE Fi | S2603 (FIG.27) |

↓

S2604

i>n?　　　　YES

↓ NO　　S2605

| i=i+1 |

↓

TO S1804

# FIG.27

```
┌─────────────────────────────────────────────────────┐
│        RE-TABULATION PROCESS OF OBJECT FILE Fi        │──S2603
└─────────────────────────────────────────────────────┘
                          │
                          ▼
┌─────────────────────────────────────────────────────┐
│  OBJECT CHARACTER= LEADING CHARACTER OF OBJECT        │──S2701
│                      FILE Fi                          │
└─────────────────────────────────────────────────────┘
```

S2702

SPECIFIC SINGLE CHARACTER?  YES

NO  S2703

DIVIDE INTO UPPER DIVIDED CHARACTER CODE AND LOWER DIVIDED CHARACTER CODE

ADD ONE TO NUMBER OF APPEARANCES OF DIVIDED CHARACTER CODE SAME AS UPPER DIVIDED CHARACTER CODE  S2704

ADD ONE TO NUMBER OF APPEARANCES OF DIVIDED CHARACTER CODE SAME AS LOWER DIVIDED CHARACTER CODE  S2705

BI-GRAM CHARACTER STRING IDENTIFICATION PROCESS  S2706

ADD ONE TO NUMBER OF APPEARANCES OF IDENTIFIED BI-GRAM CHARACTER STRING  S2707

S2708

SUBSEQUENT CHARACTER EXISTS?  NO

YES  S2709

SET SUBSEQUENT CHARACTER AS OBJECT CHARACTER

TO S2604

# FIG.28

2800

| UPPER DIVIDED CHARACTER CODE APPEARANCE FREQUENCY TABULATION TABLE | |
|---|---|
| UPPER DIVIDED CHARACTER CODE | NUMBER OF APPEARANCES |
| 00 | ... |
| 01 | ... |
| 02 | ... |
| ⋮ | ⋮ |
| FF | ... |

# FIG.29

2900

| LOWER DIVIDED CHARACTER CODE APPEARANCE FREQUENCY TABULATION TABLE | |
|---|---|
| LOWER DIVIDED CHARACTER CODE | NUMBER OF APPEARANCES |
| 00 | ... |
| 01 | ... |
| 02 | ... |
| ⋮ | ⋮ |
| FF | ... |

FIG.30

BI-GRAM CHARACTER STRING
IDENTIFICATION PROCESS — S2706 (S4101, S6209, S6809)

S3001

OBJECT
CHARACTER IS DIVIDED? — YES

NO

S3006

UPPER/LOWER? — LOWER

UPPER

S3002

PREVIOUS
CHARACTER EXISTS? — NO

YES

S3007

PREVIOUS
CHARACTER IS DIVIDED? — YES

NO S3008

S3003

PREVIOUS
CHARACTER IS DIVIDED? — YES

NO S3004

DETERMINE UPPER DIVIDED
CHARACTER CODE AND
LOWER DIVIDED CHARACTER
CODE DIVIDED FROM OBJECT
CHARACTER AS BI-GRAM
CHARACTER STRING

S3010

DETERMINE PREVIOUS SINGLE
CHARACTER AND UPPER DIVIDED
CHARACTER CODE DIVIDED FROM
OBJECT CHARACTER AS BI-GRAM
CHARACTER STRING

DETERMINE BI-GRAM SINGLE
CHARACTER STRING AS BI-GRAM
CHARACTER STRING

S3005

DETERMINE LOWER DIVIDED CHARACTER
CODE OF PREVIOUS CHARACTER AND
OBJECT CHARACTER AS BI-GRAM
CHARACTER STRING

S3009

DETERMINE LOWER DIVIDED CHARACTER
CODE OF PREVIOUS CHARACTER AND
UPPER DIVIDED CHARACTER CODE
DIVIDED FROM OBJECT CHARACTER AS
BI-GRAM CHARACTER STRING

TO S2707 (S4102, S6210, S6810)

EP 2 706 466 A1

60

# FIG.31

3100

| BI-GRAM CHARACTER STRING APPEARANCE FREQUENCY TABULATION TABLE | |
| --- | --- |
| BI-GRAM CHARACTER STRING | NUMBER OF APPEARANCES |
| ああ | ... |
| あい | ... |
| あう | ... |
| ⋮ | ⋮ |

# FIG.32

| | |
| --- | --- |
| HUFFMAN TREE GENERATION PROCESS | S1804 |
| DETERMINE UPPER LIMIT LENGTH N | S3201 |
| CORRECTION PROCESS | S3202 |
| GENERATE LEAF STRUCTURE | S3203 |
| BRANCH NUMBER SPECIFICATION PROCESS | S3204 (FIG.33) |
| CONSTRUCTION PROCESS | S3205 (FIG.34) |

TO S1805

# FIG.33

| BRANCH NUMBER SPECIFICATION PROCESS | —S3204 |

| CALCULATE DIFFERENCE D (=N-M) | —S3301 |

| j=0<br>CL=N | —S3302 |

S3303

j > D? → YES → TO S3205

NO

| CALCULATE BRANCH NUMBER B(CL) PER LEAF | —S3304 |

| CALCULATE TOTAL BRANCH NUMBER B(L)=L(CL)×B(CL) | —S3305 |

| j=j+1<br>CL=CL-1 | —S3306 |

# FIG.34

| CONSTRUCTION PROCESS | —S3205 |

| CL=M | —S3401 |

S3402

UNSELECTED LEAF EXISTS? → NO → S3404 CL>N? → YES → TO S1805

YES

S3403 (FIG.35)

| POINTER-TO-LEAF GENERATION PROCESS |

NO → S3405

| CL=CL+1 |

# FIG.35

POINTER-TO-LEAF GENERATION PROCESS ——S3403

↓

SELECT UNSELECTED LEAF L ——S3501

↓

k=1 ——S3502

↓

SET PRECEDING BIT STRING OF PL(k) AS COMPRESSION CODE ——S3503

↓

SET BIT LENGTH OF SUBSEQUENT BIT STRING OF PL(k), AND SET INITIAL VALUES OF SUBSEQUENT BIT STRING TO ALL ZERO ——S3504

↓

STORE PL(k) INTO ROOT STRUCTURE ——S3505

↓

k>b(CL)? ——S3406 — YES

↓ NO

k=k+1 ——S3507

↓

INCREMENT SUBSEQUENT BIT STRING AND NEWLY GENERATE PL(k) ——S3508

↓

STORE PL(k) INTO ROOT STRUCTURE ——S3509

↓

TO S3402

# FIG.36

```
┌─────────────────────────────────────────┐
│         MAP CREATION PROCESS            │──── S1805
└─────────────────────────────────────────┘
                    │
┌─────────────────────────────────────────┐
│                  i=1                    │──── S3601
└─────────────────────────────────────────┘
                    │
┌─────────────────────────────────────────┐
│          READ OBJECT FILE Fi            │──── S3602
└─────────────────────────────────────────┘
                    │
┌─────────────────────────────────────────┐
│  MAP CREATION PROCESS OF OBJECT FILE Fi │──── S3603 (FIG.37)
└─────────────────────────────────────────┘
                    │
              ◇ i>n? ◇──── S3604    YES
               NO │
┌─────────────────────────────────────────┐
│                 i=i+1                   │──── S3605
└─────────────────────────────────────────┘
                    │
               ( END )
```

# FIG.37

MAP CREATION PROCESS OF OBJECT FILE Fi ——S3603

OBJECT CHARACTER=LEADING CHARACTER OF OBJECT FILE Fi ——S3701

BASIC WORD APPEARANCE MAP CREATION PROCESS — S3702 (FIG.38)

SPECIFIC SINGLE CHARACTER APPEARANCE MAP CREATION PROCESS — S3703 (FIG.39)

BI-GRAM CHARACTER STRING APPEARANCE MAP CREATION PROCESS — S3704 (FIG.41)

S3705
OBJECT CHARACTER =ENDING CHARACTER OF OBJECT FILE Fi? — YES

NO — S3706

SHIFT OBJECT CHARACTER BY ONE CHARACTER

TO S3604

# FIG.38

```
┌─────────────────────────────────────────────┐
│ BASIC WORD APPEARANCE MAP CREATION          │── S3702
│ PROCESS                                      │
└─────────────────────────────────────────────┘
                    ↓
┌─────────────────────────────────────────────┐
│ LONGEST MATCH SEARCH PROCESS                │── S3801
│                                              │   (FIG.24)
└─────────────────────────────────────────────┘
                    ↓
              S3802
         ╱────────────────╲                     NO
        ╱  LONGEST MATCHING ╲ ───────────────────────┐
        ╲  BASIC WORD EXISTS? ╱                       │
         ╲────────────────╱                           │
                │ YES                                 │
              S3803                         YES        │
         ╱────────────────╲ ─────────────────────┐    │
        ╱   ALREADY SET?    ╲                     │    │
         ╲────────────────╱                       │    │
                │ NO                              │    │
┌─────────────────────────────────────────────┐  │    │
│ ACCESS LEAF OF LONGEST MATCHING BASIC WORD TO│── S3804│
│ ACQUIRE COMPRESSION CODE                     │  │    │
└─────────────────────────────────────────────┘  │    │
                    ↓                             │    │
┌─────────────────────────────────────────────┐  │    │
│ SET ACQUIRED COMPRESSION CODE AS POINTER TO  │  │    │
│ BASIC WORD APPEARANCE MAP FOR LONGEST        │── S3805│
│ MATCHING BASIC WORD                          │  │    │
└─────────────────────────────────────────────┘  │    │
                    ↓ ◄───────────────────────────┘    │
┌─────────────────────────────────────────────┐       │
│ SET BIT OF OBJECT FILE Fi TO ON IN BASIC WORD│── S3806 │
│ APPEARANCE MAP                               │       │
└─────────────────────────────────────────────┘       │
                    ↓ ◄────────────────────────────────┘
               TO S3703
```

# FIG.39

```
┌─────────────────────────────────────────────────┐
│ SPECIFIC SINGLE CHARACTER APPEARANCE MAP         │──S3703
│ CREATION PROCESS                                 │
└─────────────────────────────────────────────────┘
                        │
                        ▼
┌─────────────────────────────────────────────────┐
│ BINARY SEARCH FOR OBJECT CHARACTER               │──S3901
└─────────────────────────────────────────────────┘
                        │
                        ▼
              ╱───────────────╲         NO
             ╱    MATCH?        ╲──────────────────────────┐
             ╲                 ╱                           │
              ╲───────────────╱  S3902          S3903      │
                    │ YES    ╲__S3904           (FIG.40)    │
                    ▼                                       ▼
┌───────────────────────────────────┐   ┌───────────────────────────────┐
│ ACCESS LEAF OF MATCHING SINGLE    │   │ DIVIDED CHARACTER             │
│ CHARACTER TO ACQUIRE COMPRESSION  │   │ CODE APPEARANCE MAP           │
│ CODE                              │   │ CREATION PROCESS              │
└───────────────────────────────────┘   └───────────────────────────────┘
                    │                                       │
                    ▼                                       │
          ╱─────────────────╲         YES                   │
         ╱   ALREADY SET?     ╲──────────────┐              │
         ╲                   ╱                │              │
          ╲─────────────────╱  S3905         │              │
                │ NO            ┌──S3906      │              │
                ▼                            │              │
┌─────────────────────────────────────────┐ │              │
│ SET ACQUIRED COMPRESSION CODE AS         │ │              │
│ POINTER TO SPECIFIC SINGLE CHARACTER     │ │              │
│ APPEARANCE MAP FOR MATCHING SINGLE       │ │              │
│ CHARACTER                                │ │              │
└─────────────────────────────────────────┘ │              │
                │◄───────────────────────────┘              │
                ▼                                            │
┌─────────────────────────────────────────┐                │
│ SET BIT OF OBJECT FILE Fi TO ON IN       │                │
│ SPECIFIC SINGLE CHARACTER APPEARANCE MAP │                │
└─────────────────────────────────────────┘                │
     S3907         │◄──────────────────────────────────────┘
                   ▼
              TO S3704
```

# FIG.40

DIVIDED CHARACTER CODE APPEARANCE MAP CREATION PROCESS — S3903

↓

DIVIDE OBJECT CHARACTER — S4001

↓

ACCESS LEAF OF UPPER DIVIDED CHARACTER CODE TO ACQUIRE COMPRESSION CODE — S4002

↓

S4003
ALREADY SET FOR UPPER DIVIDED CHARACTER CODE? — YES

NO ↓

SET ACQUIRED COMPRESSION CODE AS POINTER TO APPEARANCE MAP OF UPPER DIVIDED CHARACTER CODE — S4004

↓

SET BIT OF OBJECT FILE Fi TO ON IN APPEARANCE MAP OF UPPER DIVIDED CHARACTER CODE — S4005

↓

ACCESS LEAF OF LOWER DIVIDED CHARACTER CODE TO ACQUIRE COMPRESSION CODE — S4006

↓

S4007
ALREADY SET FOR LOWER DIVIDED CHARACTER CODE? — YES

NO ↓

SET ACQUIRED COMPRESSION CODE AS POINTER TO APPEARANCE MAP OF LOWER DIVIDED CHARACTER CODE — S4008

↓

SET BIT OF OBJECT FILE Fi TO ON IN APPEARANCE MAP OF LOWER DIVIDED CHARACTER CODE — S4009

↓

TO S3704

# FIG.41

| BI-GRAM CHARACTER STRING APPEARANCE MAP CREATION PROCESS | ~S3704 |

| BI-GRAM CHARACTER STRING IDENTIFICATION PROCESS | S4101 (FIG.30) |

IDENTIFIED? — S4102

NO

YES

| BI-GRAM CHARACTER STRING APPEARANCE MAP GENERATION PROCESS | S4103 (FIG.42) |

TO S3705

# FIG.42

| BI-GRAM CHARACTER STRING APPEARANCE MAP GENERATION PROCESS | ~S4103 |

| ACCESS LEAF OF FIRST GRAM TO ACQUIRE COMPRESSION CODE OF FIRST GRAM | ~S4201 |

| ACCESS LEAF OF SECOND GRAM TO ACQUIRE COMPRESSION CODE OF SECOND GRAM | ~S4202 |

| CONCATENATE COMPRESSION CODES | ~S4203 |

ALREADY SET? — S4204

YES

NO

| SET CONCATENATED COMPRESSION CODE AS POINTER TO APPEARANCE MAP OF IDENTIFIED BI-GRAM CHARACTER STRING | ~S4205 |

| SET BIT OF OBJECT FILE Fi TO ON IN APPEARANCE MAP FOR IDENTIFIED BI-GRAM CHARACTER STRING | ~S4206 |

TO S3705

# FIG.43

OBJECT FILE

COMPRESSION OBJECT CHARACTER CODE

COMPRESSION OBJECT CHARACTER CODE

BINARY TREE SEARCH

1600

BASIC WORD STRUCTURE

⋮

BASIC WORD ra

POINTER TO LEAF OF BASIC WORD ra

⋮

EOT

MATCH

OR

MISMATCH

CHARACTER CODE eb (16 BITS)

BINARY TREE SEARCH

1400

SPECIFIC SINGLE CHARACTER STRUCTURE

⋮

CHARACTER CODE eb

POINTER TO LEAF OF CHARACTER Eb

⋮

MATCH

OR

MISMATCH

CHARACTER CODE DIVISION

DIVIDED CHARACTER CODE Dc1 (UPPER 8 BITS)

ACCESS

DIVIDED CHARACTER CODE Dc2 (LOWER 8 BITS)

ACCESS

1500

DIVIDED CHARACTER CODE STRUCTURE

⋮

POINTER TO LEAF OF DIVIDED CHARACTER CODE Dc1

⋮

POINTER TO LEAF OF DIVIDED CHARACTER CODE Dc2

⋮

LEAF AREA

STRUCTURE OF LEAF L1

⋮

STRUCTURE OF LEAF La

⋮

STRUCTURE OF LEAF Lb

⋮

STRUCTURE OF LEAF Lc1

⋮

STRUCTURE OF LEAF Lc2

⋮

STRUCTURE OF LEAF L1295

COMPRESSION BUFFER

4300

COMPRESSION CODE    COMPRESSION CODE

FIG.44

```
            ┌─────────────┐
            │    START    │
            └──────┬──────┘
                   ▼
┌──────────────────────────────────────────┐
│                  p=1                      │── S4401
└──────────────────────────────────────────┘
     ┌─────────────▼──────────────────────────┐
     │      READ OBJECT FILE Fp               │── S4402
     └────────────────────────────────────────┘
     ┌────────────▼───────────────────────────┐
     │        COMPRESSION PROCESS             │── S4403
     └────────────────────────────────────────┘    (FIG.45)
     ┌────────────▼───────────────────────────┐
     │               p=p+1                    │── S4404
     └────────────────────────────────────────┘
                   ▼
NO  ◄────────────  p>n?  ──────────────── S4405
                   │
                  YES
                   ▼
            ┌─────────────┐
            │     END     │
            └─────────────┘
```

# FIG.45

COMPRESSION PROCESS — S4403

C

S4501

COMPRESSION OBJECT CHARACTER CODE EXISTS? — NO

YES

ACQUIRE COMPRESSION OBJECT CHARACTER CODE — S4502

S4511 — STORE COMPRESSION FILE fp

TO S4404

LEADING COMPRESSION OBJECT CHARACTER CODE? — S4503 — NO

YES

ACQUIRE LEADING POSITION — S4504

PERFORM BINARY TREE SEARCH OF BASIC WORD STRUCTURE — S4505

MATCH? — S4506 — NO

YES

BASIC WORD? — S4507 — NO

YES

B

USE POINTER TO LEAF OF BASIC WORD TO ACCESS LEAF STRUCTURE — S4508

EXTRACT COMPRESSION CODE OF BASIC WORD — S4509

STORE INTO COMPRESSION BUFFER — S4510

# FIG.46

B

REFER TO LEADING POSITION TO ACQUIRE COMPRESSION OBJECT CHARACTER CODE —S4601

PERFORM BINARY TREE SEARCH OF SPECIFIC SINGLE CHARACTER STRUCTURE —S4602

S4603
MATCH? — NO

YES

S4604
USE POINTER TO LEAF OF CORRESPONDING CHARACTER TO ACCESS LEAF STRUCTURE

D

EXTRACT COMPRESSION CODE OF COMPRESSION OBJECT CHARACTER CODE —S4605

STORE INTO COMPRESSION BUFFER —S4606

C

# FIG.47

D

DIVIDE COMPRESSION OBJECT CHARACTER CODE ~S4701

EXTRACT DIVIDED CHARACTER CODE OF UPPER 8 BITS ~S4702

PERFORM BINARY TREE SEARCH ~S4703

USE POINTER TO LEAF OF DIVIDED CHARACTER CODE TO ACCESS LEAF STRUCTURE ~S4704

EXTRACT COMPRESSION CODE OF DIVIDED CHARACTER CODE ~S4705

STORE INTO COMPRESSION BUFFER ~S4706

S4707

LOWER 8 BITS ARE ALREADY SEARCHED?　YES

NO　S4708

EXTRACT DIVIDED CHARACTER CODE OF LOWER 8 BITS

B

# FIG.48

AVERAGE APPEARANCE
RATE OF ONE KANJI
CHARACTER
0.077 (462/6000)

APPEARANCE RATE OF ONE CHARACTER

AREA
DIVISION

| | | |
|---|---|---|
| 0 | | |
| 1/32 | 0.031 | AREA E |
| 1/16 | 0.063 | AREA D |
| 1/8 | 0.125 | AREA C |
| 1/4 | 0.250 | AREA B |
| 1/2 | 0.500 | AREA A |
| 3/4 | 0.750 | AREA A' |
| 7/8 | 0.875 | AREA B' |
| 15/16 | 0.938 | AREA C' |
| 31/32 | 0.969 | AREA D' |
| 1.00 | 1.000 | AREA E' |

# FIG.49

4900

| APPEARANCE RATE AREA | COMPRESSION PATTERN | COMPRESSION RATE |
|---|---|---|
| E | 16+1 (64-bit) type HUFFMAN TREE | 7% |
| D | 16+1 (32-bit) type HUFFMAN TREE | 14% |
| C | 16+1 (16-bit) type HUFFMAN TREE | 28% |
| B | 16-TYPE HUFFMAN TREE | 64% |
| A | NON-COMPRESSION | 100% |
| A' | | |
| B' | 16-TYPE HUFFMAN TREE | 64% |
| C' | 16+1 (16-bit) type HUFFMAN TREE | 28% |
| D' | 16+1 (32-bit) type HUFFMAN TREE | 14% |
| E' | 16+1 (64-bit) type HUFFMAN TREE | 7% |

# FIG.50

5000

| SYMBOL STRING | CODE WORD |
|---|---|
| 0000 | 01 |
| 0010 | 100 |
| 0100 | 101 |
| 1000 | 110 |
| 0001 | 1110 |
| 0111 | 111100 |
| 1011 | 111101 |
| 1101 | 1111100 |
| 1110 | 1111101 |
| 0011 | 11111100 |
| 0101 | 111111010 |
| 0110 | 111111011 |
| 1001 | 111111100 |
| 1010 | 1111111101 |
| 1100 | 1111111110 |
| 1111 | 1111111111 |

# FIG.51

5100

| SYMBOL STRING | CODE WORD |
|---|---|
| 0000000000000000 | 00 |
| 0000 | 01 |
| 0010 | 100 |
| 0100 | 101 |
| 1000 | 110 |
| 0001 | 1110 |
| 0111 | 111100 |
| 1011 | 111101 |
| 1101 | 1111100 |
| 1110 | 1111101 |
| 0011 | 11111100 |
| 0101 | 111111010 |
| 0110 | 111111011 |
| 1001 | 111111100 |
| 1010 | 1111111101 |
| 1100 | 1111111110 |
| 1111 | 1111111111 |

# FIG.52

5200

| SYMBOL STRING | CODE WORD |
|---|---|
| 0000····0000 (32-bit) | 00 |
| 0000 | 01 |
| 0010 | 100 |
| 0100 | 101 |
| 1000 | 110 |
| 0001 | 1110 |
| 0111 | 111100 |
| 1011 | 111101 |
| 1101 | 1111100 |
| 1110 | 1111101 |
| 0011 | 11111100 |
| 0101 | 111111010 |
| 0110 | 111111011 |
| 1001 | 111111100 |
| 1010 | 1111111101 |
| 1100 | 1111111110 |
| 1111 | 1111111111 |

# FIG.53

5300

| SYMBOL STRING | CODE WORD |
|---|---|
| 0000····0000 (64-bit) | 00 |
| 0000 | 01 |
| 0010 | 100 |
| 0100 | 101 |
| 1000 | 110 |
| 0001 | 1110 |
| 0111 | 111100 |
| 1011 | 111101 |
| 1101 | 1111100 |
| 1110 | 1111101 |
| 0011 | 11111100 |
| 0101 | 111111010 |
| 0110 | 111111011 |
| 1001 | 111111100 |
| 1010 | 1111111101 |
| 1100 | 1111111110 |
| 1111 | 1111111111 |

# FIG.54

START

POINTER TO UNSELECTED APPEARANCE MAP EXISTS? — S5401

NO

YES

ACCESS STRUCTURE OF LEAF L# — S5402

ACQUIRE CHARACTER CODE — S5403

IDENTIFY APPEARANCE RATE AREA — S5404

NON-COMPRESSION AREA? — S5405

YES

NO

SELECT CORRESPONDING HUFFMAN TREE — S5406

EXTRACT BIT STRING IN APPEARANCE MAP OF ACQUIRED CHARACTER CODE — S5407

APPEARANCE RATE IS EQUAL TO OR GREATER THAN 50%? — S5408

NO

YES — S5409

INVERSION OF BIT STRING

HUFFMAN COMPRESSION — S5410

END

# FIG.55

400

| 5503 INPUT UNIT | → | 5504 EXTRACTING UNIT | → | 5505 SECOND DECOMPRES-SING UNIT |

403 FIRST COMPRESSING UNIT ← 5502 FIRST DECOMPRES-SING UNIT ← 5506 IDENTIFYING UNIT

5501 SPECIFYING UNIT

5507 UPDATING UNIT

# FIG.56

FILE DECOMPRESSION EXAMPLE (G1)

M

(G11) OPEN SPECIFICATION

| COMPRESSION CODE OF CHARACTER DATA | n | ... | i | ... | ③ | 2 | 1 |
|---|---|---|---|---|---|---|---|

5600

D

| DELETION MAP | 1 | ... | 1 | ... | 1 | 0 | 1 |
|---|---|---|---|---|---|---|---|

$2^N$-BRANCH NODELESS HUFFMAN TREE

H

COMPRESSION FILE GROUP fs

(G12) EXTRACT COMPRESSION FILE

0101001 00···

f3

COMPRESSED STATE

f3

F3

人形芝居を見て···

(G13) DECOMPRESSION

# FIG.57

FILE DECOMPRESSION EXAMPLE (G2)

SEARCH CHARACTER STRING
"人形"

"人"　"形"

(G21)

BINARY SEARCH

SPECIFIC SINGLE
CHARACTER
STRUCTURE ⌇1400

$2^N$-BRANCH NODELESS
HUFFMAN TREE

H

----

形　　人

(G22)

| 人 | ...1011 |
| 形 | ...1101 |
| 人形 | ...0001 |

(G23)

| 人 | 0...0.. | 1 | 11 |
| 形 | 0...0.. | 1 | 10 |
| 人形 | 0...0.. | 1 | 00 |
| DELETION MAP | 1...1.. | 1 | 01 |
| AND RESULT | 0...0.. | 1 | 00 |

COMPRESSION
FILE GROUP fs

$2^N$-BRANCH NODELESS
HUFFMAN TREE

H

----

(G24)
NAR-
ROWING
DOWN

FILE NUMBER: 3

COMPRESSED
STATE

0101001
00···

~f3

AFTER
DECOMPRESSION

F3

人形芝居を見て···

(G25) DECOMPRESSION WITH COLLATION AND
REPLACEMENT WITH COMPRESSED STATE
MAINTAINED

EP 2 706 466 A1

82

FIG.58

(A)

BITS ADDRESS
abi=abi+leg                    abi=0

BYTE OFFSET
byos=QUOTIENT OF abi/8         byos=0

BITS OFFSET
bios=REMAINDER of abi/8        bios=0

REGISTER SHIFT NUMBER
rs=32-13-bios                  rs=20

| 0 | 1 | 2 | 3 | 4 | 5 | 6 | 7 | 8 | ··· |

MEMORY

32-BIT REGISTER

| 1100 | 0100 | 1100 | 0100 | 0100 | 1010 | 0100 | 0000 |
| 1111 | 1111 | 1111 | 0000 | 0000 | 0000 | 0000 | 0000 |

MASK PATTERN

32-BIT REGISTER
(AND RESULT)

| 1100 | 0100 | 1100 | 0000 | 0000 | 0000 | 0000 | 0000 |

32-BIT REGISTER
(SHIFTED)

|  |  |  |  |  | 1100 | 0100 | 1100 |

DECOMPRESSION BUFFER

| BA4E |

| POINTER TO LEAF |
| 1100  0100  1100 |

⇒

| NUMBER OF LEAF | 97 |
| CHARACTER CODE | BA4E |

⇒

| leg |
| 10 BITS |

COMPRESSION CODE

EP 2 706 466 A1

(B)

# FIG.59

BITS ADDRESS
abi=abi+leg                abi=10

BYTE OFFSET
byos=QUOTIENT OF abi/8     byos=1

BITS OFFSET
bios=REMAINDER of abi/8    bios=2

REGISTER SHIFT NUMBER
rs=32-13-bios              rs=18

SHIFT 1 BYTE

| 0 | 1 | 2 | 3 | 4 | 5 | 6 | 7 | 8 | ... |

MEMORY

32-BIT REGISTER

| 1100 | 0100 | 0100 | 1010 | 0100 | 0000 | 1010 | 0011 |
| 0000 | 1111 | 1111 | 1111 | 0000 | 0000 | 0000 | 0000 |

MASK PATTERN

32-BIT REGISTER (AND RESULT)

| 0000 | 0100 | 1100 | 1010 | 0000 | 0000 | 0000 | 0000 |

32-BIT REGISTER (SHIFTED)

| 0000 | 0100 | 0100 | 10 |

POINTER TO LEAF
0100 0100 10

⇒

NUMBER OF LEAF      105
CHARACTER CODE      625F

⇒

leg
8 BITS

COMPRESSION CODE

DECOMPRESSION BUFFER

| BA4E | 625F |

## FIG.60

START

SEARCH CHARACTER STRING IS INPUT? ～S6001

NO

YES

FILE NARROWING-DOWN PROCESS ～S6002 (FIG.61, 62)

DECOMPRESSION PROCESS ～S6003 (FIG.63, 64)

END

## FIG.61

FILE NARROWING-DOWN PROCESS ～S6002

SET SEARCH CHARACTER STRING AS OBJECT CHARACTER STRING ～S6101

S6102 (FIG.24)

LONGEST MATCH SEARCH PROCESS

FOUND? ～S6103

NO

YES

ACQUIRE APPEARANCE MAP OF BASIC WORD THAT IS OBJECT CHARACTER STRING S6104

F

E

SUBSEQUENT CHARACTER STRING EXISTS? S6105

NO

YES

SET SUBSEQUENT CHARACTER STRING AS OBJECT CHARACTER STRING S6106

NARROW DOWN OBJECT FILES THROUGH AND OPERATION OF ACQUIRED APPEARANCE MAP GROUP ～S6107

TO S6003

# FIG.62

E

| SET LEADING CHARACTER OF OBJECT CHARACTER STRING AS OBJECT CHARACTER | ∽S6201 |

| PERFORM BINARY SEARCH OF SPECIFIC SINGLE CHARACTER STRUCTURE FOR OBJECT CHARACTER | ∽S6202 |

S6203

FOUND? —— NO

YES  S6204

| ACQUIRE APPEARANCE MAP OF OBJECT CHARACTER |

| DIVIDE OBJECT CHARACTER | ∽S6205 |

| ACQUIRE APPEARANCE MAP OF UPPER DIVIDED CHARACTER CODE | ∽S6206 |

| ACQUIRE APPEARANCE MAP OF LOWER DIVIDED CHARACTER CODE | ∽S6207 |

| COLLATION FLAGS ON | ∽S6208 |

| BI-GRAM CHARACTER STRING IDENTIFICATION PROCESS | ∽S6209 |

S6210

IDENTIFIED? —— NO

YES  S6211

| ACQUIRE APPEARANCE MAP OF BI-GRAM CHARACTER STRING |

F

# FIG.63

| | |
|---|---|
| H | DECOMPRESSION PROCESS — S6003 |

BIT ADDRESS abi=0 — S6301

CALCULATE BYTE OFFSET byos (QUOTIENT OF abi/8) — S6302

CALCULATE BIT OFFSET bios (REMAINDER OF abi/8) — S6303

SET COMPRESSION CODE STRING FROM POSITION OF BYTE OFFSET byos — S6304

SHIFT MASK PATTERN BY BIT OFFSET bios — S6305

PERFORM AND OPERATION WITH COMPRESSION CODE STRING — S6306

CALCULATE REGISTER SHIFT NUMBER rs — S6307

SHIFT REGISTER BY REGISTER SHIFT NUMBER rs — S6308

G

# FIG.64

G

EXTRACT ENDING N BITS AS OBJECT BIT STRING FROM REGISTER AFTER SHIFT ～S6401

IDENTIFY POINTER TO LEAF FROM ROOT STRUCTURE OF NODELESS HUFFMAN TREE ～S6402

ACCESS STRUCTURE OF LEAF TO BE POINTED ～S6403

S6404
COLLATION FLAGS ON? — NO

YES S6405

WRITE REPLACEMENT CHARACTER INTO DECOMPRESSION BUFFER

S6406
WRITE DECOMPRESSION CHARACTER INTO DECOMPRESSION BUFFER

EXTRACT COMPRESSION CODE LENGTH leg ～S6407

abi=abi+leg ～S6408

S6409
COMPRESSION CODE STRING EXISTS? — YES

NO

END

H

# FIG.65

COMPRESSION FILE GROUP

(G1) or (G2) DECOM-PRESSION

(H) FILE UPDATE

人形芝居を見た。

紙芝居を見た。

(J) MAP UPDATE

(I) COMPRESSION AND SAVE

2^N-BRANCH NODELESS HUFFMAN TREE

M

5600

| COMPRESSION CODE OF CHARACTER DATA | FILE NUMBER | | | | | | | |
|---|---|---|---|---|---|---|---|---|
| | n+1 | n | ... | i | ... | 3 | 2 | 1 |
| : | | | | : | | | | |
| 人 | 0 | ...0010111 | | | | | | |
| 形 | 0 | | | ...1001101 | | | | |
| 紙 | 1 | ...10011 | | | | | | |
| : | | | | : | | | | |
| 人形 | 0 | | | ...00001 | | | | |
| : | | | | : | | | | |
| DELETION MAP | 1 | 1 | ... | 1 | ... | 0 | 0 | 1 |

D

ADD

CHANGE

H

(K) APPLICATION OF POINTER

EP 2 706 466 A1

FIG.66

START

S6601
UPDATE REQUEST? — NO

↓YES

S6602
IDENTIFY FILE NUMBER OF OBJECT FILE

S6603
SET BIT OF IDENTIFIED FILE NUMBER TO OFF IN DELETION MAP

S6604
UPDATE FILE NUMBER OF OBJET FILE

S6605
COMPRESS AND STORE ADDITIONAL FILE

S6606
CORRELATE POINTER TO COMPRESSION FILE OF ADDITIONAL FILE IN MANAGEMENT AREA

S6607
TOTAL NUMBER OF FILES IS MULTIPLE OF n? — YES

↓NO

S6609
MAP UPDATE PROCESS OF ADDITIONAL FILE

S6608
COMPRESS COMPRESSION CODE MAP

END

90

# FIG.67

```
┌─────────────────────────────┐
│   MAP UPDATE PROCESS OF      │ ～S6609
│       ADDITIONAL FILE        │
└─────────────────────────────┘
              │
              ▼
┌─────────────────────────────┐ ⌐S6701
│   SET BITS OF FILE NUMBER OF │
│        ADDITIONAL FILE       │
└─────────────────────────────┘
              │
              ▼
┌─────────────────────────────┐ ⌐S6702
│   OBJECT CHARACTER=LEADING   │
│          CHARACTER           │
└─────────────────────────────┘
              │
              ▼
┌─────────────────────────────┐ ⌐S6703 (FIG.24)
│    LONGEST MATCH SEARCH      │
│          PROCESS             │
└─────────────────────────────┘
              │
              ▼
         ⌐S6704
      ◇ LONGEST        ◇
NO  ◇ MATCHING BASIC WORD ◇
◄───◇     EXISTS?       ◇
      ◇               ◇
              │ YES
              ▼         ⌐S6705
┌─────────────────────────────┐
│    SPECIFY APPEARANCE MAP    │
└─────────────────────────────┘
              │
              ▼         ⌐S6706
┌─────────────────────────────┐
│  SET BIT OF LONGEST MATCHING │
│      BASIC WORD TO ON        │
└─────────────────────────────┘
              │
              ▼
             ( I )
```

# FIG.68

I

S6801

SPECIFIC
SINGLE CHARACTER
?

NO →

YES

↓ S6802

SPECIFY APPEARANCE MAP

↓ S6803

SET BIT OF OBJECT
CHARACTER TO ON

S6804

DIVIDE INTO UPPER DIVIDED
CHARACTER CODE AND
LOWER DIVIDED CHARACTER
CODE

↓ S6805

SPECIFY APPEARANCE MAP
OF UPPER DIVIDED
CHARACTER CODE

↓ S6806

SET BIT OF UPPER DIVIDED
CHARACTER CODE TO ON

↓ S6807

SPECIFY APPEARANCE MAP
OF LOWER DIVIDED
CHARACTER CODE

↓ S6808

SET BIT OF LOWER DIVIDED
CHARACTER CODE TO ON

S6809 (FIG.30)

BI-GRAM CHARACTER STRING IDENTIFICATION PROCESS

↓ S6810

CONCATENATE COMPRESSION CODES

↓ S6811

SPECIFY APPEARANCE MAP

↓ S6812

SET BIT OF BI-GRAM CHARACTER STRING TO ON

↓

END

<div align="center">

**INTERNATIONAL SEARCH REPORT**

</div>

| | International application No. |
|---|---|
| | PCT/JP2011/060559 |

A.  CLASSIFICATION OF SUBJECT MATTER
*G06F17/30*(2006.01)i, *G06F12/00*(2006.01)i

According to International Patent Classification (IPC) or to both national classification and IPC

B.  FIELDS SEARCHED

Minimum documentation searched (classification system followed by classification symbols)
G06F17/30, G06F12/00

Documentation searched other than minimum documentation to the extent that such documents are included in the fields searched
| Jitsuyo Shinan Koho | 1922-1996 | Jitsuyo Shinan Toroku Koho | 1996-2011 |
| Kokai Jitsuyo Shinan Koho | 1971-2011 | Toroku Jitsuyo Shinan Koho | 1994-2011 |

Electronic data base consulted during the international search (name of data base and, where practicable, search terms used)

C.  DOCUMENTS CONSIDERED TO BE RELEVANT

| Category* | Citation of document, with indication, where appropriate, of the relevant passages | Relevant to claim No. |
|---|---|---|
| X | JP 2008-102765 A  (Fujitsu Ltd.),<br>01 May 2008 (01.05.2008),<br>paragraphs [0004], [0027] to [0040]; fig. 1, 2<br>& US 2008/0097993 A1 | 1-11 |
| A | JP 2003-122794 A  (Ricoh Co., Ltd.),<br>25 April 2003 (25.04.2003),<br>paragraphs [0056] to [0057], [0061] to [0066]; fig. 1, 4 to 6<br>& US 2004/0006555 A1     & US 2007/0118543 A1<br>& US 2007/0136258 A1     & CN 1477564 A | 1-11 |

☐  Further documents are listed in the continuation of Box C.          ☐  See patent family annex.

| | |
|---|---|
| *     Special categories of cited documents:<br>"A"   document defining the general state of the art which is not considered to be of particular relevance<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search | Date of mailing of the international search report |
|---|---|
| 27 May, 2011 (27.05.11) | 07 June, 2011 (07.06.11) |

| Name and mailing address of the ISA/ | Authorized officer |
|---|---|
| Japanese Patent Office | |
| Facsimile No. | Telephone No. |

Form PCT/ISA/210 (second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2006123448 A